(19) Europäisches Patentamt / European Patent Office / Office européen des brevets

(11) EP 3 859 831 A1

(12) EUROPEAN PATENT APPLICATION
published in accordance with Art. 153(4) EPC

(43) Date of publication:
**04.08.2021 Bulletin 2021/31**

(21) Application number: **19864573.1**

(22) Date of filing: **24.09.2019**

(51) Int Cl.:
***H01M 4/139** (2010.01)* ***H01M 4/13** (2010.01)*
***H01M 4/62** (2006.01)* ***H01M 4/66** (2006.01)*
***H01M 10/052** (2010.01)* ***H01M 10/0562** (2010.01)*
***H01M 10/058** (2010.01)*

(86) International application number:
**PCT/JP2019/037252**

(87) International publication number:
**WO 2020/067003 (02.04.2020 Gazette 2020/14)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **28.09.2018 JP 2018184890**

(71) Applicant: **FUJIFILM Corporation**
**Tokyo 106-8620 (JP)**

(72) Inventors:
- **ISOJIMA, Hiroshi**
  **Ashigarakami-gun, Kanagawa 258-8577 (JP)**
- **OZAWA, Shin**
  **Ashigarakami-gun, Kanagawa 258-8577 (JP)**

(74) Representative: **Hoffmann Eitle**
**Patent- und Rechtsanwälte PartmbB**
**Arabellastraße 30**
**81925 München (DE)**

# (54) COMPOSITION FOR ELECTRODES, ELECTRODE SHEET FOR ALL-SOLID-STATE SECONDARY BATTERIES, ALL-SOLID-STATE SECONDARY BATTERY, AND METHOD FOR PRODUCING ELECTRODE SHEET FOR ALL-SOLID-STATE SECONDARY BATTERIES OR ALL-SOLID-STATE SECONDARY BATTERY

(57) Provided is an electrode composition including: an active material; an inorganic solid electrolyte having an average particle size of 2 μm or less; and a particle-shaped polymer, in which in a case where an average particle size of the particle-shaped polymer is represented by d nm and a content of the particle-shaped polymer with respect to all the solid components of the electrode composition is represented by x mass%, the average particle size d and the content x satisfy specific relationships. Provided are also an electrode sheet for an all-solid state secondary battery and an all-solid state secondary battery that are formed of the electrode composition, and respective methods of manufacturing an electrode sheet for an all-solid state secondary battery and manufacturing an all-solid state secondary battery.

FIG. 1

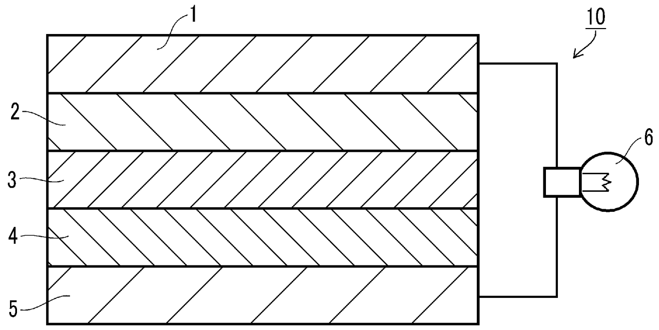


EP 3 859 831 A1

## Description

## BACKGROUND OF THE INVENTION

### 1. Field of the Invention

The present invention relates to an electrode composition, an electrode sheet for an all-solid state secondary battery, an all-solid state secondary battery, and a method of manufacturing an electrode sheet for an all-solid state secondary battery or manufacturing an all-solid state secondary battery.

### 2. Description of the Related Art

A lithium ion secondary battery is a storage battery including a negative electrode, a positive electrode, and an electrolyte sandwiched between the negative electrode and the positive electrode and enables charging and discharging by the reciprocal migration of lithium ions between both electrodes. In the related art, in lithium ion secondary batteries, an organic electrolytic solution has been used as the electrolyte. However, in organic electrolytic solutions, liquid leakage is likely to occur, there is a concern that a short-circuit and ignition may be caused in batteries due to overcharging or overdischarging, and there is a demand for additional improvement in safety and reliability.

Under these circumstances, all-solid state secondary batteries in which an inorganic solid electrolyte is used instead of the organic electrolytic solution are attracting attention. In an all-solid state secondary battery, a negative electrode, an electrolyte, and a positive electrode are all solid, and safety or reliability batteries including an organic electrolytic solution can be significantly improved.

In the all-solid state secondary battery, as a material for forming a constituent layer such as a negative electrode active material layer, a solid electrolyte layer, or a positive electrode active material layer, a material including an inorganic solid electrolyte, an active material, and a polymer is disclosed.

For example, JP598828B describes a slurry for an all-solid state secondary battery including: a binder consisting of a particle-shaped polymer having an average particle size of 30 to 300 nm and a core-shell structure in which the shell portion includes a (meth)acrylic acid ester monomer unit having an ethylene oxide skeleton; an inorganic solid electrolyte; and a non-polar solvent having a boiling point of 100°C to 220°C. This way, recently, not only an investigation on a material for improving the performance of an all-solid state secondary battery but also an investigation for improving productivity for practical application have been performed.

## SUMMARY OF THE INVENTION

In order to improve the performance and productivity of the all-solid state secondary battery, it is desirable to improve the dispersion stability of an electrode composition. However, according to an additional investigation of the present inventor, with the slurry for an all-solid state secondary battery described in JP598828B, there may be a case where sufficient dispersion stability cannot be obtained in an aspect (electrode composition) including an active material. In addition, it was found that, in an all-solid state secondary battery in which this slurry is used as a constituent material of an electrode active material layer, even in a case where sufficient binding properties, for example, between solid particles in the electrode active material layer are obtained, the resistance may increase.

An object of the present invention is to provide an electrode composition having excellent dispersion stability. By using this electrode composition as a material for forming an electrode active material layer, an all-solid state secondary battery having excellent binding properties, for example, between solid particles in the electrode active material layer and having low resistance can be realized. In addition, another object of the present invention is to provide an electrode sheet for an all-solid state secondary battery and an all-solid state secondary battery that include the electrode active material layer formed of the electrode composition. In addition, still another object of the present invention is to provide respective methods of manufacturing the electrode sheet for an all-solid state secondary battery and manufacturing the all-solid state secondary battery.

The present inventors repeatedly conducted a thorough investigation and found that, in an electrode composition including a combination of an active material, an inorganic solid electrolyte having an average particle size of 2 μm or less, and a particle-shaped polymer in which the content and the average particle size are in specific ranges and satisfy specific relationships, the dispersion stability is excellent, that the resistance of an all-solid state secondary battery obtained by using the above-described composition as a constituent material of an electrode active material layer can be suppressed, and that the binding properties, for example, between solid particles in the electrode active material layer can be improved. The present invention has been completed based on the above findings as a result of repeated investigation.

That is, the above-described objects have been achieved by the following means.

<1> An electrode composition comprising:

an active material;
an inorganic solid electrolyte having an average particle size of 2 μm or less; and
a particle-shaped polymer,
in which in a case where an average particle size of the particle-shaped polymer is represented by d nm and a content of the particle-shaped polymer with respect to all the solid components of the electrode composition is represented by x mass%, the average particle size d and the content x satisfy Expressions (i) to (iv),

$$d \leq 30x + 140 \quad \text{Expression (i)},$$

$$d \geq 30x - 10 \quad \text{Expression (ii)},$$

$$10 \leq d \quad \text{Expression (iii)},$$

and

$$0 < x \leq 2 \quad \text{Expression (iv)}.$$

<2> The electrode composition according to <1>,
in which the particle-shaped polymer is a particle acrylic polymer or a particle polyurethane.
<3> The electrode composition according to <1> or <2>,
in which the particle-shaped polymer includes at least one group selected from the following adsorbing group (X),
[Adsorbing Group (X)]
a hydroxy group, a sulfanyl group, a carboxy group, a phosphate group, an amino group, a cyano group, an isocyanate group, an acid anhydride group, a (meth)acryloyloxy group, an epoxy group, an oxetanyl group, an alkoxy group, and a group including a ring structure of two or more rings.
<4> The electrode composition according to any one of <1> to <3>,
in which the particle-shaped polymer includes a component derived from a macromonomer that has a polymerizable double bond and a linear hydrocarbon structure having 6 or more carbon atoms.
<5> The electrode composition according to any one of <1> to <4>,
in which a content of a component having a group selected from the adsorbing group (X) with respect to all the components in the particle-shaped polymer is 10% to 80 mass%.
<6> The electrode composition according to any one of <1> to <5>,
in which an adsorption rate of the particle-shaped polymer to the active material is 20% to 70%.
<7> An electrode sheet for an all-solid state secondary battery comprising:
an electrode active material layer that is formed of the electrode composition according to any one of <1> to <6>.
<8> The electrode sheet for an all-solid state secondary battery according to <7>, further comprising:

a current collector; and
a carbon coating layer that is provided between the current collector and the electrode active material layer.

<9> An all-solid state secondary battery comprising:

a positive electrode active material layer;
a negative electrode active material layer; and
an inorganic solid electrolyte layer that is interposed between the positive electrode active material layer and the negative electrode active material layer,
in which at least one of the positive electrode active material layer or the negative electrode active material layer is formed of the electrode composition according to any one of <1> to <6>.

<10> A method of manufacturing an electrode sheet for an all-solid state secondary battery, the method comprising:
applying the electrode composition according to any one of <1> to <6>.
<11> A method of manufacturing an all-solid state secondary battery, the method comprising:

obtaining an electrode sheet for an all-solid state secondary battery with the method according to <10> and manufacturing an all-solid state secondary battery with the electrode sheet for an all-solid state secondary battery.

The electrode composition according to an aspect of the present invention exhibits excellent dispersion stability. By using this electrode composition as a material for forming an electrode active material layer, an all-solid state secondary battery having excellent binding properties, for example, between solid particles in the electrode active material layer and having low resistance can be realized. In addition, in the electrode sheet for an all-solid state secondary battery and the all-solid state secondary battery according to an aspect of the present invention, the binding properties, for example, between solid particles in the electrode active material layer are excellent, and the resistance is also low. Further, in the method of manufacturing a sheet for an all-solid state secondary battery and the method of manufacturing an all-solid state secondary battery according to an aspect of the present invention, an electrode sheet for an all-solid state secondary battery and an all-solid state secondary battery having excellent binding properties, for example, between solid particles in the electrode active material layer and having low resistance can be obtained.

## BRIEF DESCRIPTION OF THE DRAWINGS

Fig. 1 is a vertical cross-sectional view schematically showing an all-solid state secondary battery according to a preferred embodiment of the present invention.
Fig. 2 is a diagram showing regions represented by Expressions (1) to (4).

## DESCRIPTION OF THE PREFERRED EMBODIMENTS

In the present specification, numerical ranges represented by "to" include numerical values before and after "to" as lower limit values and upper limit values.
In the present specification, the expression of a compound (for example, in a case where a compound is represented by an expression with "compound" added to the end) refers to not only the compound itself but also a salt or an ion thereof. In addition, this expression also refers to a derivative obtained by modifying a part of the compound, for example, by introducing a substituent into the compound within a range where desired effects are exhibited.
A substituent, a linking group, or the like (hereinafter, referred to as "substituent or the like") is not specified in the present specification regarding whether to be substituted or unsubstituted may have an appropriate substituent. Accordingly, even in a case where a YYY group is simply described in the present specification, this YYY group includes not only an aspect having a substituent but also an aspect not having a substituent. The same shall be applied to a compound which is not specified in the present specification regarding whether to be substituted or unsubstituted. Preferable examples of the substituent include a substituent Z described below.
In the present specification, in a case where a plurality of substituents or the like represented by a specific reference numeral are present or a plurality of substituents or the like are simultaneously or alternatively defined, the respective substituents or the like may be the same as or different from each other. In addition, unless specified otherwise, in a case where a plurality of substituents or the like are adjacent to each other, the substituents may be linked or fused to each other to form a ring.

[Electrode composition]

An electrode composition according to an embodiment of the present invention comprises: an active material; an inorganic solid electrolyte having an average particle size of 2 μm or less; and a particle-shaped polymer. In the particle-shaped polymer of the electrode composition, in a case where an average particle size of the particle-shaped polymer is represented by d nm and a content of the particle-shaped polymer with respect to all the solid components of the electrode composition is represented by x mass%, d and x satisfy Expressions (i) to (iv).

$$d \leq 30x + 140 \quad \text{Expression (i)}$$

$$d \geq 30x - 10 \quad \text{Expression (ii)}$$

$$10 \leq d \quad \text{Expression (iii)}$$

$$0 < x \leq 2 \qquad \text{Expression (iv)}$$

It is preferable that the electrode composition according to the embodiment of the present invention includes a dispersion medium. In this case, an aspect where the inorganic solid electrolyte, the active material, the particle-shaped polymer, and the dispersion medium are mixed is not particularly limited, and is preferably a slurry in which the inorganic solid electrolyte, the active material, and the particle-shaped polymer are dispersed in the dispersion medium.

The electrode composition according to the embodiment of the present invention can be preferably used as a material for forming an active material layer of an electrode sheet for an all-solid state secondary battery or an all-solid state secondary battery.

The moisture content (also referred to as "water content") in the electrode composition according to the embodiment of the present invention is not particularly limited and is preferably 500 ppm or lower, more preferably 200 ppm or lower, still more preferably 100 ppm or lower, and still more preferably 50 ppm or lower. In a case where the moisture content of the electrode composition is low, deterioration of the sulfide-based inorganic solid electrolyte can be suppressed. The moisture content refers to the amount of water (the mass ratio thereof to the electrode composition) in the electrode composition and specifically is a value measured by Karl Fischer titration after filtering the solid electrolyte composition the through a membrane filter having a pore size of 0.02 μm.

Hereinafter, the components that are included in the electrode composition according to the embodiment of the present invention and components that may be included therein will be described.

<Inorganic Solid Electrolyte>

The electrode composition according to the embodiment of the present invention includes an inorganic solid electrolyte having an average particle size of 2 μm or less (hereinafter, simply referred to as "inorganic solid electrolyte").

In the present invention, the inorganic solid electrolyte is an inorganic solid electrolyte, and the solid electrolyte refers to a solid-form electrolyte capable of migrating ions therein. The inorganic solid electrolyte is clearly distinguished from organic solid electrolytes (polymer electrolytes such as polyethylene oxide (PEO) and organic electrolyte salts such as lithium bis(trifluoromethanesulfonyl)imide (LiTFSI)) since the inorganic solid electrolyte does not include any organic matter as a principal ion conductive material. In addition, the inorganic solid electrolyte is solid in a steady state and thus, typically, is not dissociated or liberated into cations and anions. Due to this fact, the inorganic solid electrolyte is also clearly distinguished from inorganic electrolyte salts of which cations and anions are dissociated or liberated in electrolytic solutions or polymers ($LiPF_6$, $LiBF_4$, lithium bis(fluorosulfonyl)imide (LiFSI), LiCl, and the like). The inorganic solid electrolyte is not particularly limited as long as it has ion conductivity of a metal belonging to Group 1 or Group 2 in the periodic table and generally does not have electron conductivity. In a case where an all-solid state secondary battery according to the embodiment of the present invention is a lithium ion battery, the inorganic solid electrolyte preferably has ion conductivity of lithium ions.

The inorganic solid electrolyte can be appropriately selected from solid electrolyte materials that are typically used for an all-solid state secondary battery. Representative examples of the inorganic solid electrolyte include (i) a sulfide-based inorganic solid electrolyte and (ii) an oxide-based inorganic solid electrolyte. In the present invention, from the viewpoint that a more favorable interface can be formed between the active material and the inorganic solid electrolyte, a sulfide-based inorganic solid electrolyte is preferably used.

(i) Sulfide-Based Inorganic Solid Electrolyte

The sulfide-based inorganic solid electrolyte is preferably a compound that contains a sulfur atom, has ion conductivity of a metal belonging to Group 1 or Group 2 in the periodic table, and has electron-insulating properties. The sulfide-based inorganic solid electrolyte is preferably an inorganic solid electrolyte that contains at least Li, S, and P as elements and has lithium ion conductivity. However, the sulfide-based inorganic solid electrolyte may include elements other than Li, S, and P depending on the purposes or cases.

Examples of the sulfide-based inorganic solid electrolyte include a lithium ion-conductive inorganic solid electrolyte satisfying a composition represented by Formula (1).

$$L_{a1}M_{b1}P_{c1}S_{d1}A_{e1} \; \ldots \qquad \text{Formula (1)}$$

In the formula, L represents an element selected from Li, Na, or K and is preferably Li. M represents an element selected from B, Zn, Sn, Si, Cu, Ga, Sb, Al, or Ge. A represents an element selected from I, Br, Cl, or F, and a1 to e1 represent the compositional ratios between the respective elements, and a1:b1:c1:d1:e1 satisfies 1 to 12:0 to 5:1:2 to

12:0 to 10. a1 is preferably 1 to 9 and more preferably 1.5 to 7.5. b1 is preferably 0 to 3 and more preferably 0 to 1. d1 is preferably 2.5 to 10 and more preferably 3.0 to 8.5. e1 is preferably 0 to 5 and more preferably 0 to 3.

The compositional ratios among the respective elements can be controlled by adjusting the mixing amounts of raw material compounds to manufacture the sulfide-based inorganic solid electrolyte as described below.

The sulfide-based inorganic solid electrolyte may be non-crystalline (glass) or crystallized (made into glass ceramic) or may be only partially crystallized. For example, it is possible to use Li-P-S-based glass containing Li, P, and S or Li-P-S-based glass ceramic containing Li, P, and S.

The sulfide-based inorganic solid electrolytes can be manufactured by a reaction of at least two raw materials of, for example, lithium sulfide ($Li_2S$), phosphorus sulfide (for example, diphosphorus pentasulfide ($P_2S_5$)), a phosphorus single body, a sulfur single body, sodium sulfide, hydrogen sulfide, lithium halides (for example, LiI, LiBr, and LiCl), or sulfides of an element represented by M (for example, $SiS_2$, SnS, and $GeS_2$).

The ratio between $Li_2S$ and $P_2S_5$ in Li-P-S-based glass and Li-P-S-based glass ceramic is preferably 60:40 to 90:10 and more preferably 68:32 to 78:22 in terms of the molar ratio between $Li_2S$:$P_2S_5$. In a case where the ratio between $Li_2S$ and $P_2S_5$ is set in the above-described range, it is possible to increase the lithium ion conductivity. Specifically, the lithium ion conductivity can be preferably set to $1 \times 10^{-4}$ S/cm or more and more preferably set to $1 \times 10^{-3}$ S/cm or more. The upper limit is not particularly limited, but practically $1 \times 10^{-1}$ S/cm or less.

As specific examples of the sulfide-based inorganic solid electrolytes, combination examples of raw materials will be described below. Examples thereof include $Li_2S$-$P_2S_5$, $Li_2S$-$P_2S_5$-LiCl, $Li_2S$-$P_2S_5$-$H_2S$, $Li_2S$-$P_2S_5$-$H_2S$-LiCl, $Li_2S$-LiI-$P_2S_5$, $Li_2S$-LiI-$Li_2O$-$P_2S_5$, $Li_2S$-LiBr-$P_2S_5$, $Li_2S$-$Li_2O$-$P_2S_5$, $Li_2S$-$Li_3PO_4$-$P_2S_5$, $Li_2S$-$P_2S_5$-$P_2O_5$, $Li_2S$-$P_2S_5$-$SiS_2$, $Li_2S$-$P_2S_5$-$SiS_2$-LiCl, $Li_2S$-$P_2S_5$-SnS, $Li_2S$-$P_2S_5$-$Al_2S_3$, $Li_2S$-$GeS_2$, $Li_2S$-$GeS_2$-ZnS, $Li_2S$-$Ga_2S_3$, $Li_2S$-$GeS_2$-$Ga_2S_3$, $Li_2S$-$GeS_2$-$P_2S_5$, $Li_2S$-$GeS_2$-$Sb_2S_5$, $Li_2S$-$GeS_2$-$Al_2S_3$, $Li_2S$-$SiS_2$, $Li_2S$-$Al_2S_3$, $Li_2S$-$SiS_2$-$Al_2S_3$, $Li_2S$-$SiS_2$-$P_2S_5$, $Li_2S$-$SiS_2$-$P_2S_5$-LiI, $Li_2S$-$SiS_2$-LiI, $Li_2S$-$SiS_2$-$Li_4SiO_4$, $Li_2S$-$SiS_2$-$Li_3PO_4$, and $Li_{10}GeP_2S_{12}$. Mixing ratios of the respective raw materials do not matter. Examples of a method for synthesizing the sulfide-based inorganic solid electrolyte material using the above-described raw material compositions include an amorphization method. Examples of the amorphization method include a mechanical milling method, a solution method, and a melting quenching method. This is because treatments at a normal temperature become possible, and it is possible to simplify manufacturing steps.

(ii) Oxide-Based Inorganic Solid Electrolyte

The oxide-based inorganic solid electrolyte is preferably a compound that contains an oxygen atom, has ion conductivity of a metal belonging to Group 1 or Group 2 in the periodic table, and has electron-insulating properties.

The ion conductivity of the oxide-based inorganic solid electrolyte is preferably $1 \times 10^{-6}$ S/cm or more, more preferably $5 \times 10^{-6}$ S/cm or more, and particularly preferably $1 \times 10^{-5}$ S/cm or more. The upper limit is not particularly limited but is practically $1 \times 10^{-1}$ S/cm or less.

Specific examples of the compound include: $Li_{xa}La_{ya}TiO_3$ (xa satisfies $0.3 \leq xa \leq 0.7$ and ya satisfies $0.3 \leq ya \leq 0.7$) (LLT); $Li_{xb}La_{yb}Zr_{zb}M^{bb}_{mb}O_{nb}$ ($M^{bb}$ represents at least one element selected from Al, Mg, Ca, Sr, V, Nb, Ta, Ti, Ge, In, or Sn, xb satisfies $5 \leq xb \leq 10$, yb satisfies $1 \leq yb \leq 4$, zb satisfies $1 \leq zb \leq 4$, mb satisfies $0 \leq mb \leq 2$, and nb satisfies $5 \leq nb \leq 20$.); $Li_{xc}B_{yc}M^{cc}_{zc}O_{nc}$ ($M^{cc}$ represents at least one element selected from C, S, Al, Si, Ga, Ge, In, or Sn, xc satisfies $0 < xc \leq 5$, yc satisfies $0 < yc \leq 1$, zc satisfies $0 < zc \leq 1$, and nc satisfies $0 < nc \leq 6$); $Li_{xd}(Al,Ga)_{yd}(Ti,Ge)_{zd}Si_{ad}P_{md}O_{nd}$ (xd satisfies $1 \leq xd \leq 3$, yd satisfies $0 \leq yd \leq 1$, zd satisfies $0 \leq zd \leq 2$, ad satisfies $0 \leq ad \leq 1$, md satisfies $1 \leq md \leq 7$, and nd satisfies $3 \leq nd \leq 13$); $Li_{(3-2xe)}M^{ee}_{xe}D^{ee}O$ (xe represents a number of 0 to 0.1, $M^{ee}$ represents a divalent metal atom, and $D^{ee}$ represents a halogen atom or a combination of two or more halogen atoms); $Li_{xf}Si_{yf}O_{zf}$ (xf satisfies $1 \leq xf \leq 5$, yf satisfies $0 < yf \leq 3$, and zf satisfies $1 \leq zf \leq 10$); $Li_{xg}S_{yg}O_{zg}$ (xg satisfies $1 \leq xg \leq 3$, yg satisfies $0 < yg \leq 2$, and zg satisfies $1 \leq zg \leq 10$); $Li_3BO_3$; $Li_3BO_3$-$Li_2SO_4$; $Li_2O$-$B_2O_3$-$P_2O_5$; $Li_2O$-$SiO_2$; $Li_6BaLa_2Ta_2O_{12}$; $Li_3PO_{(4-3/2w)}N_w$ (w satisfies w < 1); $Li_{3.5}Zn_{0.25}GeO_4$ having a lithium super ionic conductor (LISICON)-type crystal structure; $La_{0.55}Li_{0.35}TiO_3$ having a perovskite-type crystal structure; $LiTi_2P_3O_{12}$ having a natrium super ionic conductor (NASICON)-type crystal structure; $Li_{1+xh+yh}(Al,Ga)_{xh}(Ti,Ge)_{2-xh}Si_{yh}P_{3-yh}O_{12}$ (xh represents $0 \leq xh \leq 1$, and yh represents $0 \leq yh \leq 1$); and $Li_7La_3Zr_2O_{12}$ (LLZ) having a garnet-type crystal structure.

In addition, phosphorus compounds containing Li, P, and O are also desirable. Examples of the phosphorus compound include: lithium phosphate ($Li_3PO_4$); LiPON in which some of oxygen atoms in lithium phosphate are substituted with nitrogen atoms; and $LiPOD^1$ ($D^1$ preferably represents one or more elements selected from Ti, V, Cr, Mn, Fe, Co, Ni, Cu, Zr, Nb, Mo, Ru, Ag, Ta, W, Pt, or Au).

Further, for example, $LiA^1ON$ ($A^1$ represents one or more elements selected from Si, B, Ge, Al, C, or Ga) can be preferably used.

The average particle size (volume average particle size) of the inorganic solid electrolyte is 2 μm or less, preferably 1.6 μm or less, more preferably 1.0 μm, and still more preferably 0.8 μm. The lower limit is 0.01 μm or more, preferably 0.05 μm or more, more preferably 0.1 μm or more, and still more preferably 0.2 μm or more. The volume average particle size of the inorganic solid electrolyte is measured in the following order. The inorganic solid electrolyte

particles are diluted using water (heptane in a case where the inorganic solid electrolyte is unstable in water) in a 20 mL sample bottle to prepare 1 mass% of a dispersion liquid. The diluted dispersion sample is irradiated with 1 kHz ultrasonic waves for 10 minutes and is then immediately used for testing. The volume average particle size is obtained by acquiring data 50 times using this dispersion liquid sample, a laser diffraction/scattering particle size distribution analyzer LA-920 (trade name, manufactured by Horiba Ltd.), and a quartz cell for measurement at a temperature of 25°C. Other detailed conditions and the like can be found in JIS Z8828: 2013 "Particle Size Analysis-Dynamic Light Scattering" as necessary. For each level, five samples are prepared and the average value thereof is adopted.

As the inorganic solid electrolyte, one kind may be used alone, or two or more kinds may be used in combination.

The total mass (mg) of the active material and the inorganic solid electrolyte per unit area ($cm^2$) of the electrode active material layer (weight per unit area) is not particularly limited. The mass (mg) of the inorganic solid electrolyte can be appropriately determined depending on the designed battery capacity and may be, for example, 1 to 100 $mg/cm^2$.

From the viewpoints of dispersibility, a reduction in interface resistance, and binding properties, the content of the inorganic solid electrolyte in the electrode composition is not particularly limited, and the total content of the inorganic solid electrolyte and the active material described below is preferably 50 mass% or higher, more preferably 70 mass% or higher, and still more preferably 90 mass% or higher with respect to 100 mass% of the solid content. From the same viewpoint, the upper limit is preferably 99.9 mass% or lower, more preferably 99.5 mass% or lower, and particularly preferably 99 mass% or lower.

In the present invention, the solid content (solid component) refers to components that neither volatilize nor evaporate and disappear in a case where the electrode composition is dried at 150°C for 6 hours in a nitrogen atmosphere at a pressure of 1 mmHg. Typically, the solid content refers to components other than a dispersion medium described below.

<Active Material>

The electrode composition according to the embodiment of the present invention includes an active material capable of intercalating and deintercalating ions of a metal belonging to Group 1 or Group 2 in the periodic table. Although described below, examples of the active material include a positive electrode active material and a negative electrode active material. In particular, a transition metal oxide (preferably a transition metal oxide) that is the positive electrode active material, a metal oxide that is the negative electrode active material, or metal such as Sn, Si, Al, or In capable of forming an alloy with lithium is preferable.

(Positive Electrode Active Material)

The positive electrode active material is preferably capable of reversibly intercalating or deintercalating or capable of intercalating and deintercalating lithium ions. The above-described material is not particularly limited as long as the material has the above-described characteristics and may be transition metal oxides, elements capable of being complexed with Li such as sulfur, or the like.

Among these, as the positive electrode active material, transition metal oxides are preferably used, and transition metal oxides having a transition metal element $M^a$ (one or more elements selected from Co, Ni, Fe, Mn, Cu, and V) are more preferable. In addition, an element $M^b$ (an element of Group 1 (Ia) of the metal periodic table other than lithium, an element of Group 2 (IIa), or an element such as Al, Ga, In, Ge, Sn, Pb, Sb, Bi, Si, P, or B) may be mixed into this transition metal oxide. The amount of the element mixed is preferably 0 to 30 mol% of the amount (100 mol%) of the transition metal element $M^a$. It is more preferable that the transition metal oxide is synthesized by mixing the above components such that a molar ratio $Li/M^a$ is 0.3 to 2.2.

Specific examples of the transition metal oxides include transition metal oxides having a layered rock salt structure (MA), transition metal oxides having a spinel-type structure (MB), lithium-containing transition metal phosphate compounds (MC), lithium-containing transition metal halogenated phosphate compounds (MD), and lithium-containing transition metal silicate compounds (ME).

Specific examples of the transition metal oxides having a layered rock salt structure (MA) include $LiCoO_2$ (lithium cobalt oxide [LCO]), $LiNi_2O_2$ (lithium nickel oxide) $LiNi_{0.85}Co_{0.10}Al_{0.05}O_2$ (lithium nickel cobalt aluminum oxide [NCA]), $LiNi_{1/3}Co_{1/3}Mn_{1/3}O_2$ (lithium nickel manganese cobalt oxide [NMC]), and $LiNi_{0.5}Mn_{0.5}O_2$ (lithium manganese nickel oxide).

Specific examples of the transition metal oxides having a spinel-type structure (MB) include $LiMn_2O_4$ (LMO), $LiCoMnO_4$, $Li_2FeMn_3O_8$, $Li_2CuMn_3O_8$, $Li_2CrMn_3O_8$, and $Li_2NiMn_3O_8$.

Examples of the lithium-containing transition metal phosphate compounds (MC) include olivine-type iron phosphate salts such as $LiFePO_4$ and $Li_3Fe_2(PO_4)_3$, iron pyrophosphates such as $LiFeP_2O_7$, and cobalt phosphates such as $LiCoPO_4$, and monoclinic nasicon type vanadium phosphate salt such as $Li_3V_2(PO_4)_3$ (lithium vanadium phosphate).

Examples of the lithium-containing transition metal halogenated phosphate compounds (MD) include iron fluor-

ophosphates such as $Li_2FePO_4F$, manganese fluorophosphates such as $Li_2MnPO_4F$, cobalt fluorophosphates such as $Li_2CoPO_4F$.

Examples of the lithium-containing transition metal silicate compounds (ME) include $Li_2FeSiO_4$, $Li_2MnSiO_4$, and $Li_2CoSiO_4$.

In the present invention, the transition metal oxides having a layered rock salt structure (MA) is preferable, and LCO or NMC is more preferable.

The shape of the positive electrode active material is not particularly limited, but is preferably a particle shape. The volume average particle size (sphere-equivalent average particle size) of positive electrode active material particles is not particularly limited. For example, the volume average particle size can be set to 0.1 to 50 $\mu$m. In order to allow the positive electrode active material to have a predetermined particle size, an ordinary pulverizer or classifier may be used. Positive electrode active materials obtained using a calcination method may be used after being washed with water, an acidic aqueous solution, an alkaline aqueous solution, or an organic solvent. The volume average particle size (sphere-equivalent average particle size) of positive electrode active material particles can be measured using a laser diffraction/scattering particle size distribution analyzer LA-920 (trade name, manufactured by Horiba Ltd.).

As the positive electrode active material, one kind may be used alone, or two or more kinds may be used in combination.

(Negative Electrode Active Material)

The negative electrode active material is preferably capable of reversibly intercalating or deintercalating or capable of intercalating and deintercalating lithium ions. The above-described material is not particularly limited as long as the material has the above-described characteristics, and examples thereof include carbonaceous materials, metal oxides such as tin oxide, silicon oxide, metal composite oxides, a lithium single body, lithium alloys such as lithium aluminum alloys, metals capable of forming alloys with lithium such as Sn, Si, Al, and In and the like. Among these, a carbonaceous material or a lithium composite oxide is preferably used from the viewpoint of reliability. In addition, the metal composite oxide is preferably capable of intercalating and deintercalating lithium. The materials are not particularly limited, but preferably include at least any one of titanium or lithium as components from the viewpoint of high current density charging-discharging characteristics.

The carbonaceous material which is used as the negative electrode active material is a material substantially consisting of carbon. Examples thereof include petroleum pitch, carbon black such as acetylene black (AB), graphite (natural graphite, artificial graphite such as vapor-grown graphite), and carbonaceous material obtained by calcinating a variety of synthetic resins such as polyacrylonitrile (PAN)-based resins or furfuryl alcohol resins. Furthermore, examples thereof also include a variety of carbon fibers such as PAN-based carbon fibers, cellulose-based carbon fibers, pitch-based carbon fibers, vapor-grown carbon fibers, dehydrated polyvinyl alcohol (PVA)-based carbon fibers, lignin carbon fibers, vitreous carbon fibers, and activated carbon fibers, mesophase microspheres, graphite whisker, and tabular graphite.

These carbonaceous materials can be classified into non-graphitizable carbonaceous materials and graphitizable carbonaceous materials based on the graphitization degree. In addition, it is preferable that the carbonaceous material has the lattice spacing, density, and crystallite size described in JP1987-022066A (JP-S62-022066A), JP1990-006856A (JP-H2-006856A), and JP1991-045473A (JP-H3-045473A). The carbonaceous material is not necessarily a single material and, for example, may be a mixture of natural graphite and artificial graphite described in JP1993-090844A (JP-H5-090844A) or graphite having a coating layer described in JP1994-004516A (JP-H6-004516A).

The metal oxides and the metal composite oxides being applied as the negative electrode active material are particularly preferably amorphous oxides, and furthermore, chalcogenides which are reaction products between a metal element and an element belonging to Group 16 in the periodic table are also preferably used. "Amorphous" described herein represents an oxide having a broad scattering band with a peak in a range of 20° to 40° in terms of 2$\theta$ in case of being measured by an X-ray diffraction method using CuK$\alpha$ rays, and the oxide may have a crystal diffraction line. The highest intensity in a crystal diffraction line observed in a range of 40° to 70° in terms of 2$\theta$ is preferably 100 times or less and more preferably 5 times or less relative to the intensity of a diffraction peak line in a broad scattering band observed in a range of 20° to 40° in terms of 2$\theta$, and it is still more preferable that the oxide does not have a crystal diffraction line.

In a compound group consisting of the amorphous oxides and the chalcogenides, amorphous oxides of metalloid elements and chalcogenides are more preferred, and elements belonging to Groups 13 (IIIB) to 15 (VB) of the periodic table, oxides consisting of one element or a combination of two or more elements of Al, Ga, Si, Sn, Ge, Pb, Sb, and Bi, and chalcogenides are particularly preferable. Specific preferable examples of the amorphous oxides and the chalcogenides include $Ga_2O_3$, SiO, GeO, SnO, $SnO_2$, PbO, $PbO_2$, $Pb_2O_3$, $Pb_2O_4$, $Pb_3O_4$, $Sb_2O_3$, $Sb_2O_4$, $Sb_2O_8Bi_2O_3$, $Sb_2O_8Si_2O_3$, $Sb_2O_5$, $Bi_2O_3$, $Bi_2O_4$, $SnSiO_3$, GeS, SnS, $SnS_2$, PbS, $PbS_2$, $Sb_2S_3$, $Sb_2S_5$, and $SnSiS_3$. In addition, these amorphous oxides may be composite oxides with lithium oxide, for example, $Li_2SnO_2$.

The negative electrode active material preferably contains a titanium atom. More specifically, $Li_4Ti_5O_{12}$ (lithium titanium oxide [LTO]) is preferred since the volume fluctuation during the intercalation and deintercalation of lithium ions is small, and thus the high-speed charging-discharging characteristics are excellent, and the deterioration of electrodes is suppressed. Therefore, it becomes possible to improve the service lives of lithium ion secondary batteries.

In the present invention, hard carbon or graphite is preferably used, and graphite is more preferably used. In the present invention, as the above-described carbonaceous material, one kind may be used alone, or two or more kinds may be used in combination.

In the present invention, a Si-based negative electrode is also preferably applied. Generally, a Si negative electrode is capable of intercalating a larger number of Li ions than a carbon negative electrode (graphite, acetylene black, or the like). That is, the amount of Li ions intercalated per unit weight increases. Therefore, it is possible to increase the battery capacity. As a result, there is an advantage that the battery driving duration can be extended.

The chemical formulae of the compounds obtained using a calcination method can be calculated using inductively coupled plasma (ICP) optical emission spectroscopy as a measurement method from the mass difference of powder before and after calcinating as a convenient method.

Preferable examples of the negative electrode active material which can be used in combination with the amorphous oxide as negative electrode active material containing Sn, Si, or Ge as a major component include carbon materials that can intercalate or deintercalate and can intercalate and deintercalate lithium ions or lithium metal; lithium; lithium alloys; and metals that can form an alloy with lithium.

The shape of the negative electrode active material is not particularly limited, but is preferably a particle shape. The average particle size of the negative electrode active material is preferably 0.1 to 60 $\mu$m. In order to obtain a predetermined particle size, an ordinary pulverizer or classifier is used. For example, a mortar, a ball mill, a sand mill, a vibration ball mill, a satellite ball mill, a planetary ball mill, a swirling air flow jet mill, or a sieve is preferably used. During the pulverization, wet pulverization of causing water or an organic solvent such as methanol to coexist with the negative electrode active material can be optionally performed. In order to obtain a desired particle size, it is preferable to perform classification. A classification method is not particularly limited, and a method using, for example, a sieve or an air classifier can be optionally used. The classification can be used through a dry process or a wet process. The average particle size of negative electrode active material particles can be measured using the same method as the method of measuring the volume average particle size of the positive electrode active material.

As the negative electrode active material, one kind may be used alone, or two or more kinds may be used in combination.

(Coating of Active Material)

The surfaces of the positive electrode active material and the negative electrode active material may be coated with a separate metal oxide. Examples of the surface coating agent include metal oxides and the like containing Ti, Nb, Ta, W, Zr, Al, Si, or Li. Specific examples thereof include titanium oxide spinel, tantalum-based oxides, niobium-based oxides, and lithium niobate-based compounds, and specific examples thereof include $Li_4Ti_5O_{12}$, $Li_2Ti_2O_5$, $LiTaO_3$, $LiNbO_3$, $LiAlO_2$, $Li_2ZrO_3$, $Li_2WO_4$, $Li_2TiO_3$, $Li_2B_4O_7$, $Li_3PO_4$, $Li_2MoO_4$, $Li_3BO_3$, $LiBO_2$, $Li_2CO_3$, $Li_2SiO_3$, $SiO_2$, $TiO_2$, $ZrO_2$, $Al_2O_3$, and $B_2O_3$.

In addition, a surface treatment may be carried out on the surfaces of electrodes including the positive electrode active material or the negative electrode active material using sulfur, phosphorous, or the like.

Furthermore, the particle surfaces of the positive electrode active material or the negative electrode active material may be treated with an actinic ray or an active gas (plasma or the like) before or after the coating of the surfaces.

<Particle-Shaped Polymer>

The particle-shaped polymer used in the present invention satisfies Expressions (i) to (iv) in the electrode composition.

$$d \leq 30x + 140 \quad \text{Expression (i)}$$

$$d \geq 30x - 10 \quad \text{Expression (ii)}$$

$$10 \leq d \quad \text{Expression (iii)}$$

$$0 < x \leq 2 \qquad \text{Expression (iv)}$$

In Fig. 2, regions indicated by points A to E (point A (0, 140), point B (0, 10), point C (0.67, 10), point D (2, 50), and point E (2, 200)) are represented by Expressions (i) to (iv).

The above-described regions do not include the point A, the point B, and a line connecting the points A and B. The regions include other points and lines.

Expression (i) is derived as follows.

In a case where the inorganic solid electrolyte having an average particle size of 2 μm or less is used, the content x (mass%) of the particle-shaped polymer is not excessively high, and the resistance of the all-solid state secondary battery can be effectively reduced. In addition, it was found that, in a case where the average particle size d (nm) of the particle-shaped polymer changes in a range where the dispersion stability of the composition can be secured (range represented by Expression (iv)), a region where the binding properties between solid particles can be improved is present, and this region was derived. Specifically, d = 30x + 140 represents a linear approximation line (r2 = 0.987) obtained from three points under conditions 9, 13, and 23 in Examples below.

Expression (ii) is derived as follows.

It was found that, in a case where the inorganic solid electrolyte having an average particle size of 2 μm or less is used and x exceeds 0.67 and the average particle size d (nm) of the particle-shaped polymer changes in the range represented by Expression (iv) and the range (range represented by Expression (iii)) where the average particle size of the particle-shaped polymer is excessively small such that the resistance of the all-solid state secondary battery can be effectively reduced, a region where the resistance of the all-solid state secondary battery can be reduced at a high level is present, and this region was derived. Specifically, d = 30x - 10 represents a linear approximation line (r2 = 1.000) obtained from three points under conditions 12, 15, and 22 in Examples below.

The electrode composition according to the embodiment of the present invention has excellent dispersion stability. By using the electrode composition as a constituent material of an electrode active material layer of an all-solid state secondary battery, even in a case where the content of the particle-shaped polymer is low, binding properties, for example, between solid particles in the electrode active material layer can be improved, and an all-solid state secondary battery having low resistance can be realized. The details of the reason for this are not clear but considered to be as follows. In order to improve ion conductivity between an active material and an inorganic solid electrolyte, it is preferable that the average particle size of the inorganic solid electrolyte is small such that the active material is coated without a gap. However, in a case where the average particle size of the inorganic solid electrolyte in the electrode composition is small, the inorganic solid electrolyte aggregates or precipitates such that the dispersion stability deteriorates. In a case where this composition is used as a constituent material of the electrode active material layer, the performance of the all-solid state secondary battery may deteriorate. Therefore, typically, an inorganic solid electrolyte having a given size is used for the electrode composition. It is presumed that the electrode composition according to the embodiment of the present invention satisfies Expressions (i) to (iv) such that, along with the above-described effect, aggregation and precipitation of solid particles can be suppressed even in a case where an inorganic solid electrolyte having a very small average particle size (an average particle size of 2 μm or less) is used, and the dispersion stability of the electrode composition can be improved even in the presence of the dispersion medium. Further, it is presumed that the inorganic solid electrolyte in the electrode composition according to the embodiment of the present invention has an average particle size is 2 μm or less, the ion conductivity between the active material and the inorganic solid electrolyte in the electrode active material layer of the all-solid state secondary battery prepared using this composition is excellent, and the resistance of the all-solid state secondary battery can be reduced.

It is preferable that Expression (i) is Expression (i-1). This formula is a linear approximation line (r2 = 1.0) obtained from conditions 9, 13, and 49 in Examples below.

$$d \leq 40x + 120 \qquad \text{Expression (i-1)}$$

From the viewpoint of simultaneously improving binding properties and dispersion stability, Expression (iii) is preferably Expression (iii-1), more preferably Expression (iii-2), still more preferably Expression (iii-3), still more preferably Expression (iii-4), still more preferably Expression (iii-5), and still more preferably Expression (iii-6).

$$10 \leq d \leq 200 \quad \text{Expression (iii-1)}$$

$$10 \leq d \leq 150 \quad \text{Expression (iii-2)}$$

$$10 \leq d \leq 110 \quad \text{Expression (iii-3)}$$

$$10 \leq d \leq 90 \quad \text{Expression (iii-4)}$$

$$10 \leq d \leq 70 \quad \text{Expression (iii-5)}$$

$$10 \leq d \leq 50 \quad \text{Expression (iii-6)}$$

From the viewpoint of simultaneously improving binding properties and dispersion stability, Expression (iv) is preferably Expression (iv-1), and more preferably Expression (iv-2).

$$0 < x \leq 2 \quad \text{Expression (iv-1)}$$

$$0.1 < x \leq 0.6 \quad \text{Expression (iv-2)}$$

Further, it is preferable that the particle-shaped polymer used in the present invention satisfies Formula (v). This formula is a linear approximation line (r2 = 0.702) obtained from conditions 24, 49, and 50 in Examples below.

$$d \leq 180x + 150 \quad \text{Formula (v)}$$

By adjusting d and x of the particle-shaped polymer used in the present invention to be in the above-described ranges, the dispersion stability of the electrode composition according to the embodiment of the present invention can be further improved, the resistance of the all-solid state secondary battery can be further reduced, and the binding properties can be further improved.

The kind of the particle-shaped polymer used in the present invention is not particularly limited. Specific examples of the particle-shaped polymer used in the present invention include a particle acrylic polymer, a particle polyester, a particle polyether, a particle polyurea, a particle polyurethane, a particle polystyrene, a particle polypropylene, and a particle vinyl alcohol. Among these, a particle acrylic polymer or a particle polyurethane is preferable.

It is preferable that the particle-shaped polymer used in the present invention includes at least one group selected from the following adsorbing group (X).

[Adsorbing Group (X)]

a hydroxy group, a sulfanyl group, a carboxy group, a phosphate group, an amino group, a cyano group, an isocyanate group, an acid anhydride group, a (meth)acryloyloxy group, an epoxy group, an oxetanyl group, an alkoxy group, and a group including a ring structure of two or more rings.

The group selected from the adsorbing group (X) in the particle-shaped polymer chemically or physically interacts with surfaces of the inorganic solid electrolyte and the active material in the electrode composition. In a case where the electrode composition includes a conductive auxiliary agent or the like, the conductive auxiliary agent or the like can chemically or physically interact with these surfaces. The interaction is not particularly limited, and examples thereof include an interaction by a hydrogen bond, an interaction by an acid-base ionic bond, an interaction by a covalent bond, a $\pi$-$\pi$ interaction by an aromatic ring, and a hydrophobic-hydrophobic interaction. In a case where the functional group (X) interacts, the chemical structure of the functional group may or may not change. For example, in the above-described

π-π interaction or the like, typically, the functional group (X) maintains the structure thereof without a change. On the other hand, in the interaction by a covalent bond or the like, typically, the functional group is converted into an anion (the functional group changes) by desorption of active hydrogen such as a carboxy group and is bonded to the inorganic solid electrolyte or the like. This interaction contributes to the improvement of binding properties between solid particles. The above-described functional group interacts with a surface of a current collector.

The number of carbon atoms in the amino group is preferably 0 to 12, more preferably 0 to 6, and still more preferably 0 to 2.

The phosphate group may be an ester or a salt thereof. In the case of an ester, the number of carbon atoms is preferably 1 to 24, more preferably 1 to 12, and still more preferably 1 to 6.

The above-described functional group may be present as a substituent or may be present as a linking group. For example, the amino group may be present as a divalent imino group or a trivalent nitrogen atom.

The group including a ring structure of two or more rings has the same definition as that of a group including a ring structure of two or more rings in a particle-shaped polymer B described below.

The number of carbon atoms in the alkoxy group is preferably 1 to 20.

It is preferable that the above-described particle-shaped polymer includes a component derived from a macromonomer that includes a polymerizable double bond and a linear hydrocarbon structure S having 6 or more carbon atoms (preferably an alkylene group having 6 to 30 carbon atoms and more preferably an alkylene group having 8 to 24 carbon atoms; a part of methylene forming these alkylene groups may have a substituent, and a part of methylene forming these alkylene groups may be replaced with another structure (for example, an oxygen atom, a sulfur atom, an imino group, or a carbonyl group). By including this component, the particle-shaped polymer can be uniformly dispersed in the dispersion medium in a more favorable manner, and in a case where the particle-shaped polymer is mixed with the inorganic solid electrolyte, a slurry can be stably obtained.

In order to further improve the dispersion stability of the electrode composition and the binding properties, for example, between solid particles in the electrode active material layer such that the resistance of the all-solid state secondary battery is further reduced, the content of the component having the group selected from the adsorbing group (X) with respect to all the components of the particle-shaped polymer is preferably 10% to 80 mass%, more preferably 10% to 75 mass%, still more preferably 10% to 65 mass%, and still more preferably 10% to 55 mass%.

The particle-shaped polymer may include a component derived from ethylene glycol. The content of the component derived from ethylene glycol is preferably 0.1 mass% or lower and more preferably 0 mass%.

An adsorption rate of the particle-shaped polymer to the active material is preferably 20% to 70%, more preferably 30% to 70%, and still more preferably 40% to 70%. By adjusting the adsorption rate to be in the above-described range, the particle-shaped polymer is dispersed with high uniformity and adsorbed to the active material, that is, the interval of the particle-shaped polymer adsorbed to the active material is appropriate. Therefore, the dispersion stability of the electrode composition and the binding properties, for example, between solid particles in the electrode active material layer can be further improved, and the resistance of the all-solid state secondary battery can be further reduced.

The adsorption rate can be calculated using a method described in Examples below.

The adsorption rate can be adjusted by adjusting, for example, the kind of a raw material of the particle-shaped polymer and the amount thereof used. For example, by increasing the amount of a monomer for introducing the component having the group selected from the adsorbing group (X), the adsorption rate can be increased.

The average particle size of the particle-shaped polymer refers to the volume average particle size and can be calculated using the following method.

The particle-shaped polymer is diluted using any dispersion medium (a dispersion medium used for preparing the electrode composition, for example, heptane) in a 20 mL sample bottle to prepare 1 mass% of a dispersion liquid. The diluted dispersion sample is irradiated with 1 kHz ultrasonic waves for 10 minutes and is then immediately used for testing. The volume average particle size is obtained by acquiring data 50 times using this dispersion liquid sample, a laser diffraction/scattering particle size distribution analyzer LA-920 (trade name, manufactured by Horiba Ltd.), and a quartz cell for measurement at a temperature of 25°C. The obtained volume average particle size is set as the particle size. Other detailed conditions and the like can be found in JIS Z8828: 2013 "Particle Size Analysis-Dynamic Light Scattering" as necessary. For each level, five samples are prepared and measured, and the average value thereof is adopted.

As the particle-shaped polymer, the following particle-shaped polymer A or B can be preferably used, and the particle-shaped polymer A is preferable.

(i) Particle-Shaped Polymer A

The particle-shaped polymer A includes a graft portion into a component derived from a macromonomer A having a number-average molecular weight of 1000 or higher is incorporated. In the particle-shaped polymer A, the graft portion derived from the macromonomer A forms a side chain with respect to the main chain. The main chain is not

particularly limited.

•Monomer (a)

A component other than the component derived from the macromonomer A in the particle-shaped polymer A is not particularly limited, and a typical polymer component can be used. It is preferable that a monomer for introducing the component other than the component derived from the macromonomer A (hereinafter, this monomer will also be referred to as "monomer (a)") is a monomer having a polymerizable unsaturated bond. For example, various vinyl monomers and/or acrylic monomers can be used. In the present invention, in particular, an acrylic monomer is preferably used. It is more preferable that a monomer selected from a (meth)acrylic acid monomer, a (meth)acrylic acid ester monomer, or a (meth)acrylonitrile is used. The number of polymerizable groups is not particularly limited and is preferably 1 to 4.

It is preferable that the particle-shaped polymer A includes at least one group selected from the adsorbing group (X). The group selected from the adsorbing group (X) may be included in the main chain or in the side chain derived from the macromonomer A and is preferably included in the main chain.

It is preferable that the vinyl monomer forming the above-described polymer is represented by Formula (b-1).

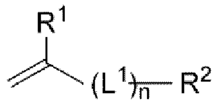

(b−1)

In the formula, $R^1$ represents a hydrogen atom, a hydroxy group, a cyano group, a halogen atom, an alkyl group (having preferably 1 to 24 carbon atoms, more preferably 1 to 12 carbon atoms, and still more preferably 1 to 6 carbon atoms), an alkenyl group (having preferably 2 to 24 carbon atoms, more preferably 2 to 12 carbon atoms, and still more preferably 2 to 6 carbon atoms), an alkynyl group (having preferably 2 to 24 carbon atoms, more preferably 2 to 12 carbon atoms, and still more preferably 2 to 6 carbon atoms), or an aryl group (having preferably 6 to 22 carbon atoms and more preferably 6 to 14 carbon atoms). In particular, a hydrogen atom or an alkyl group is preferable, and a hydrogen atom or a methyl group is more preferable.

$R^2$ represents a hydrogen atom, an alkyl group (having preferably 1 to 24 carbon atoms, more preferably 1 to 12 carbon atoms, and still more preferably 1 to 6 carbon atoms), an alkenyl group (having preferably 2 to 12 carbon atoms and more preferably 2 to 6 carbon atoms), an aryl group (having preferably 6 to 22 carbon atoms and more preferably 6 to 14 carbon atoms), an aralkyl group (having preferably 7 to 23 carbon atoms and more preferably 7 to 15 carbon atoms), a cyano group, a carboxy group, a hydroxy group, a sulfanyl group, a sulfonate group, a phosphate group, a phosphonate group, an aliphatic heterocyclic group having an oxygen atom (having preferably 2 to 12 carbon atoms and more preferably 2 to 6 carbon atoms), or an amino group ($NR^N_2$: $R^N$ represents preferably a hydrogen atom or an alkyl group having 1 to 3 carbon atoms according to the definition described below). In particular, for example, a methyl group, an ethyl group, a propyl group, a butyl group, a cyano group, an ethenyl group, a phenyl group, a carboxy group, a sulfanyl group, or a sulfonate group is preferable.

$R^2$ may further have a substituent T described below. In particular, a carboxy group, a halogen atom (for example, a fluorine atom), a hydroxy group, an alkyl group, or the like may be substituted.

A carboxy group, a hydroxy group, a sulfonate group, a phosphate group, or a phosphonate group may be esterified through, for example, an alkyl group having 1 to 6 carbon atoms.

As the aliphatic heterocyclic group having an oxygen atom, for example, an epoxy group-containing group, an oxetane group-containing group, or a tetrahydrofuryl group-containing group is preferable.

$L^1$ represents any linking group, and examples thereof include examples of a linking group L described below. Specific examples of the linking group L include an alkylene group having 1 to 6 carbon atoms (having preferably 1 to 3 carbon atoms), an alkenylene group having 2 to 6 carbon atoms (having preferably 2 or 3 carbon atoms), an arylene group having 6 to 24 carbon atoms (having preferably 6 to 10 carbon atoms), an oxygen atom, a sulfur atom, an imino group ($NR^N$), a carbonyl group, a phosphate linking group (-O-P(OH)(O)-O-), a phosphonate linking group (-P(OH)(O)-O-), and a group relating to a combination thereof. The above-described linking group may have any substituent. The number of linking atoms and a preferable range of the number of linking atoms are as described below. Examples of the substituent include the substituent T. For example, an alkyl group or a halogen atom can be used.

n represents 0 or 1.

It is preferable that the acrylic monomer forming the above-described polymer is represented by any one of Formula (b-1) and Formulae (b-2) to (b-6).

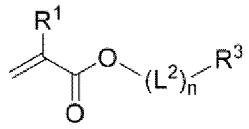
(b−2)

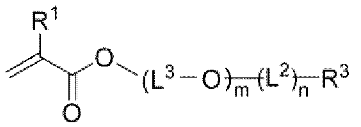
(b−3)

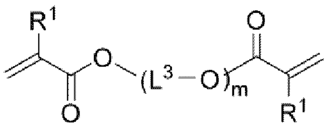
(b−4)

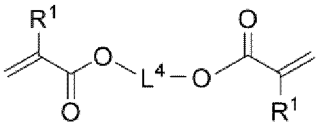
(b−5)

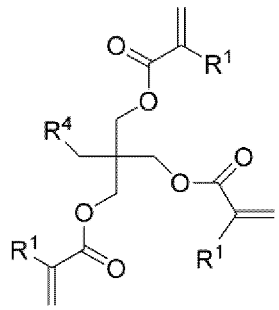
(b−6)

$R^1$ and n have the same definitions as those of Formula (b-1).

$R^3$ has the same definition as that of $R^2$. For example, a hydrogen atom, an alkyl group, an aryl group, a carboxy group, a sulfanyl (thiol) group, a phosphate group, a phosphonate group, an aliphatic heterocyclic group having an oxygen atom, or an amino group ($NR^N{}_2$) is preferable.

$L^2$ represents any linking group, examples of $L^1$ are preferable, and an oxygen atom, an alkylene group having 1 to 6 carbon atoms (having preferably 1 to 3 carbon atoms), an alkenylene group having 2 to 6 carbon atoms (having preferably 2 or 3 carbon atoms), a carbonyl group, an imino group ($NR^N$), or a group relating to a combination thereof is more preferable.

$L^3$ represents a linking group, examples of $L^2$ are preferable, and an alkylene group having 1 to 6 carbon atoms (having preferably 1 to 3 carbon atoms) is more preferable.

$L^4$ has the same definition as that of $L^1$.

$R^4$ represents a hydrogen atom, an alkyl group having 1 to 6 carbon atoms (having preferably 1 to 3 carbon atoms), a hydroxy group-containing group having 0 to 6 carbon atoms (having preferably 0 to 3 carbon atoms), a carboxy group-containing group having 0 to 6 carbon atoms (having preferably 0 to 3 carbon atoms), or a (meth)acryloyloxy group. $R^4$ may represent the linking group of $L^1$, in which a dimer may be formed.

m represents an integer of 1 to 200, preferably an integer of 1 to 100, and more preferably an integer of 1 to 50.

In Formulas (b-1) to (b-6), a group which may have a substituent such as an alkyl group, an aryl group, an alkylene group, or an arylene group may have any substituent as long as the effects of the present invention can be maintained. Examples of the substituent include the substituent T. Specifically, the group may have any substituent such as a halogen atom, a hydroxy group, a carboxy group, a thiol group, an acyl group, an acyloxy group, an alkoxy group, an aryloxy group, an aryloyl group, an aryloyloxy group, or an amino group.

Specific examples of the monomer (a) will be shown below but do not intend to limit the present invention. In the following formulae, 1 represents 1 to 1,000,000.

A-1
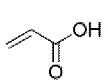
A-2
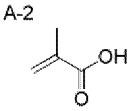
A-3
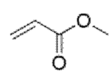
A-4
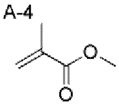
A-5
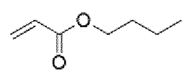
A-6
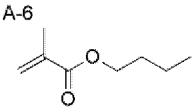

A-7
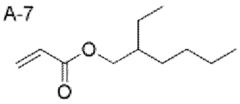
A-8
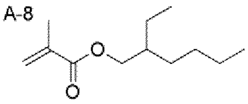
A-9
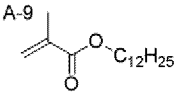
A-10
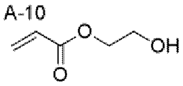

A-11
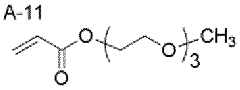
A-12
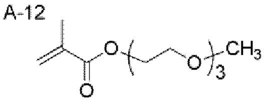
A-13
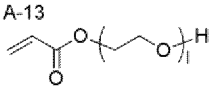
A-14
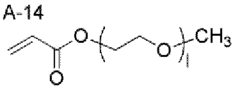

A-15

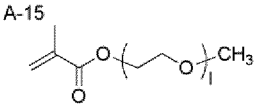

A-16

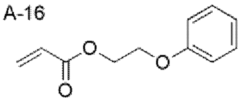

A-17

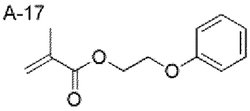

A-18

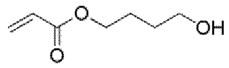

A-19

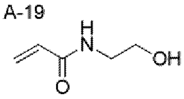

A-20

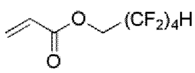

A-21

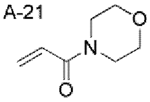

A-22

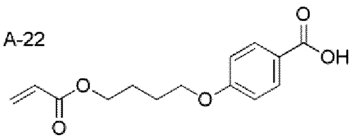

A-23

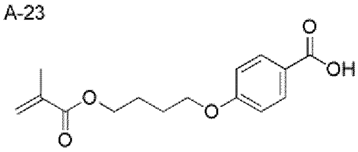

A-24

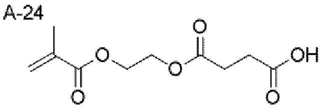

A-25

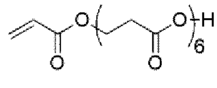

A-26

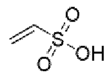

A-27

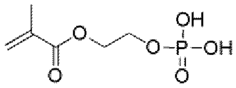

A-28

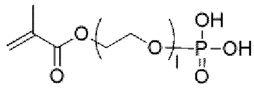

A-29

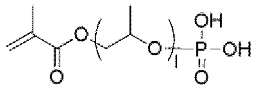

A-30

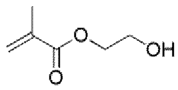

A-31

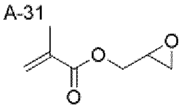

A-32

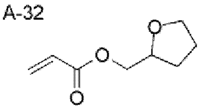

A-33

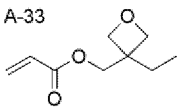

A-34

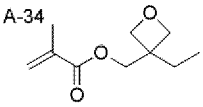

A-35

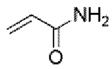

A-36

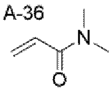

A-37

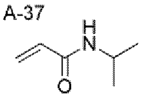

A-38

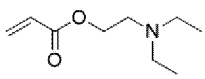

A-39

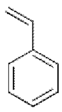

A-40

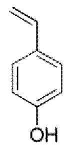

A-41

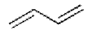

A-42

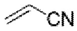

A-43

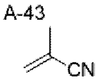

A-44

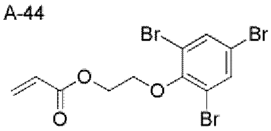

A-45

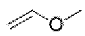

A-46

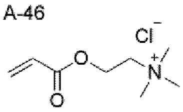

A-47

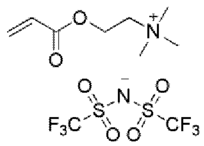

A-48

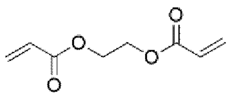

A-49

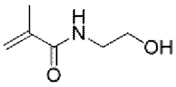

A-50

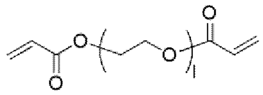

A-51

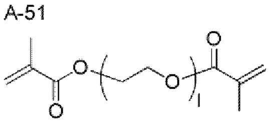

A-52

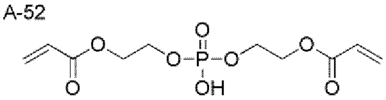

A-53

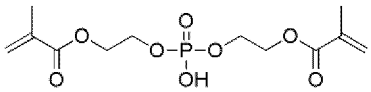

A-54

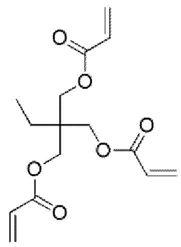

A-55

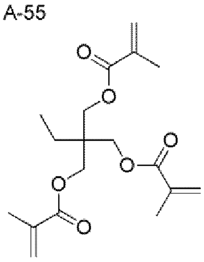

A-56

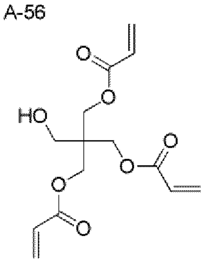

A-57

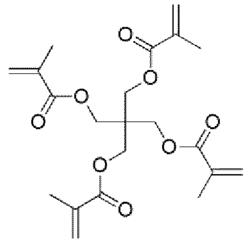

A-58

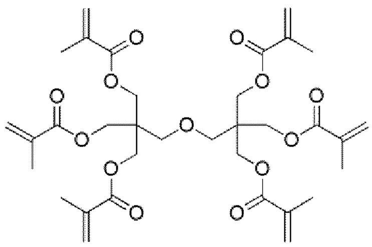

A-59

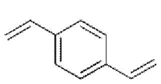

A-60

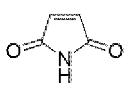

A-61

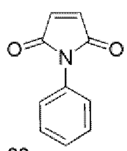

A-62

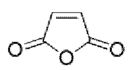

A-63

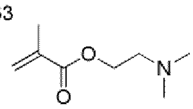

A-64

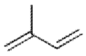

A-65

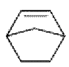

A-66

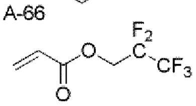

A-67

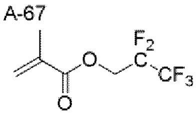

A-68

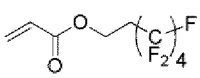

A-69

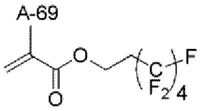

A-70

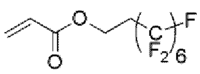

A-71

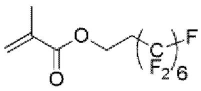

A-72

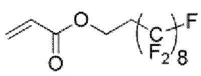

A-73

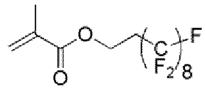

A-74

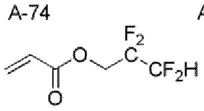

A-75

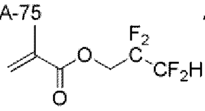

A-76

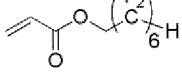

A-77

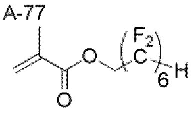

A-78

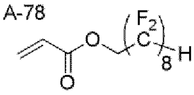

A-79

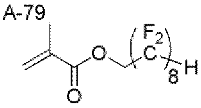

A-80

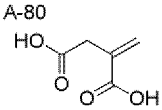

A-81

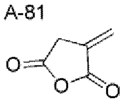

A-82

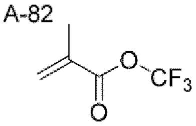

A-83

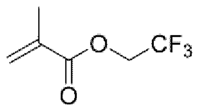

A-84

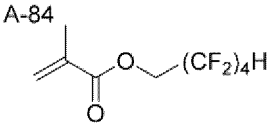

A-85

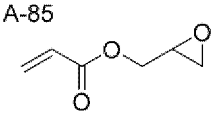

A-86

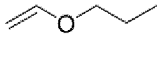

A-87

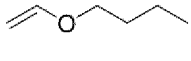

A-88

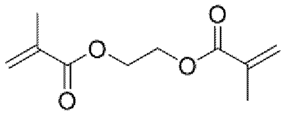

•Macromonomer A

The number-average molecular weight of the macromonomer A is preferably 1,000 or higher, more preferably 2,000 or higher, and still more preferably 3,000 or higher. The upper limit is preferably 500,000 or lower, more preferably

100,000 or lower, and still more preferably 30,000 or lower. The particle-shaped polymer A includes the side chain derived from the macromonomer A having a molecular weight in the above-described range such that the polymer can be uniformly dispersed in an organic solvent (dispersion medium) more favorably and can be mixed with the solid electrolyte particles for application.

Here, regarding the action of the electrode composition according to the embodiment of the present invention, it is presumed that the side chain derived from the above-described macromonomer A in the particle-shaped polymer A has an action of improving dispersibility in a solvent. As a result, the particle-shaped polymer A is favorably dispersed and thus can cause the inorganic solid electrolyte to be bonded to each other without locally or totally coating the inorganic solid electrolyte. As a result, the solid particles such as the inorganic solid electrolyte particles can be closely attached to each other without interrupting an electrical connection therebetween. Therefore, it is presumed that an increase in the interface resistance between the solid particles is suppressed. Further, the particle-shaped polymer A includes the above-described side chain such that not only an effect of causing the particle-shaped polymer A to be attached to the inorganic solid electrolyte particles but also an effect of twisting the side chain can be expected. As a result, it is presumed that, regarding the inorganic solid electrolyte, reduction in interface resistance and improvement of binding properties are simultaneously achieved. Further, since the particle-shaped polymer A has high dispersibility, a step of transferring a layer in an organic solvent can be removed as compared to emulsion polymerization in water or the like, and a solvent having a low boiling point can also be used as a dispersion medium. The molecular weight of the component derived from the macromonomer A can be identified by measuring the molecular weight of a polymerizable compound (macromonomer A) incorporated during the synthesis of the particle-shaped polymer A.

-Measurement of Molecular Weight-

In the present invention, unless specified otherwise, the molecular weights of the particle-shaped polymer A and the macromonomer A refer to number-average molecular weights and are obtained by measuring the number-average molecular weights in terms of standard polystyrene by gel permeation chromatography (GPC). Regarding a measurement method, basically, a value measured using a method under the following condition 1 or condition 2 (preferred) is used. In this case, an appropriate eluent may be selected and used depending on the kind of the polymer.

(Condition 1)

Column: Two TOSOH TSKgel Super AWM-H's (trade name, manufactured by Tosoh Corporation) connected together
Carrier: 10 mM LiBr/N-methylpyrrolidone
Measurement temperature: 40°C
Carrier flow rate: 1.0 ml/min
Sample concentration: 0.1 mass%
Detector: refractive index (RI) detector

(Condition 2)

Column: A column obtained by connecting TOSOH TSKgel Super HZM-H, TOSOH TSKgel Super HZ4000, and TOSOH TSKgel Super HZ2000 (all of which are trade names, manufactured by Tosoh Corporation)
Carrier: tetrahydrofuran
Measurement temperature: 40°C
Carrier flow rate: 1.0 ml/min
Sample concentration: 0.1 mass%
Detector: refractive index (RI) detector

The SP value of the macromonomer A is preferably 10 or lower and more preferably 9.5 or lower. The lower limit value is not particularly limited, but is practically 5 or more.

-Definition of SP Value-

Unless specified otherwise, the SP value in the present specification is obtained using a Hoy method (H. L. Hoy Journal of Painting, 1970, Vol. 42, 76-118). In addition, the unit of the SP value is not shown but is $cal^{1/2}cm^{-3/2}$. The SP value of the side chain is not substantially different from the SP value of a raw material monomer forming the above-described side chain and may be evaluated using the SP value of the raw material monomer.

The SP value is an index indicating a property of being dispersed in an organic solvent. In addition, it is preferable that the side chain component has a specific molecular weight or higher to adjust the SP value to be the above-described

SP value or higher because binding properties with the inorganic solid electrolyte can be improved, affinity to a solvent can be improved, and thus the inorganic solid electrolyte can be stably dispersed.

The main chain of the above-described macromonomer A is not particularly limited, and a typical polymer component can be used. It is preferable that the macromonomer A has a polymerizable unsaturated bond. For example, the macromonomer A may have various vinyl groups or (meth)acryloyl groups. In the present invention, in particular, it is preferable that the macromonomer A has a (meth)acryloyl group.

In the present specification, in a broad sense, "acryl" or "acryloyl" refers to not only an acryloyl group but also a derivative structure thereof, that is, a structure which has a specific substituent at the $\alpha$-position of the acryloyl group. In a narrow sense, a structure in which the $\alpha$-position is a hydrogen atom may be referred to as "acryl" or "acryloyl". A structure which has a methyl group at the $\alpha$-position may be referred to as "methacryl", and any one of acryl (the $\alpha$-position is a hydrogen atom) or methacryl (the $\alpha$-position is a methyl group) may be referred to as "(meth)acryl or the like.

It is preferable that the above-described macromonomer A is a repeating unit derived from a monomer selected from a (meth)acrylic acid monomer, a (meth)acrylic acid ester monomer, or a (meth)acrylonitrile. In addition, it is preferable that the macromonomer A has a polymerizable double bond and a linear hydrocarbon structure S having 6 or more carbon atoms.

It is preferable that the above-described macromonomer A has a site represented by Formula (b-11).

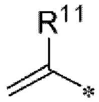

**(b-11)**

$R^{11}$ has the same definition as $R^1$. * represents a binding site.

It is preferable that the above-described macromonomer A has a site represented by any one of Formulae (b-12a) to (b-12c). These sites will also be referred to as "specific polymerizable site".

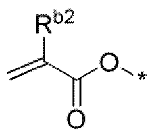 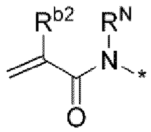 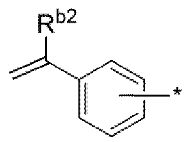

(b-12a) (b-12b) (b-12c)

$R^{b2}$ has the same definition as $R^1$. * represents a binding site. $R^N$ has the same definition described below regarding the substituent T. A benzene ring in Formula (b-12c) and (b-13c) and (b-14c) described below may be substituted with any substituent T.

A structural unit present before the binding site of * is not particularly limited as long as it satisfies a molecular weight as the macromonomer A, but is preferably a structural unit formed of a carbon atom, an oxygen atom, or a hydrogen atom. In this case, this structural unit may have the substituent T, for example, a halogen atom (fluorine atom).

It is preferable that the above-described macromonomer A is a compound represented by any one of Formulae (b-13a) to (b-13c) or a compound having a repeating unit represented by any one of Formulae (b-14a) to (b-14c).

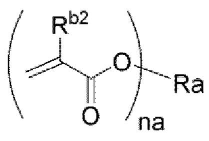 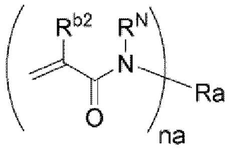 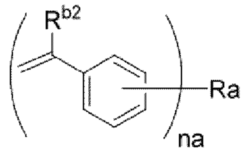

(b-13a) (b-13b) (b-13c)

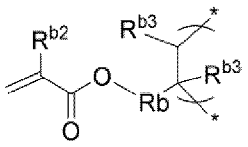
(b-14a)

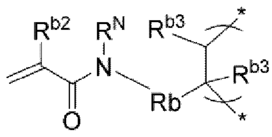
(b-14b)

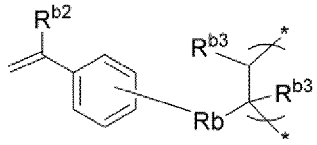
(b-14c)

$R^{b2}$ and $R^{b3}$ have the same definition as that of $R^1$.

na is not particularly limited and is preferably an integer of 1 to 6 and more preferably 1 or 2.

In a case where na represents 1, Ra represents a substituent (preferably an organic group). In a case where na represents 2 or more, Ra represents a linking group.

Rb represents a divalent linking group.

In a case where Ra and Rb represent a linking group, examples of the linking group include the following linking group L. Specifically, it is preferable that the linking group is an alkane linking group having 1 to 30 carbon atoms (in the case of a divalent linking group, an alkylene group), a cycloalkane linking group having 3 to 12 carbon atoms (in the case of a divalent linking group, a cycloalkylene group), an aryl linking group having 6 to 24 carbon atoms (in the case of a divalent linking group, an arylene group), a heteroaryl linking group having 3 to 12 carbon atoms (in the case of a divalent linking group, a heteroarylene group), an ether group (-O-), a sulfide group (-S-), a phosphinidene group (-PR-: R represents a hydrogen atom or an alkyl group having 1 to 6 carbon atoms), a silylene group (-SiRR'-: R and R' represent a hydrogen atom or an alkyl group having 1 to 6 carbon atoms), a carbonyl group, an imino group ($-NR^N-$: $R^N$ represents preferably a hydrogen atom, an alkyl group having 1 to 6 carbon atoms, or an aryl group having 6 to 10 carbon atoms according to the definition described below), or a combination thereof. In particular, it is preferable that the linking group is an alkane linking group having 1 to 30 carbon atoms (in the case of a divalent linking group, an alkylene group), an aryl linking group having 6 to 24 carbon atoms (in the case of a divalent linking group, an arylene group), an ether group, a carbonyl group, or a combination thereof. In addition, in a case where Ra and Rb represent a linking group, the following linking group L may be used as the linking group.

It is preferable that the linking group represented by Ra and Rb is a linking structure formed of a carbon atom, an oxygen atom, or a hydrogen atom. Alternatively, it is preferable that the linking group represented by Ra and Rb is a structural unit including the following repeating unit (b-15). In a case where Ra and Rb represent a linking group, the number of atoms forming the linking group or the number of linking atoms has the same definition as that of the linking group L described below.

In a case where Ra represents a monovalent substituent, examples of the monovalent substituent include examples of the substituent T described below. In particular, an alkyl group, an alkenyl group, or an aryl group is preferable. In this case, in a case where the linking group L is interposed for substitution, the linking group L may be interposed in the substituent.

Alternatively, in a case where Ra represents a monovalent substituent, it is preferable that the linking group is a structure represented by -Rb-Rc or a structural unit including the following repeating unit (b-15). Here, Rc represents examples of the substituent T described below. In particular, an alkyl group, an alkenyl group, or an aryl group is preferable.

In this case, it is preferable that each of Ra and Rb includes at least a linear hydrocarbon structural unit having 1 to 30 carbon atoms (preferably an alkylene group), and it is more preferable that each of Ra and Rb includes the above-described linear hydrocarbon structure S. In addition, each of Ra to Rc may have a linking group or a substituent, and examples thereof include the linking group L or the substituent T described below.

It is preferable that the above-described macromonomer A includes a repeating unit represented by Formula (b-15).

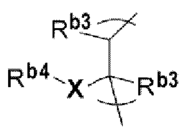
(b−15)

In the formula, Rb4 represents a hydrogen atom or the substituent T described below. Among these, a hydrogen atom, an alkyl group, an alkenyl group, or an aryl group is preferable. In a case where $R^{b4}$ represents an alkyl group, an alkenyl group, or an aryl group, $R^{b4}$ may further have the substituent T described below, for example, a halogen atom or a hydroxy group.

X represents a linking group, and examples thereof include examples of the linking group L. Among these, an

ether group, a carbonyl group, an imino group, an alkylene group, an arylene group, or a combination thereof is preferable. Specific examples of the linking group relating to the combination include linking groups formed of a carbonyloxy group, an amide group, an oxygen atom, a carbon atom, and a hydrogen atom. In a case where $R^{b4}$ and X include carbon, the preferable number of carbon atoms is the same as that of the substituent T described below and the linking group L. The preferable number of atoms forming the linking group or the preferable number of linking atoms is the same as that of the substituent T described below and the linking group L.

In addition, examples of the macromonomer A include the repeating unit having the above-described polymerizable group, a (meth)acrylate constitutional unit such as Formula (b-15), and an alkylene chain (for example, an ethylene chain) which may have a halogen atom (for example, a fluorine atom). In this case, an ether group (O) or the like may be interposed in the alkylene chain.

Examples of the substituent include a structure in which any substituent is positioned at a terminal of the above-described linking group. Examples of the terminal substituent include the substituent T described below. Among these, examples of $R^1$ are preferable.

A substituent (the same shall be applied to a linking group) which is not specified in the present specification regarding whether to be substituted or unsubstituted may have any substituent. The same shall be applied to a compound which is not specified in the present specification regarding whether to be substituted or unsubstituted. Preferable examples of the substituent include a substituent T described below.

Examples of the substituent T are as follows:

an alkyl group (preferably an alkyl group having 1 to 20 carbon atoms, for example, methyl, ethyl, isopropyl, t-butyl, pentyl, heptyl, 1-ethylpentyl, benzyl, 2-ethoxyethyl, or 1-carboxymethyl); an alkenyl group (preferably an alkenyl group having 2 to 20 carbon atoms, for example, vinyl, allyl, or oleyl); an alkynyl group (preferably an alkynyl group having 2 to 20 carbon atoms, for example, ethynyl, butadiynyl, or phenyl-ethynyl); a cycloalkyl group (preferably a cycloalkyl group having 3 to 20 carbon atoms, for example, cyclopropyl, cyclopentyl, cyclohexyl, or 4-methylcyclohexyl); an aryl group (preferably an aryl group having 6 to 26 carbon atoms, for example, phenyl, 1-naphthyl, 4-methoxyphenyl, 2-chlorophenyl, or 3-methylphenyl); a heterocyclic group (preferably a heterocyclic group having 2 to 20 carbon atoms and more preferably a 5- or 6-membered heterocyclic group having at least one oxygen atom, sulfur atom, or nitrogen atom, for example, tetrahydropyran, tetrahydrofuran, 2-pyridyl, 4-pyridyl, 2-imidazolyl, 2-benzimidazolyl, 2-thiazolyl, or 2-oxazolyl); an alkoxy group (preferably an alkoxy group having 1 to 20 carbon atoms, for example, methoxy, ethoxy, isopropyloxy, or benzyloxy); an aryloxy group (preferably an aryloxy group having 6 to 26 carbon atoms, for example, phenoxy, 1-naphthyloxy, 3-methylphenoxy, or 4-methoxyphenoxy); an alkoxycarbonyl group (preferably an alkoxycarbonyl group having 2 to 20 carbon atoms, for example, ethoxycarbonyl or 2-ethylhexyloxycarbonyl); an aryloxycarbonyl group (preferably an aryloxycarbonyl group having 6 to 26 carbon atoms, for example, phenoxycarbonyl, 1-naphthyloxycarbonyl, 3-methylphenoxycarbonyl, or 4-methoxyphenoxycarbonyl); an amino group (preferably an amino group having 0 to 20 carbon atoms, an alkylamino group, or an arylamino group, for example, amino, N,N-dimethylamino, N,N-diethylamino, N-ethylamino, or anilino); a sulfamoyl group (preferably a sulfamoyl group having 0 to 20 carbon atoms, for example, N,N-dimethylsulfamoyl or N-phenylsufamoyl); an acyl group (an alkylcarbonyl group, an alkenylcarbonyl group, an alkynylcarbonyl group, an arylcarbonyl group, or a heterocyclic carbonyl group, preferably an acyl group having 1 to 20 carbon atoms, for example, acetyl, propionyl, butyryl, octanoyl, hexadecanoyl, acryloyl, methacryloyl, crotonoyl, benzoyl, naphthoyl, or nicotinoyl); an acyloxy group (an alkylcarbonyloxy group, an alkenylcarbonyloxy group, an alkynylcarbonyloxy group, an arylcarbonyloxy group, or a heterocyclic carbonyloxy group, preferably an acyloxy group having 1 to 20 carbon atoms, for example, acetyloxy, propionyloxy, butyryloxy, octanoyloxy, hexadecanoyloxy, acryloyloxy, methacryloyloxy, crotonoyloxy, benzoyloxy, naphthoyloxy, or nicotinoyloxy); an aryloyloxy group (preferably an aryloyloxy group having 7 to 23 carbon atoms, for example, benzoyloxy);a carbamoyl group (preferably a carbamoyl group having 1 to 20 carbon atoms, for example, N,N-dimethylcarbamoyl or N-phenylcarbamoyl); an acylamino group (preferably an acylamino group having 1 to 20 carbon atoms, for example, acetylamino or benzoylamino); an alkylthio group (preferably an alkylthio group having 1 to 20 carbon atoms, for example, methylthio, ethylthio, isopropylthio, or benzylthio); an arylthio group (preferably an arylthio group having 6 to 26 carbon atoms, for example, phenylthio, 1-naphthylthio, 3-methylphenylthio, or 4-methoxyphenylthio); an alkylsulfonyl group (preferably an alkylsulfonyl group having 1 to 20 carbon atoms, for example, methylsulfonyl or ethylsulfonyl), an arylsulfonyl group (preferably an arylsulfonyl group having 6 to 22 carbon atoms, for example, benzenesulfonyl), an alkylsilyl group (preferably an alkylsilyl group having 1 to 20 carbon atoms, for example, monomethylsilyl, dimethylsilyl, trimethylsilyl, or triethylsilyl); an arylsilyl group (preferably an arylsilyl group having 6 to 42 carbon atoms, for example, triphenylsilyl), a phosphoryl group (preferably a phosphate group having 0 to 20 carbon atoms, for example, $-OP(=O)(R^P)_2$), a phosphonyl group (preferably a phosphonyl group having 0 to 20 carbon atoms, for example, $-P(=O)(R^P)_2$), a phosphinyl group (preferably a phosphinyl group having 0 to 20 carbon atoms, for example, $-P(R^P)_2$), a sulfo group (sulfonate group), a hydroxy group, a sulfanyl group, a cyano group, and a halogen atom (for example, a fluorine atom, a chlorine atom, a bromine atom, or an iodine atom).

In addition, each exemplary group of the substituent T may be further substituted with the substituent T.

In a case where a compound or a substituent, a linking group, or the like includes, for example, an alkyl group,

an alkylene group, an alkenyl group, an alkenylene group, an alkynyl group, and/or an alkynylene group, these groups may be cyclic or chained, may be linear or branched, and may be substituted or unsubstituted as described above.

In a case where each of the substituents defined in the present specification is substituted in a state where the linking group L described below is interposed in a range where the effects of the present invention are exhibited, the linking group L may be interposed in the structure. For example, the following heterocyclic linking group may be further interposed in the structure of an alkyl group, an alkylene group, an alkenyl group, an alkenylene group, or the like.

As the linking group L, a hydrocarbon linking group [an alkylene group having 1 to 10 carbon atoms (more preferably 1 to 6 carbon atoms and still more preferably 1 to 3 carbon atoms), an alkenylene group having 2 to 10 carbon atoms (more preferably 2 to 6 carbon atoms still more preferably 2 to 4 carbon atoms), an alkynylene group having 2 to 10 carbon atoms (more preferably 2 to 6 carbon atoms still more preferably 2 to 4 carbon atoms), or an arylene group having 6 to 22 carbon atoms (more preferably 6 to 10 carbon atoms)], a heterocyclic linking group [a carbonyl group (-CO-), a thiocarbonyl group (-CS-), an ether group (-O-), a thioether group (-S-), an imino group ($-NR^{N}-$), an imine linking group ($R^N$-N=C<, $-N=C(R^N)-$), a sulfonyl group ($-SO_2-$), a sulfinyl group (-SO-), a phosphate linking group (-O-P(OH)(O)-O-), a phosphonate linking group (-P(OH)(O)-O-), or a divalent heterocyclic group], or a linking group including a combination thereof is preferable. In a case where a ring is formed by condensation, the above-described hydrocarbon linking group may be linked by appropriately forming a double bond or a triple bond. As the formed ring, a 5-membered ring or a 6-membered ring is preferable. As the 5-membered ring, a nitrogen-containing 5-membered ring is preferable, and examples of a compound forming the ring include pyrrole, imidazole, pyrazole, indazole, indole, benzoimidazole, pyrrolidine, imidazolidine, pyrazolidine, indoline, carbazole, and a derivative thereof. Examples of the 6-membered ring include piperidine, morpholine, piperazine, a derivative thereof. In addition, in a case where a compound or a substituent, a linking group, or the like contains, for example, an aryl group or a heterocyclic group, these groups may have a monocyclic or fused ring and may be substituted or unsubstituted as described above.

$R^N$ represents a hydrogen atom or a substituent, and the substituent has the same definition as that of the substituent T. As the substituent, an alkyl group (having preferably 1 to 24 carbon atoms, more preferably 1 to 12 carbon atoms, still more preferably 1 to 6 carbon atoms, and still more preferably 1 to 3 carbon atoms), an alkenyl group (having preferably 2 to 24 carbon atoms, more preferably 2 to 12 carbon atoms, still more preferably 2 to 6 carbon atoms, and still more preferably 2 or 3 carbon atoms), an alkynyl group (having preferably 2 to 24 carbon atoms, more preferably 2 to 12 carbon atoms, still more preferably 2 to 6 carbon atoms, and still more preferably 2 or 3 carbon atoms), an aralkyl group (having preferably 7 to 22 carbon atoms, more preferably 7 to 14 carbon atoms, and still more preferably 7 to 10 carbon atoms), or an aryl group (having preferably 6 to 22 carbon atoms, more preferably 6 to 14 carbon atoms, and still more preferably 6 to 10 carbon atoms) is preferable.

$R^P$ represents a hydrogen atom, a hydroxy group, or a substituent. As the substituent, an alkyl group (having preferably 1 to 24 carbon atoms, more preferably 1 to 12 carbon atoms, still more preferably 1 to 6 carbon atoms, and still more preferably 1 to 3 carbon atoms), an alkenyl group (having preferably 2 to 24 carbon atoms, more preferably 2 to 12 carbon atoms, still more preferably 2 to 6 carbon atoms, and still more preferably 2 or 3 carbon atoms), an alkynyl group (having preferably 2 to 24 carbon atoms, more preferably 2 to 12 carbon atoms, still more preferably 2 to 6 carbon atoms, and still more preferably 2 or 3 carbon atoms), an aralkyl group (having preferably 7 to 22 carbon atoms, more preferably 7 to 14 carbon atoms, and still more preferably 7 to 10 carbon atoms), an aryl group (having preferably 6 to 22 carbon atoms, more preferably 6 to 14 carbon atoms, and still more preferably 6 to 10 carbon atoms), or an alkoxy group (having preferably 1 to 24 carbon atoms, more preferably 1 to 12 carbon atoms, still more preferably 1 to 6 carbon atoms, and still more preferably 1 to 3 carbon atoms), an alkenyloxy group (having preferably 2 to 24 carbon atoms, more preferably 2 to 12 carbon atoms, still more preferably 2 to 6 carbon atoms, and still more preferably 2 or 3 carbon atoms), an alkynyloxy group (having preferably 2 to 24 carbon atoms, more preferably 2 to 12 carbon atoms, still more preferably 2 to 6 carbon atoms, and still more preferably 2 or 3 carbon atoms), an aralkyloxy group (having preferably 7 to 22 carbon atoms, more preferably 7 to 14 carbon atoms, and still more preferably 7 to 10 carbon atoms), an aryloxy group (having preferably 6 to 22 carbon atoms, more preferably 6 to 14 carbon atoms, and still more preferably 6 to 10 carbon atoms) is preferable.

In the present specification, the number of atoms forming the linking group is preferably 1 to 36, more preferably 1 to 24, still more preferably 1 to 12, and still more preferably 1 to 6. The number of linking atoms in the linking group is preferably 10 or less and more preferably 8 or less. The lower limit is 1 or more. The number of linking atoms refers to the minimum number of atoms that is positioned on a path connecting predetermined structural units and relates to linking. For example, in the case of $-CH_2-C(=O)-O-$, the number of atoms forming the linking group is 6, but the number of linking atoms is 3.

Specific examples of the combination of linking groups include the following examples. An oxycarbonyl group (-OCO-), a carbonate group (-OCOO-), an amide group (-CONH-), a urethane group (-NHCOO-), a urea group (-NHCONH-), a (poly)alkyleneoxy group (-(Lr-O)s-), a carbonyl(poly)oxyalkylene group (-CO-(O-Lr)s-), a carbonyl(poly)alkyleneoxy group (-CO-(Lr-O)s-), a carbonyloxy(poly)alkyleneoxy group (-COO-(Lr-O)s-), a (poly)alkyleneimino group ($-(Lr-NR^N)s-$), an alkylene(poly)iminoalkylene group ($-Lr-(NR^N-Lr)s-$), a carbonyl(poly)iminoalkylene group ($-CO-(NR^N-Lr)s-$),

a carbonyl(poly)alkyleneimino group (-CO-(Lr-$NR^N$)s-), a (poly)ester group (-(CO-O-Lr)s-), -(O-CO-Lr)s-, -(O-Lr-CO)s-, -(Lr-CO-O)s-, -(Lr-O-CO)s-), a (poly)amide group (-(CO-$NR^N$-Lr)s-, -($NR^N$-CO-Lr)s-, -($NR^N$-Lr-CO)s-, -(Lr-CO-$NR^N$)s-, and -(Lr-$NR^N$-CO)s-). s represents an integer of 1 or more, preferably 1 to 500, and more preferably 1 to 100.

It is preferable that Lr represents an alkylene group, an alkenylene group, or an alkynylene group. The number of carbon atoms in Lr is preferably 1 to 12, more preferably 1 to 6, and still more preferably 1 to 3. A plurality of Lr's, a plurality of $R^N$'s, a plurality of $R^P$'s, a plurality of s's, or the like are not necessarily the same. The direction of the linking group is not limited to that described above and may be appropriately adjusted according to a predetermined chemical formula.

As the above-described macromonomer A, a macromonomer having an ethylenically unsaturated bond at a terminal may be used. Here, the macromonomer A consists of a polymer chain portion and a polymerizable functional group portion having an ethylenically unsaturated double bond at a terminal.

A copolymerization ratio of the component derived from the macromonomer A is not particularly limited but is preferably 1 mass% or higher, more preferably 3 mass% or higher, and still more preferably 5 mass% or higher with respect to the particle-shaped polymer A. The upper limit of the concentration is preferably 50 mass% or lower, more preferably 30 mass% or lower, and still more preferably 20 mass% or lower.

. Specification of Particle-Shaped Polymer A or the like

The number-average molecular weight of the particle-shaped polymer A is preferably 5,000 or more, more preferably 10,000 or higher, and still more preferably 30,000 or higher. The upper limit is preferably 1,000,000 or lower and more preferably 200,000 or lower.

It is preferable that the particle-shaped polymer A according to the embodiment of the present invention is amorphous. In the present invention, the polymer "being amorphous" typically refers to a polymer that shows no endothermic peak caused by crystal melting during measurement using a measurement method of a glass transition temperature described in paragraph "0143" of JP2015-088486A. The Tg of the above-described polymer is preferably 50°C or lower, more preferably 30°C or lower, still more preferably 20°C or lower, and still more preferably 0°C or lower. The lower limit value s preferably -80°C or higher, more preferably -70°C or higher, and still more preferably -60°C or higher. Unless specified otherwise, the glass transition temperature of the polymer forming the particle-shaped polymer A according to the embodiment of the present invention is a value obtained using the above-described measurement method.

In the prepared all-solid state secondary battery, the glass transition temperature can be measured, for example, by disassembling the battery, putting an electrode into water to disperse a material thereof, filtering the dispersion liquid, collecting the remaining solid, and measuring the glass transition temperature of the solid using the above-described Tg measurement method.

(ii) Particle-Shaped Polymer B

The particle-shaped polymer B includes a component derived from a macromonomer B having a mass average molecular weight of 1,000 or higher and lower than 1,000,000 and a ring structure of two or more rings.

It is preferable that the particle-shaped polymer B is polyamide, polyimide, polyurea, polyurethane, or an acrylic resin.

•Monomer used for Synthesis of Particle-Shaped Polymer B

A monomer other than the macromonomer B used for the synthesis of the particle-shaped polymer B is not particularly limited. It is preferable that the monomer is a monomer having a polymerizable unsaturated bond. For example, various vinyl monomers and/or acrylic monomers can be used. Specifically, the monomer (a) described in the above-described particle-shaped polymer A can be adopted.

Examples of the monomer used as the synthetic raw material of the particle-shaped polymer B include the exemplary compounds represented by "A-numeral". However, the present invention is not interpreted to be limited to this configuration.

• Component derived from Macromonomer B

The component derived from the macromonomer B having a mass average molecular weight of 1000 or higher is incorporated into the particle-shaped polymer B used in the present invention. In the particle-shaped polymer B, the component derived from the macromonomer B forms a side chain with respect to the main chain.

The mass average molecular weight of the macromonomer B is preferably 2,000 or higher and more preferably

3,000 or higher. The upper limit is lower than 1,000,000 and is preferably 500,000 or lower, more preferably 100,000 or lower, and still more preferably 30,000 or lower. The particle-shaped polymer B includes the side chain having a molecular weight in the above-described range such that the polymer can be uniformly dispersed in an organic solvent more favorably and can be mixed with the solid electrolyte particles for application.

The mass average molecular weight of the macromonomer B can be measured using the same method as the method of measuring the number-average molecular weight of the macromonomer A.

The particle-shaped polymer B including the component derived from the macromonomer B exhibits the same action as that of the particle-shaped polymer A.

The SP value of the macromonomer B is preferably 10 or lower and more preferably 9.5 or lower. The lower limit value is not particularly limited, but is practically 5 or more.

In the particle-shaped polymer B, in a case where the graft portion derived from the above-described macromonomer B is the side chain and the other portion is the main chain, this main chain structure is not particularly limited. It is preferable that the macromonomer B has a polymerizable unsaturated bond. For example, the macromonomer B may have various vinyl groups or (meth)acryloyl groups. In the present invention, in particular, it is preferable that the macromonomer B has a (meth)acryloyl group.

It is preferable that the component derived from the above-described macromonomer B includes a component (repeating unit) selected from a (meth)acrylic acid component, a (meth)acrylic acid ester component, or a (meth)acrylonitrile component in the graft chain. In addition, it is preferable that the macromonomer B has a polymerizable double bond and a linear hydrocarbon structure having 6 or more carbon atoms.

It is preferable that the above-described macromonomer B has a site represented by Formula (b-1).

As the macromonomer B, a polyurea or a polyurethane including a structural portion (solvated portion) that is solvated with a hydrocarbon solvent and a structural portion (non-solvated portion) that is not solvated with a hydrocarbon solvent is also preferable. As the polyurea or the polyurethane, particles which have a long-chain alkyl group having 6 or more carbon atoms are preferable. The particles can be obtained, for example, by causing a diol compound (a so-called lipophilic diol) that includes a long-chain alkyl group having 6 or more carbon atoms, an isocyanate compound, and a polyamine (in the case of a polyurethane, polyol) compound to react with each other in a non-aqueous medium. That is, particles can be imparted to the structural portion that is solvated with a hydrocarbon solvent, for example, a long-chain alkyl group having 6 or more carbon atoms. Instead of the lipophilic diol and the isocyanate compound, a terminal NCO prepolymer consisting of these compounds may be provided for the reaction.

The lipophilic diol is a polyol having two or less functional groups, in which the molecular weight is preferably 700 or higher and lower than 5000. However, the lipophilic diol is not limited to this configuration. Specific examples of the lipophilic diol include a diol obtained by introducing about 2 or less hydroxy groups into a fat and oil using a method of converting various fats and oils into alcoholysis products using a lower alcohol and/or a glycol, a method of partially saponifying a fat and oil, a method of esterifying a hydroxy group-containing aliphatic acid using a glycol, or the like, and a fat and oil-modified polyol, a terminal alcohol-modified acrylic resin, and a terminal alcohol-modified polyester described in J. H. SAUNDERS, K. C. FRISCH, et al., POLYURETHANES, CHEMISTRY AND TECHNOLOGY PART 1, Chemistry (pp. 48 to 53, published on 1962) and the like.

Among these, examples of the hydroxy group-containing aliphatic acid include ricinoleic acid, 12-hydroxystearic acid, castor oil fatty acid, and hydrogenated castor oil fatty acid.

Examples of the terminal alcohol-modified acrylic resin include a polymer of a long-chain alkyl (meth)acrylate in which thioglycerol is used as a chain transfer agent. As the polymer of the alkyl (meth)acrylate, one or two or more alkyl (meth)acrylates having 6 or more and less than 30 carbon atoms are suitably used. An alkyl (meth)acrylate having 8 or more and less than 25 carbon atoms (preferably 10 or more and less than 20 carbon atoms) is more preferable.

As the isocyanate compound, all the typical isocyanate compound can be used. Among these, an aliphatic or alicyclic diisocyanate compound such as hexamethylene diisocyanate, hydrogenated toluene diisocyanate (hydrogenated TDI), hydrogenated diphenylmethane diisocyanate (hydrogenated MDI), or isophorone diisocyanate is more preferable.

Examples of the amine compound include ethylenediamine, diaminopropane, diaminobutane, hexamethylenediamine, trimethylhexamethylenediamine, N-aminoethylpiperazine, bis-aminopropyl piperazine, polyoxypropylenediamine, 4,4'-diaminodicyclohexylmethane, isophorone diamine, thiourea, and methyliminobispropylamine. As the amine compound, one kind may be used alone, or a mixture of two or more kinds may be used.

As the above-described macromonomer B, a macromonomer having an ethylenically unsaturated bond at a terminal may be used. Here, the macromonomer B consists of a polymer chain portion and a polymerizable functional group portion having an ethylenically unsaturated double bond at a terminal.

A copolymerization ratio of the component derived from the macromonomer B is not particularly limited but is preferably 3 mass% or higher, more preferably 10 mass% or higher, and still more preferably 20 mass% or higher with respect to the particle-shaped polymer B. The upper limit of the concentration is preferably 70 mass% or lower, more preferably 60 mass% or lower, and still more preferably 50 mass% or lower. The copolymerization ratio can be calculated

from the addition amount (amount used) of the monomer used for the synthesis of the particle-shaped polymer B. The addition amount (amount used) of the monomer that has a group having a ring structure of two or more rings is not included.

-Group having Ring Structure of Two or More Rings-

The group having a ring structure of two or more rings that is used in the present invention is not particularly limited as long as it is a group in which at least one hydrogen atom in a compound which has a group having a ring (preferably a fused ring) structure having two or more rings is replaced with a direct bond. The group having a ring structure of two or more rings is preferably a group in which at least one hydrogen atom in a compound represented by Formula (D) is replaced with a direct bond, more preferably a group in which one or two hydrogen atoms are replaced with a direct bond, and still more preferably a group in which one hydrogen atom is replaced with a direct bond.

The group formed of the compound represented by Formula (D) has excellent affinity to a carbonaceous material. Therefore, the dispersion stability of the electrode composition including the particle-shaped polymer B can be improved, and the binding properties of the electrode sheet for an all-solid state secondary battery according to the embodiment of the present invention can be improved. Along with the improvement of the dispersion stability and the improvement of the binding properties, an all-solid state secondary battery prepared using the electrode sheet for an all-solid state secondary battery according to the embodiment of the present invention has excellent cycle characteristics. From the viewpoint of improving cycle characteristics, the group having a ring structure of two or more rings is preferably a group having a ring structure of three or more rings and more preferably a group having a ring structure of four or more rings. The upper limit of the number of rings in the ring structure is not particularly limited and is preferably 18 or less, more preferably 16 or less, still more preferably 12 or less, still more preferably 8 or less, and still more preferably 6 or less.

Formula (D)

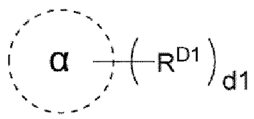

In Formula (D), a ring α represents a ring including two or more rings, $R^{D1}$ represents a substituent that is bonded to an atom forming the ring α, d1 represents an integer of 1 or more. In a case where d1 represents 2 or more, a plurality of $R^{D1}$'s may be the same as or different from each other. $R^{D1}$'s which are substituted with atoms adjacent to each other may be bonded to each other to form a ring. The number of rings in the ring α is 2 or more, more preferably 3 or more, and still more preferably 4 or more. In addition, the number of rings in the ring α is not particularly limited and is preferably 18 or less, more preferably 16 or less, still more preferably 12 or less, still more preferably 8 or less, and still more preferably 6 or less. It is preferable that the ring α includes a ring structure of a 3- or more membered ring, it is more preferable that the ring α includes a ring structure of a 4- or more membered ring, it is still more preferable that the ring α includes a ring structure of a 5- or more membered ring, it is still more preferable that the ring α includes a 6-membered ring structure. In addition, it is preferable that the ring α includes a ring structure of a 24- or less membered ring, it is more preferable that the ring α includes a ring structure of a 12- or less membered ring, it is still more preferable that the ring α includes a ring structure of an 8- or less membered ring, and it is still more preferable that the ring α includes a ring structure of a 6-membered ring.

It is preferable that the ring α includes a structure of an aliphatic hydrocarbon ring, an unsaturated hydrocarbon ring, an aromatic ring, or a heterocycle, or a combination thereof. Examples of a specific structure of the aliphatic hydrocarbon ring include cyclopropane, cyclobutane, cyclopentane, cyclohexane, cycloheptane, cyclooctane, cyclononane, cyclodecane, cycloundecane, cyclododecane, and decalin.

Examples of a specific structure of the unsaturated hydrocarbon ring include a ring structure in which a part of the aliphatic hydrocarbon ring is replaced with a double bond. Examples of the ring structure include cyclobutene, cyclopentene, cyclopentadiene, cyclohexene, cyclohexadiene, cyclooctene, and cyclooctadiene.

Examples of a specific structure of the aromatic ring include benzene, naphthalene, anthracene, pyrene, tetracene, pentacene, phenanthrene, chrysene, triphenylene, tetraphene, picene, pentaphene, perylene, helicene, and coronene.

Examples of a specific structure of the heterocycle include ethyleneimine, ethylene oxide, ethylene sulfide, acetylene oxide, azacyclobutane, 1,3-propylene oxide, trimethylene sulfide, pyrrolidine, tetrahydrofuran, tetrahydrothiophene, pyrrole, furan, thiophene, piperidine, tetrahydropyran, tetrahydrothiopyran, pyridine, hexamethyleneimine, hexamethylene oxide, hexamethylene sulfide, azatropilidene, oxacycloheptatriene, thiotropilidene, imidazole, oxazole, thiazole, imidazoline, pyrazine, morpholine, thiazine, indole, isoindole, benzoimidazole, purine, quinoline, isoquinoline, quinoxaline, cinnoline, pteridine, chromene, isocromene, acridine, xanthene, acridine, benzoquinoline, carbazole, benzo-O-cinnoline, porphyrin, chlorine, and choline.

As the ring α, a structure including cyclobutane, cyclopentane, cyclohexane, cycloheptane, cyclooctane, cyclobutene, cyclopentene, dicyclopentadiene, cyclohexene, cyclohexadiene, cyclooctene, benzene, naphthalene, anthracene, pyrene, tetracene, phenanthrene, triphenylene, pyrrolidine, tetrahydrofuran, tetrahydrothiophene, pyrrole, furan, thiophene, piperidine, pyridine, hexamethyleneimine, hexamethylene oxide, hexamethylene sulfide, imidazole, oxazole, thiazole, imidazoline, pyrazine, morpholine, thiazine, indole, isoindole, benzoimidazole, quinoline, benzoquinoline, xanthene, carbazole, or porphyrin is preferable, a structure including cyclopentane, cyclohexane, cycloheptane, cyclopentene, dicyclopentadiene, cyclohexene, cyclohexadiene, benzene, naphthalene, anthracene, pyrene, triphenylene, pyrrole, furan, thiophene, piperidine, pyridine, imidazole, oxazole, or indole is more preferable, and a structure including cyclopentane, cyclohexane, cyclohexene, or pyrene is still more preferable.

Preferable examples of the substituent represented by $R^{D1}$ include the above-described substituent T.

In addition, as the substituent represented by $R^{D1}$ =O is also preferable. Examples of the ring α having =O include a structure having anthraquinone.

As described above, in order to introduce the ring structure of two or more rings into the side chain of the particle-shaped polymer B used in the present invention and/or the side chain of the macromonomer B component, it is preferable that $R^{D1}$ has the site represented by Formula (b-1) and/or the above-described linking group L and $R^{D1}$ represents $P^1$ described below.

The particle-shaped polymer B used in the present invention may have the above-described group having the ring structure of two or more rings at the main chain, a side chain, or a terminal of the polymer.

Hereinafter, a case where the compound having the ring structure of two or more rings is a compound represented by Formula (D) will be described as an example.

"Being included at the main chain of the polymer" represents that the compound represented by Formula (D) is incorporated into the polymer as a structure in which at least two hydrogen atoms in the compound represented by Formula (D) are replaced with a direct bond, and functions as the main chain as a repeating structure of the polymer. On the other hand, "being included at the side chain of the polymer" represents being incorporated into the polymer as a structure in which one hydrogen atom in the compound represented by Formula (D) is replaced with a direct bond. In addition, "being included at the terminal of the polymer" represents being incorporated into the polymer as a structure in which one hydrogen atom in the compound represented by Formula (D) is replaced with a direct bond, and functioning as a polymer chain. Here, even in a case where the group is included at a plurality of main chains, side chains, or terminals of the polymer, the same can be applied.

In the present invention, that the particle-shaped polymer B includes the group having the ring structure of two or more rings preferably at the main chain or the side chain, more preferably at the side chain, and still more preferably the side chain of the component derived from the macromonomer B (the graft chain having the component derived from the macromonomer B). "Being included at the side chain of the macromonomer B component" represents that a repeating unit having, as a side chain, a structure in which one hydrogen atom in the compound represented by Formula (D) is replaced with a direct bond is incorporated into the macromonomer B component as one repeating unit forming the macromonomer B component.

The group having the ring structure of two or more rings is incorporated into the side chain of the particle-shaped polymer B used in the present invention such that the mobility of the group having the ring structure of two or more rings is improved and thus adsorption is improved. As a result, binding properties between the solid particles in the all-solid state secondary battery can be further improved. The group having the ring structure of two or more rings is incorporated into the side chain of the macromonomer B component of the particle-shaped polymer B used in the present invention such that the proportion of the group having the ring structure of two or more rings present on the surfaces of the particle-shaped polymer B increases, and binding properties between the solid particles in the all-solid state secondary battery can be further improved.

In the present invention, the content of the repeating unit that has the group having the ring structure of two or more rings is preferably 10 mass% to 85 mass%, more preferably 15 mass% to 80 mass%, and still more preferably 18 mass% to 70 mass% with respect to 100 mass% of the particle-shaped polymer B. It is preferable that the content of the repeating unit that has the group having the ring structure of two or more rings is in the above-described range such that the adsorption and the dispersion stability of the particle-shaped polymer B are simultaneously achieved.

The content of the repeating unit that has the group having the ring structure of two or more rings can be calculated from the addition amount (amount used) of the monomer used for the synthesis of the particle-shaped polymer B. In Table 1 of WO2017/131093A, among components represented by M1 to M4 and MM, the total content of components that have the group having the ring structure of two or more rings refers to the content of the repeating unit that has the group having the ring structure of two or more rings. For example, in BP-5 in Table 1, M4 (B-5) and MM (MM-2) have the group having the ring structure of two or more rings, and the content of the repeating unit that has the group having the ring structure of two or more rings is 40 mass%.

In addition, in the present invention, it is preferable that the compound represented by Formula (D) is at least

one of a compound represented by Formula (1) or an aliphatic hydrocarbon represented by Formula (2).

The compound represented by Formula (1) and the aliphatic hydrocarbon represented by Formula (2) have excellent affinity to the carbonaceous material as the negative electrode active material. Therefore, the dispersion stability of the electrode composition including the above-described compound is further improved, and the binding properties of the electrode sheet for an all-solid state secondary battery according to the embodiment of the present invention can be improved. In addition, along with the improvement of the dispersion stability and the improvement of the binding properties, cycle characteristics of the all-solid state secondary battery prepared using the electrode composition can be improved.

Formula (1)

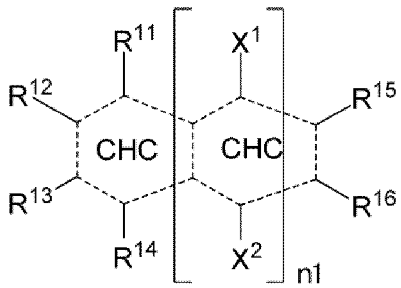

In Formula (1), CHC represents a benzene ring, a cyclohexane ring, a cyclohexene ring, or a cyclohexadiene ring. n1 represents an integer of 0 to 8. $R^{11}$ to $R^{16}$ each independently represent a hydrogen atom or a substituent. In a case where CHC represents a group other than a benzene ring, the ring structure may have a hydrogen atom at a position other than $R^{11}$ to $R^{16}$. $X^1$ and $X^2$ each independently represent a hydrogen atom or a substituent. Here, in $R^{11}$ to $R^{16}$, $X^1$, and $X^2$, groups adjacent to each other may be bonded to each other to form a 5-or 6-membered ring. In a case where n1 represents 0, one substituent represented by any one of $R^{11}$ to $R^{16}$ is $-(CHC^1)_{m1}$-Rx, or any two or $R^{11}$ to $R^{16}$ may be bonded to form $-(CHC^1)_{m1}-$. Here, $CHC^1$ represents a phenylene group, a cycloalkylene group, or a cycloalkenylene group, m1 represents an integer of 2 or more, and Rx represents a hydrogen atom or a substituent. In addition, in a case where n1 represents 1, among $R^{11}$ to $R^{16}$, $X^1$, and $X^2$, at least two adjacent to each other are bonded to each other to form a benzene ring, a cyclohexane ring, a cyclohexene ring, or a cyclohexadiene ring.

Examples of the substituent represented by $R^{11}$ to $R^{16}$ include an alkyl group, an aryl group, a heteroaryl group, and an alkenyl group, an alkynyl group, an alkoxy group, an aryloxy group, a heteroaryloxy group, an alkylthio group, an arylthio group, a heteroarylthio group, an acyl group, an acyloxy group, an alkoxycarbonyl group, an aryloxycarbonyl group, an alkylcarbonyloxy group, an arylcarbonyloxy group, a hydroxy group, a carboxy group or a salt thereof, a sulfo group or a salt thereof, an amino group, a mercapto group (sulfanyl group), an amide group, a formyl group, a cyano group, a halogen atom, a (meth)acryl group, a (meth)acryloyloxy group, a (meth)acrylamide group, an epoxy group, and an oxetanyl group.

Hereinafter, in the following description, a formyl group is considered as an acyl group.

The number of carbon atoms in the alkyl group is preferably 1 to 30, more preferably 1 to 25, and still more preferably 1 to 20. Specific examples of the alkyl group include methyl, ethyl, propyl, isopropyl, butyl, t-butyl, octyl, dodecyl, stearyl, benzyl, naphthylmethyl, pyrenylmethyl, and pyrenylbutyl. It is more preferable that the alkyl group has an unsaturated carbon bond of a double bond or a triple bond.

The number of carbon atoms in the aryl group is preferably 6 to 30, more preferably 6 to 26, and still more preferably 6 to 15. Specific examples of the aryl group include phenyl, naphthyl, anthracene, terphenyl, tolyl, xylyl, methoxyphenyl, cyanophenyl, and nitrophenyl.

The number of carbon atoms in the heteroaryl group is preferably 6 to 30, more preferably 6 to 26, and still more preferably 6 to 15. Specific examples of the heteroaryl group include furan, pyridine, thiophene, pyrrole, triazine, imidazole, tetrazole, pyrazole, thiazole, and oxazole.

The number of carbon atoms in the alkenyl group is preferably 2 to 30, more preferably 2 to 25, and still more preferably 2 to 20. Specific examples of the alkenyl group include vinyl and propenyl.

The number of carbon atoms in the alkynyl group is preferably 2 to 30, more preferably 2 to 25, and still more preferably 2 to 20. Specific examples of the alkynyl group include ethynyl, propynyl, and phenylethynyl.

- ·Alkoxy group: the alkyl group in the alkoxy group is the same as the above-described alkyl group.
- ·Aryloxy group: the aryl group in the aryloxy group is the same as the above-described aryl group.
- ·Heteroaryloxy group: the heteroaryl group in the heteroaryloxy group is the same as the above-described heteroaryl group.

·Alkylthio Group: the alkyl group in the alkylthio group is the same as the above-described alkyl group.
·Arylthio group: the aryl group in the arylthio group is the same as the above-described aryl group.
·Heteroarylthio group: the heteroaryl group in the heteroarylthio group is the same as the above-described heteroaryl group.
·Acyl group: the number of carbon atoms is preferably 1 to 30, more preferably 1 to 25, and still more preferably 1 to 20. The acyl group may be a formyl group, an aliphatic carbonyl group, an aromatic carbonyl group, or a heterocyclic carbonyl group. Examples of the acyl group are as follows.

Formyl, acetyl (methylcarbonyl), benzoyl (phenylcarbonyl), ethylcarbonyl, acryloyl, methacryloyl, octylcarbonyl, dodecylcarbonyl (stearic acid residue), a linoleic acid residue, and a linolenic acid residue.

·Acyloxy group: the acyl group in the acyloxy group is the same as the above-described acyl group.
·Alkoxycarbonyl group: the alkyl group in the alkoxycarbonyl group is the same as the above-described alkyl group.
·Aryloxycarbonyl group: the aryl group in the aryloxycarbonyl group is the same as the above-described aryl group.
·Alkylcarbonyloxy group: the alkyl group in the alkylcarbonyloxy group is the same as the above-described alkyl group.
·Arylcarbonyloxy group: the aryl group in the arylcarbonyloxy group is the same as the above-described aryl group.

In general, these substituents can be introduced using an electrophilic substitution reaction, a nucleophilic substitution reaction, halogenation, sulfonation, or diazotization of the aromatic hydrocarbon represented by Formula (1) or a combination thereof. Examples of the reaction include alkylation by the Friedel-Crafts reaction, acylation by the Friedel-Crafts reaction, the Vilsmeier reaction, and a transition metal catalyst coupling reaction.
n1 represents more preferably an integer of 0 to 6 and still more preferably an integer of 1 to 4.
The compound represented by Formula (1) is preferably a compound represented by Formula (1-1) or (1-2).

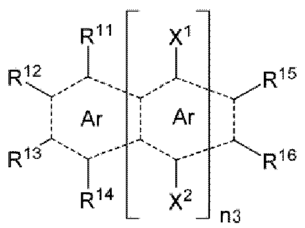

Formula (1-1)

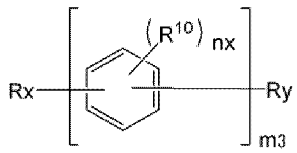

Formula (1-2)

In Formula (1-1), Ar represents a benzene ring. $R^{11}$ to $R^{16}$, $X^1$, and $X^2$ have the same definitions and the same preferable ranges as those of the examples described regarding $R^{11}$ to $R^{16}$ and $X^1$ and $X^2$ in Formula (1). n3 represents an integer of 1 or more. In a case where n3 represents 1, among $R^{11}$ to $R^{16}$ and $X^1$ and $X^2$, at least two adjacent to each other are bonded to each other to form a benzene ring.
Rx in Formula (1-2) has the same definition and the same preferable range as Rx in Formula (1). $R^{10}$ represents a substituent, and nx represents an integer of 0 to 4. m3 represents an integer of 3 or more. Ry represents a hydrogen atom or a substituent. Here, Rx and Ry may be bonded to each other.
n3 represents preferably an integer of 1 to 6, more preferably an integer of 1 to 3, and still more preferably an integer of 1 or 2.
m3 represents preferably an integer of 3 to 10, more preferably an integer of 3 to 8, and still more preferably an integer of 3 to 5.
Specific examples of the compound represented by Formula (1) include a compound having a structure of naphthalene, anthracene, phenanthracene, pyrene, tetracene, tetraphene, chrysene, triphenylene, pentacene, pentaphene, perylene, pyrene, benzo[a]pyrene, coronene, anthanthrene, corannulene, ovalene, graphene, cycloparaphenylene, polyparaphenylene, or cyclophene. However, the present invention is not limited to Examples.

Formula (2)

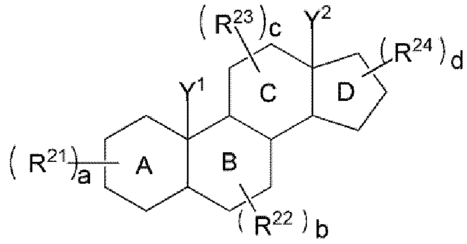

In Formula (2), $Y^1$ and $Y^2$ each independently represent a hydrogen atom, a methyl group, or a formyl group. $R^{21}$, $R^{22}$, $R^{23}$, and $R^{24}$ each independently represent a substituent, and a, b, c, and d represent an integer of 0 to 4.

Here, an A ring may be a saturated ring, an unsaturated ring having one or two double bonds, or an aromatic ring, and a B ring and a C ring may be an unsaturated ring having one or two double bonds. In a case where a, b, c, or d represents an integer of 2 to 4, substituents adjacent to each other may be bonded to form a ring.

The aliphatic hydrocarbon represented by Formula (2) is a compound having a steroid skeleton.

Here, carbon numbering in the steroid skeleton is as follows.

Carbon Numbering in Steroid Skeleton

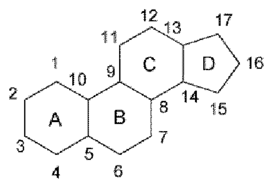

First, the aliphatic hydrocarbon represented by Formula (2) will be described.

The substituent represented by $R^{21}$, $R^{22}$, $R^{23}$, and $R^{24}$ may be any substituent. In particular, an alkyl group, an alkenyl group, a hydroxy group, a formyl group, an acyl group, a carboxy group or a salt thereof, a (meth)acryl group, a (meth)acryloyloxy group, a (meth)acrylamide group, an epoxy group, or an oxetanyl group is preferable. In addition, an =O group in which two substituents are formed common to the same carbon atom is preferable.

The alkyl group is preferably an alkyl group having 1 to 12 carbon atoms and may have a substituent. The substituent may be any substituent, and examples thereof include an alkyl group, an alkenyl group, a hydroxy group, a formyl group, an acyl group, a carboxy group, an alkoxycarbonyl group, a carbamoyl group, and a sulfo group. It is more preferable that the alkyl group has an unsaturated carbon bond of a double bond or a triple bond.

The alkenyl group is preferably an alkenyl group having 1 to 12 carbon atoms and may have a substituent. The substituent may be any substituent, and examples thereof include an alkyl group, an alkenyl group, a hydroxy group, a formyl group, an acyl group, a carboxy group, an alkoxycarbonyl group, a carbamoyl group, and a sulfo group.

It is preferable that $R^{21}$ is substituted with carbon number 3, it is preferable that $R^{22}$ is substituted with carbon number 6 or 7, it is preferable that $R^{23}$ is substituted with carbon number 11 or 12, and it is preferable that $R^{24}$ is substituted with carbon number 17.

It is preferable that $Y^1$ and $Y^2$ represent a hydrogen atom or a methyl group.

It is preferable that a, b, c, and d represent an integer of 0 to 2.

In a case where the A ring represents an unsaturated ring, it is preferable that the double bond is a bond of carbon numbers 4 and 5. In a case where the B ring represents an unsaturated ring, it is preferable that the double bond is a bond of carbon numbers 5 and 6 or a bond of carbon numbers 6 and 7. In a case where the C ring represents an unsaturated ring, it is preferable that the double bond is a bond of carbon numbers 8 and 9.

The compound represented by Formula (2) may include any stereoisomer. In a case where a downward direction on the paper plane is represented by $\alpha$ and an upward direction on the paper plane is represented by $\beta$, a bonding direction of a substituent, may be any of $\alpha$ or $\beta$ or a mixture thereof. In addition, the configuration of the A/B rings, the configuration of the B/C rings, or the configuration of the C/D rings may be any one of a trans configuration or a cis configuration or may be a mixed configuration thereof.

In the present invention, it is preferable that the sum of a to d represent 1 or more and any one of $R^{21}$, $R^{22}$, $R^{23}$, or $R^{24}$ represent a hydroxy group or an alkyl group having a substituent.

It is preferable that the compound having a steroid skeleton is steroid as described below.

In the following description, a substituent having a steroid ring is sterically controlled.

In order from the left, the substituents are a cholestane, a cholane, a pregnane, an androstane, and an estrane.

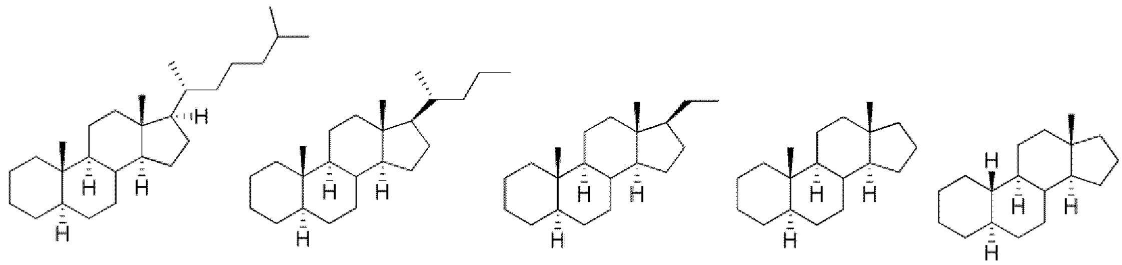

Specific examples of the aliphatic hydrocarbon represented by Formula (2) include a compound having a structure of cholesterol, ergosterol, testosterone, estradiol, aldosterol, aldosterone, hydrocortisone, stigmasterol, thymosterol, lanosterol, 7-dehydrodesmosterol, 7-dehydrocholesterol, cholanic acid, cholic acid, lithocholic acid, deoxycholic acid, sodium deoxycholate, lithium deoxycholate, hyodeoxycholic acid, chenodeoxycholic acid, ursodeoxycholic acid, dehydrocholic acid, phocaecholic acid, or hyocholic acid. However, the present invention is not limited to Examples.

The aliphatic hydrocarbon represented by Formula (2) may be a commercially available product.

In the compound represented by Formula (D), it is preferable that at least one $R^{D1}$ represents $L^{1a}$-$P^1$ and or at least two $R^{D1}$'s each independently represent $L^{2a}$-$P^2$ or $L^{3a}$-$P^2$, and it is more preferable that at least one $R^{D1}$ represents $L^{1a}$-$P^1$. In Formula (1), it is preferable that at least one of $R^{11}$ to $R^{16}$, $X^1$, or $X^2$ represents $L^{1a}$-$P^1$ or at least two of $R^{11}$ to $R^{16}$, $X^1$, and $X^2$ each independently represent $L^{2a}$-$P^2$ or $L^{3a}$-$P^2$, and it is more preferable that at least one of $R^{11}$ to $R^{16}$, $X^1$, or $X^2$ represents $L^{1a}$-$P^1$. In Formula (2), it is preferable that at least one of $R^{21}$, $R^{22}$, $R^{23}$, and $R^{24}$ represents $L^{1a}$-$P^1$ and or at least two of $R^{21}$, $R^{22}$, $R^{23}$, and $R^{24}$ each independently represent $L^{2a}$-$P^2$ or $L^{3a}$-$P^2$, and it is more preferable that at least one of $R^{21}$, $R^{22}$, $R^{23}$, and $R^{24}$ represents $L^{1a}$-$P^1$.

$L^{1a}$-$P^1$ is bonded to a ring at $L^{1a}$. $L^{2a}$-$P^2$ and $L^{3a}$-$P^2$ are bonded to rings at $L^{2a}$ and $L^{3a}$, respectively.

$L^{1a}$ represents a single bond or a linking group. As the linking group, a hydrocarbon linking group [an alkylene group having 1 to 10 carbon atoms (more preferably 1 to 6 carbon atoms and still more preferably 1 to 3 carbon atoms), an alkenylene group having 2 to 10 carbon atoms (more preferably 2 to 6 carbon atoms still more preferably 2 to 4 carbon atoms), an alkynylene group having 2 to 10 carbon atoms (more preferably 2 to 6 carbon atoms still more preferably 2 to 4 carbon atoms), an arylene group having 6 to 22 carbon atoms (more preferably 6 to 10 carbon atoms), or a combination thereof], a heterocyclic linking group [a carbonyl group (-CO-), a thiocarbonyl group (-CS-), an ether group (-O-), a thioether group (-S-), an imino group ($-NR^{NA}-$), an ammonium linking group ($-NR^{Na}2^+-$), a polysulfide group (the number of S's is 1 to 8), an imine linking group ($R^{Na}$-N=C<, -N=C($R^{Na}$)-), a sulfonyl group ($-SO_2-$), a sulfinyl group (-SO-), a phosphate linking group (-O-P(OH)(O)-O-), a phosphonate linking group (-P(OH)(O)-O-), or a combination thereof], or a linking group including a combination thereof is preferable. $R^{Na}$ in $L^{1a}$ represents a hydrogen atom or an alkyl group having 1 to 12 carbon atoms (preferably 1 to 4 carbon atoms and more preferably 1 or 2 carbon atoms).

In a case where a ring is formed by condensation of a substituent or a linking group, the above-described hydrocarbon linking group may be linked by appropriately forming a double bond or a triple bond. As the formed ring, a 5-membered ring or a 6-membered ring is preferable. As the 5-membered ring, a nitrogen-containing 5-membered ring is preferable, and examples of a compound forming the ring include pyrrole, imidazole, pyrazole, indazole, indole, benzoimidazole, pyrrolidine, imidazolidine, pyrazolidine, indoline, carbazole, and a derivative thereof. Examples of the 6-membered ring include piperidine, morpholine, piperazine, a derivative thereof. In addition, in a case where a compound or a substituent, a linking group, or the like contains, for example, an aryl group or a heterocyclic group, these groups may have a monocyclic or fused ring and may be substituted or unsubstituted as described above.

In a case where $L^{1a}$ represents a linking group consisting of a combination of linking groups, the number of the linking groups used in combination is not particularly limited and is, for example, preferably 2 to 30, more preferably 2 to 20, still more preferably 2 to 10, and still more preferably 2 to 4. Examples of the linking group consisting of a combination of linking groups include an alkylene group having 1 to 6 carbon atoms (having preferably 1 to 4 carbon atoms), an arylene group having 6 to 24 carbon atoms (having preferably 6 to 10 carbon atoms), an ether group (-O-), a thioether group (-S-), an imino group ($NR^{Na}$), a carbonyl group, a (poly)alkyleneoxy group, a (poly)ester group, a (poly)amide group, and a group relating to a combination thereof. In particular, an alkylene group having 1 to 4 carbon atoms, an ether group (-O-), an imino group ($NR^{Na}$), a carbonyl group, a (poly)alkyleneoxy group, a (poly)ester group, or a group relating to a combination thereof is more preferable. In addition, a linking group having an exemplary monomer described below can be used.

In a case where $L^{1a}$ represents a group which may have a substituent, the group may further have a substituent. Examples of the substituent include the above-described substituent T. In particular, a halogen atom (preferably, a fluorine atom or a chlorine atom), an alkyl group, an acyl group, a carbamoyl group, or a hydroxy group is preferable.

It is preferable that $L^{1a}$ has a certain length or more. Specifically, the minimum number of atoms linking the ring $\alpha$ (an atom bonded to $L^{1a}$ among the atoms forming the ring structure represented by Formula (1) or (2)) and $P^1$ to each other is preferably 2 or more, more preferably 4 or more, still more preferably 6 or more, and still more preferably 8 or more. The upper limit is preferably 1000 or less, more preferably 500 or less, still more preferably 100 or less, and still more preferably 20 or less.

$L^{2a}$ and $L^{3a}$ have the same definition as that of $L^{1a}$ and may be the same as or different from each other.

$P^1$ represents a polymerizable site. The polymerizable site is a group that is polymerizable through a polymerization reaction, and examples thereof include a group capable of chain polymerization, for example, an ethylenically unsaturated group, an epoxy group, or an oxetanyl group. In addition, for example, a group including two or more of a hydroxy group, an amino group, a carboxy group, an isocyanate group, and the like, or a group including one or more dicarboxylic acid anhydride structures as a group for condensation polymerization can be used.

Examples of the ethylenically unsaturated group include a (meth)acryloyl group, a (meth)acryloyloxy group, a (meth)acrylamide group, and a vinyl group (including an allyl group).

As $P^1$, a partial structure including one or more ethylenically unsaturated groups, one or more epoxy groups, one or more oxetanyl groups, or one or more dicarboxylic acid anhydrides or including two or more hydroxy groups, two or more amino groups, or two or more isocyanate groups is preferable, a partial structure including one or more (meth)acryloyl groups, one or more (meth)acryloyloxy groups, one or more (meth)acrylamide groups, or one or more vinyl groups or including two or more hydroxy groups, two or more amino groups, or two or more isocyanate groups is more preferable, and a partial structure including a (meth)acryloyl group or a (meth)acryloyloxy group is still more preferable.

Examples of $P^2$ include a group capable of condensation polymerization, for example, a hydroxy group, an amino group, a carboxy group, an isocyanate group, or a dicarboxylic acid anhydride. In particular, a hydroxy group, an amino group, an isocyanate group, or a dicarboxylic acid anhydride is preferable, and a hydroxy group, an amino group, or an isocyanate group is more preferable.

It is preferable that $L^{1a}$-$P^1$ represents a group represented by Formula (F-1).

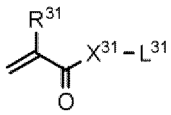

(F−1)

In the compound represented by Formula (D), it is preferable that d1 represents 1 to 4 and $R^{D1}$ represents a group represented by Formula (F-1), and it is more preferable that d1 represents 1 and $R^{D1}$ represents a group represented by Formula (F-1). It is preferable that at least four of $R^{11}$ to $R^{16}$, $X^1$, and $X^2$ in Formula (1) represent a group represented by Formula (F-1), and it is more preferable that at least one of $R^{11}$ to $R^{16}$, $X^1$, and $X^2$ represents a group represented by Formula (F-1). It is preferable that at least four of $R^{21}$, $R^{22}$, $R^{23}$, and $R^{24}$ in Formula (2) represent a group represented by Formula (F-1), and it is more preferable that at least one of $R^{21}$, $R^{22}$, $R^{23}$, and $R^{24}$ represents a group represented by Formula (F-1).

$X^{31}$ represents -O- or >NH.

In the formula, $R^{31}$ represents a hydrogen atom, a hydroxy group, a cyano group, a halogen atom, an alkyl group, an alkenyl group, an alkynyl group, or an aryl group.

The alkyl group that may be used as $R^{31}$ is not particularly limited and is preferably an alkyl group having 1 to 24 carbon atoms, more preferably an alkyl group having 1 to 12 carbon atoms, and still more preferably an alkyl group having 1 to 6 carbon atoms.

The alkenyl group that may be used as $R^{31}$ is not particularly limited and is preferably an alkenyl group having 2 to 24 carbon atoms, more preferably an alkenyl group having 2 to 12 carbon atoms, and still more preferably an alkenyl group having 2 to 6 carbon atoms.

The alkynyl group that may be used as $R^{31}$ is not particularly limited and is preferably an alkynyl group having 2 to 24 carbon atoms, more preferably an alkynyl group having 2 to 12 carbon atoms, and still more preferably an alkynyl group having 2 to 6 carbon atoms.

The aryl group that may be used as $R^{31}$ is not particularly limited and is preferably an aryl group having 6 to 22 carbon atoms and more preferably an aryl group having 6 to 14 carbon atoms.

Examples of the halogen atom which may be used as $R^{31}$ include a fluorine atom, a chlorine atom, a bromine atom, and an iodine atom. Among these, a fluorine atom, a chlorine atom, or a bromine atom is preferable.

In particular, as $R^{31}$, a hydrogen atom or an alkyl group is preferable, and a hydrogen atom or methyl is more preferable.

In a case where $R^{31}$ represents a group which may have a substituent (an alkyl group, an alkenyl group, an alkynyl group, or an aryl group), $R^{31}$ may further have a substituent. Examples of the substituent include a substituent

Z described below. In particular, a halogen atom (for example, a fluorine atom), a hydroxy group, a carboxy group, an ester group, or an amide group is preferable.

$L^{31}$ has the same definition as that of $L^{1a}$. In particular, an alkylene group (preferably 1 to 12 carbon atoms and more preferably 1 to 6 carbon atoms), a carbonyl group, an ether group, an imino group, or a linking group including a combination thereof is more preferable. An alkylene group having 1 to 4 carbon atoms, a carbonyl group, an ether group, an imino group, or a linking group including a combination thereof is still more preferable.

In a case where $L^{31}$ represents a group which may have a substituent, the group may further have a substituent. Examples of the substituent include the above-described substituent T. In particular, a halogen atom (preferably, a fluorine atom or a chlorine atom), an alkyl group, an acyl group, a carbamoyl group, or a hydroxy group is preferable.

It is preferable that $L^{31}$ has a certain length or more. The minimum number of atoms linking the ring $\alpha$ (an atom bonded to $L^{1a}$ among the atoms forming the ring structure represented by Formula (1) or (2)) and $X^{31}$ to each other is the same as the minimum number of atoms linking the ring $\alpha$ and $P^1$ to each other.

Specific examples of the compound having the above-described ring structure of two or more rings will be shown below but do not intend to limit the present invention. In the following exemplary compounds, m4 represents 1 to 100000, and n4 represents 1 to 100000.

B-1
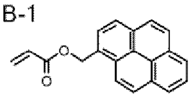
B-2
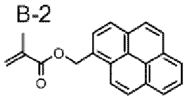
B-3
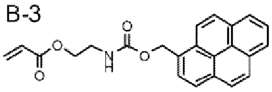
B-4
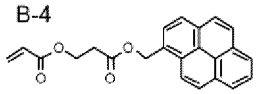
B-5
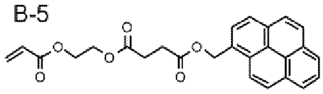
B-6
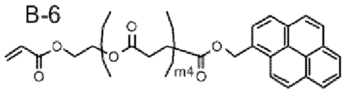
B-7
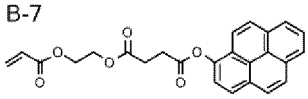
B-8
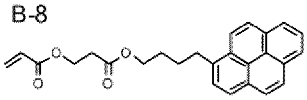
B-9
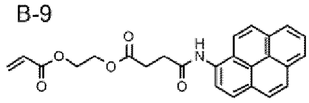
B-10
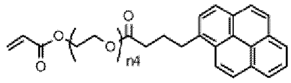
B-11
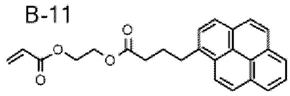
B-12
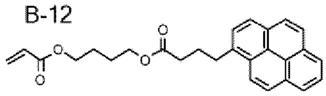
B-13
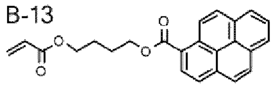
B-14
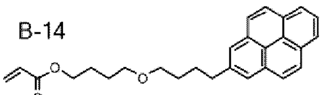
B-15
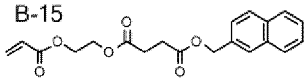
B-16
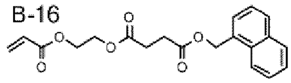
B-17
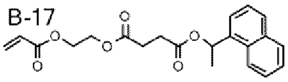
B-18
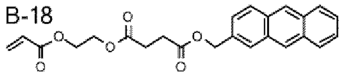
B-19
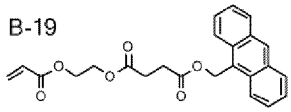
B-20
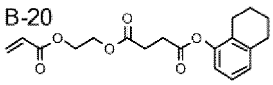
B-21
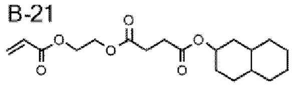
B-22
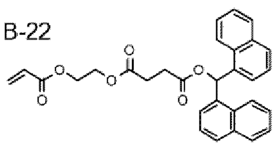
B-23
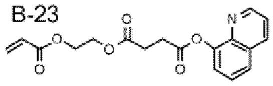
B-24
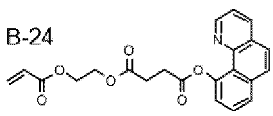

B-25 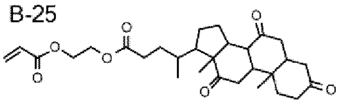 B-26 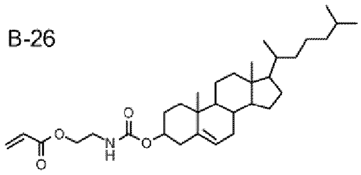 B-27 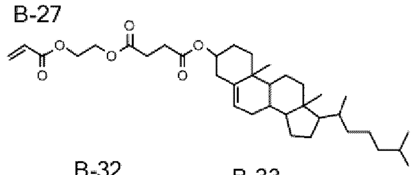

B-28 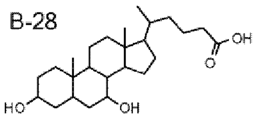 B-29 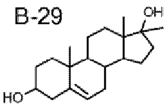 B-30 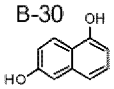 B-31 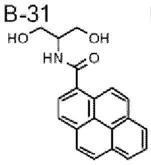 B-32 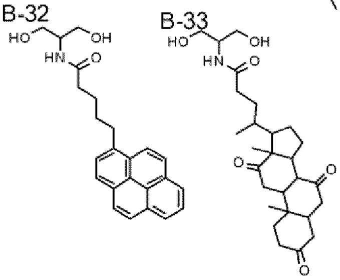 B-33

B-34 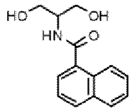

The compound having the ring structure of two or more rings can be synthesized and obtained, for example, by causing a compound having a polymerizable group (for example, a (meth)acryloyl group) to react with a compound having a ring structure of two or more rings and a reaction point (for example, a hydroxy group or a carboxy group).

The mass average molecular weight of the particle-shaped polymer B is preferably 5,000 or higher, more preferably 10,000 or higher, and still more preferably 30,000 or higher. The upper limit is practically 1,000,000 or lower, and an aspect where the polymer is crosslinked is also preferable.

The mass average molecular weight of the particle-shaped polymer B can be measured using the same method as the method of measuring the number-average molecular weight of the particle-shaped polymer A.

In a case where the crosslinking of the polymer progresses due to heating or voltage application, the molecular weight may be higher than the above-described molecular weight. At the start of using the all-solid state secondary battery, the mass average molecular weight of the particle-shaped polymer B is preferably in the above-described range.

The moisture content of the particle-shaped polymer used in the present invention is preferably 100 ppm (by mass) or lower.

The particle-shaped polymer used in the present invention may be dried by crystallization or may be used in the form of a polymer solution as it is. It is preferable that the amount of a metal catalyst (urethanization or polyesterification catalyst=tin, titanium, or bismuth) is small. By reducing the amount of the metal catalyst during polymerization or by removing the catalyst by crystallization, the metal concentration in the copolymer is preferably 100 ppm (by mass) or lower.

In the electrode composition according to the embodiment of the present invention, as the particle-shaped polymer, one kind may be used alone, or a plurality of kinds may be used in combination. In addition, the binder may be used in combination with other particles.

The particle-shaped polymer used in the present invention can be prepared using an ordinary method.

In addition, examples of forming particles include a method of forming the particle-shaped polymer during a polymerization reaction and a method of precipitating the polymer solution to form particles.

<Dispersion Medium>

The electrode composition according to the embodiment of the present invention may include a dispersion medium.

The dispersion medium is not particularly limited as long as it can disperse the respective components included in the electrode composition, and examples thereof include various organic solvents. Examples of the organic solvent include the respective solvents of an alcohol compound, an ether compound, an amide compound, an amine compound, a ketone compound, an aromatic compound, an aliphatic compound, a nitrile compound, and an ester compound. Specific examples of the dispersion medium are as follows.

Examples of the alcohol compound include methyl alcohol, ethyl alcohol, 1-propyl alcohol, 2-propyl alcohol, 2-butanol, ethylene glycol, propylene glycol, glycerin, 1,6-hexanediol, cyclohexanediol, sorbitol, xylitol, 2-methyl-2,4-pentanediol, 1,3-butanediol, and 1,4-butanediol.

Examples of an ether compound include alkylene glycol alkyl ether (for example, ethylene glycol monomethyl ether, ethylene glycol monobutyl ether, diethylene glycol, dipropylene glycol, propylene glycol monomethyl ether, diethylene glycol monomethyl ether, triethylene glycol, polyethylene glycol, propylene glycol monomethyl ether, dipropylene glycol monomethyl ether, tripropylene glycol monomethyl ether, diethylene glycol monobutyl ether, or diethylene glycol monobutyl ether), dialkyl ether (for example, dimethyl ether, diethyl ether, diisopropyl ether, or dibutyl ether), and cyclic ether (for example, tetrahydrofuran or dioxane (including respective isomers of 1,2-, 1,3, and 1,4-)).

Examples of the amide compound include N,N-dimethylformamide, N-methyl-2-pyrrolidone, 2-pyrrolidinone, 1,3-dimethyl-2-imidazolidinone, 2-pyrrolidinone, ε-caprolactam, formamide, N-methylformamide, acetamide, N-methylacetamide, N,N-dimethylacetamide, N-methylpropanamide, and hexamethylphosphoric amide.

Examples of the amine compound include triethylamine, diisopropylethylamine, and tributylamine.

Examples of the ketone compound include acetone, methyl ethyl ketone, methyl isobutyl ketone, cyclohexanone, and diisobutyl ketone.

Examples of the aromatic compound include benzene, toluene, and xylene.

Examples of the aliphatic compound include hexane, heptane, octane, and decane.

Examples of the nitrile compound include acetonitrile, propionitrile, and isobutyronitrile.

Examples of the ester compound include ethyl acetate, butyl acetate, propyl acetate, butyl butyrate, and butyl pentanoate.

Examples of a non-aqueous dispersion medium include the aromatic compound and the aliphatic compound described above.

In the present invention, in particular, a ketone compound, an aromatic compound, an aliphatic compound, or an ester compound is preferable, and a ketone compound, an aliphatic compound, or an ester compound is more preferable.

The boiling point of the dispersion medium under normal pressure (1 atm) is preferably 50°C or higher and more preferably 70°C or higher. The upper limit is more preferably 250°C or lower and still more preferably 220°C or lower.

As the dispersion medium, one kind may be used alone, or two or more kinds may be used in combination.

In the present invention, the content of the dispersion medium in the electrode composition is not particularly limited and can be appropriately set. For example, the content of the dispersion medium in the electrode composition is preferably 20% to 99 mass%, more preferably 25% to 70 mass%, and still more preferably 30% to 60 mass%.

<Conductive Auxiliary Agent>

The electrode composition according to the embodiment of the present invention may optionally include a conductive auxiliary agent used for improving, for example, the electron conductivity of the active material. As the conductive auxiliary agent, a general conductive auxiliary agent can be used. The conductive auxiliary agent may be, for example, graphite such as natural graphite or artificial graphite, carbon black such as acetylene black, Ketjen black, or furnace black, irregular carbon such as needle cokes, a carbon fiber such as a vapor-grown carbon fiber or a carbon nanotube, or a carbonaceous material such as graphene or fullerene which are electron-conductive materials and also may be metal powder or a metal fiber of copper, nickel, or the like, and a conductive polymer such as polyaniline, polypyrrole, polythiophene, polyacetylene, or a polyphenylene derivative may also be used. In addition, among these, one kind may be used, or two or more kinds may be used.

In a case where the electrode composition according to the embodiment of the present invention includes the conductive auxiliary agent, the content of the conductive auxiliary agent in the electrode composition is preferably 0% to 10 mass%.

In the present invention, in a case where the negative electrode active material and the conductive auxiliary agent are used in combination, among the above-described conductive auxiliary agents, a conductive auxiliary agent that does not intercalate and deintercalate Li and does not function as a negative electrode active material during charging and discharging of the battery is classified as the conductive auxiliary agent. Whether or not the conductive auxiliary agent functions as the negative electrode active material during charging and discharging of the battery is not uniquely determined but is determined based on a combination of the conductive auxiliary agent with the negative electrode active material.

<Lithium Salt>

It is also preferable that the electrode composition according to the embodiment of the present invention includes a lithium salt (supporting electrolyte).

The lithium salt is preferably a lithium salt typically used for this kind of product and is not particularly limited. For example, a lithium salt described in paragraphs "0082" to "0085" of JP2015-088486A is preferable.

In a case where the electrode composition according to the embodiment of the present invention includes a lithium salt, the content of the lithium salt is preferably 0.1 parts by mass or more and more preferably 5 parts by mass or more with respect to 100 parts by mass of the inorganic solid electrolyte. The upper limit is preferably 50 parts by mass or less and more preferably 20 parts by mass or less.

<Other Additives>

As components other than the above-described respective components, the electrode composition according to the embodiment of the present invention optionally includes an ionic liquid, a thickener, a crosslinking agent, an antifoaming agent, a leveling agent, a dehydrating agent, and an antioxidant.
The ionic liquid is added to improved the ion conductivity, and a well-known material can be used without any particular limitation.

(Preparation of Electrode composition)

The electrode composition according to the embodiment of the present invention can be prepared, preferably, as a slurry by mixing the inorganic solid electrolyte, the active material, the particle-shaped polymer (preferably a dispersion medium), and optionally other components, for example using various mixers that are typically used.
A mixing method is not particularly limited, and the components may be mixed at once or sequentially. A mixing environment is not particularly limited, and examples thereof include a dry air environment and an inert gas environment.

[Electrode Sheet for All-Solid State Secondary Battery]

An electrode sheet for an all-solid state secondary battery according to the embodiment of the present invention (simply also referred to as "electrode sheet according to the embodiment of the present invention") is not particularly limited as long as it is an electrode sheet including an active material layer, and may be a sheet in which an active material layer is formed on a substrate (current collector) or may be a sheet that is formed of an active material layer without including a substrate. The electrode sheet is typically a sheet including the current collector and the active material layer, and examples of an aspect thereof include an aspect including the current collector, the active material layer, and the solid electrolyte layer in this order and an aspect including the current collector, the active material layer, the solid electrolyte layer, and the active material layer in this order. The electrode sheet according to the embodiment of the present invention may include another layer such as a protective layer or a conductor layer (for example, a carbon coating layer). The thickness of each of the layers forming the electrode sheet according to the embodiment of the present invention is the same as the thickness of each of layers described below regarding the all-solid state secondary battery.
It is preferable that a sheet for an all-solid state secondary battery according to the embodiment of the present invention includes a conductor layer that is provided between the current collector and the electrode active material layer. As the conductor layer, a carbon coating layer is preferable. The electrode sheet for an all-solid state secondary battery according to the embodiment of the present invention includes the carbon coating layer such that the binding properties between the current collector and the electrode active material layer can be further improved.
The carbon coating layer is a layer including carbon particles, and the content of conductive particles with respect to all the solid components forming the carbon coating layer is not particularly limited, is preferably 30 mass% or higher, more preferably 60 mass% or higher, and still more preferably 80 mass% or higher, and may be 100 mass%.
As the carbon particles, one kind may be used alone, or two or more kinds may be used in combination.
Specific examples of the carbon particles include DENKA BLACK, carbon black, graphite, carbon nanotubes, and graphite.
The average particle size of the carbon particles is preferably 0.1 μm to 20 μm, more preferably 0.2 μm to 15 μm, and still more preferably 0.5 μm to 10 μm.
The average particle size of the carbon particles can be measured using the same method as that of the average particle size of the particle-shaped polymer.
In the electrode sheet for an all-solid state secondary battery according to the embodiment of the present invention, at least one of a positive electrode active material layer or a negative electrode active material layer is formed of the electrode composition according to the embodiment of the present invention, and the active material and the particle-shaped polymer in the layer strongly bind to each other. In addition, in the electrode sheet for an all-solid state secondary battery, the active material layer that is formed of the electrode composition according to the embodiment of the present invention is strongly bound to the current collector. In the present invention, an increase in the interface resistance of solid particles can also be effectively suppressed. Accordingly, the electrode sheet for an all-solid state secondary battery according to the embodiment of the present invention can be suitably used as a sheet with which an electrode active material layer of an all-solid state secondary battery can be formed.
For example, in a case where the electrode sheet for an all-solid state secondary battery is manufactured in-line in an elongated shape (is wound during transport) and used as a wound battery, strong binding properties between the active material in the active material layer and the particle-shaped polymer can be maintained. In a case where an all-solid state secondary battery is manufactured using the electrode sheet for an all-solid state secondary battery

manufactured, excellent battery performance can be exhibited, and high productivity and yield (reproducibility) can be realized.

[Method of manufacturing Electrode Sheet for All-Solid State Secondary Battery]

A method of manufacturing an electrode sheet for an all-solid state secondary battery according to the embodiment of the present invention is not particularly limited. The electrode sheet for an all-solid state secondary battery according to the embodiment of the present invention can be manufactured by forming the electrode active material layer using the electrode composition according to the embodiment of the present invention. Examples of the method include a method of forming a film (drying and applying) of the solid electrolyte composition to form a layer (applied and dried layer) consisting of the electrode composition optionally on a current collector (other layers may be interposed therebetween). As a result, the electrode sheet for an all-solid state secondary battery including optionally the current collector and the applied and dried layer can be prepared. Here, the applied and dried layer refers to a layer formed by applying the electrode composition according to the embodiment of the present invention and drying the dispersion medium (that is, a layer formed using the electrode composition according to the embodiment of the present invention and made of a composition obtained by removing the dispersion medium from the electrode composition according to the embodiment of the present invention).

In addition, in a preferable aspect of the present invention, a carbon coating layer-forming composition is applied to the current collector to form a carbon coating layer, and a layer formed of the electrode composition can be formed on the carbon coating layer.

The composition (carbon coating layer-forming composition) for forming the carbon coating layer can be prepared, for example, as follows.

The carbon coating layer-forming composition is prepared by stirring carbon particles in the dispersion medium to form a slurry.

The slurry can be formed by mixing the carbon particles and the dispersion medium using various mixers. The mixer is not particularly limited, and examples thereof include a ball mill, a beads mill, a planetary mixer, a blade mixer, a roll mill, a kneader, and a disc mill. The mixing conditions are not particularly limited. However, in a case where a ball mill is used, the inorganic solid electrolyte and the dispersion medium are preferably mixed together at 150 to 700 rpm (rotation per minute) for 5 minutes to 24 hours. After mixing, filtering may be optionally performed.

In a case where the carbon coating layer-forming composition including components such as the particle-shaped polymer in addition to the carbon particles is prepared, the components may be added and mixed together or separately with the step of dispersing the carbon particles.

Each of steps of application, drying, or the like in the method of manufacturing an electrode sheet for an all-solid state secondary battery according to the embodiment of the present invention will be described below regarding a method of manufacturing an all-solid state secondary battery.

In the method of manufacturing an electrode sheet for an all-solid state secondary battery according to the embodiment of the present invention, it is also possible to pressurize the applied and dried layer obtained as described above. Pressurization conditions or the like will be described below regarding the method of manufacturing an all-solid state secondary battery.

In addition, in the method of manufacturing an electrode sheet for an all-solid state secondary battery according to the embodiment of the present invention, it is also possible to peel the current collector, the protective layer (particularly, the release sheet), or the like.

[All-Solid State Secondary Battery]

The all-solid state secondary battery according to the embodiment of the present invention includes a positive electrode active material layer, a negative electrode active material layer facing the positive electrode active material layer, and a solid electrolyte layer disposed between the positive electrode active material layer and the negative electrode active material layer. The positive electrode active material layer is formed optionally on a positive electrode current collector to configure a positive electrode. The negative electrode active material layer is formed optionally on a negative electrode current collector to configure a negative electrode.

At least one of the negative electrode active material layer or the positive electrode active material layer is formed of the electrode composition according to the embodiment of the present invention, and it is preferable that both the negative electrode active material layer and the positive electrode active material layer are formed of the electrode composition according to the embodiment of the present invention. In the active material layer formed of the electrode composition according to the embodiment of the present invention, it is preferable that the kinds of components to be included and the content ratio thereof are the same as those of the solid content of the electrode composition according to the embodiment of the present invention. A well-known material can be used for the active material layer and the solid

electrolyte layer that are not formed of the electrode active material layer according to the embodiment of the present invention.

In the all-solid state secondary battery according to the embodiment of the present invention, it is preferable that the carbon coating layer is provided at least either between the positive electrode current collector and the positive electrode active material layer or between the negative electrode current collector and the negative electrode active material layer, and it is more preferable that the carbon coating layer is provided both between the positive electrode current collector and the positive electrode active material layer and between the negative electrode current collector and the negative electrode active material layer.

The thicknesses of the negative electrode active material layer, the solid electrolyte layer, and the positive electrode active material layer are not particularly limited respectively. In consideration of the dimension of a general all-solid state secondary battery, each of the thicknesses of the respective layers is preferably 10 to 1,000 $\mu$m and more preferably 15 $\mu$m or more and less than 500 $\mu$m. In the all-solid state secondary battery according to the embodiment of the present invention, the thickness of at least one layer of the positive electrode active material layer or the negative electrode active material layer is still more preferably 50 $\mu$m or more and less than 500 $\mu$m. In addition, the thickness of the carbon coating layer is preferably 0.1 $\mu$m to 20 $\mu$m and more preferably 0.5 $\mu$m to 10 $\mu$m.

Each of the positive electrode active material layer and the negative electrode active material layer may include the current collector opposite to the solid electrolyte layer.

[Case]

Depending on uses, the all-solid state secondary battery according to the embodiment of the present invention may be used as the all-solid state secondary battery having the above-described structure as it is but is preferably sealed in an appropriate case to be used in the form of a dry cell. The case may be a metallic case or a resin (plastic) case. In a case where a metallic case is used, examples thereof include an aluminum alloy case and a stainless steel case. It is preferable that the metallic case is classified into a positive electrode-side case and a negative electrode-side case and that the positive electrode-side case and the negative electrode-side case are electrically connected to the positive electrode current collector and the negative electrode current collector, respectively. The positive electrode-side case and the negative electrode-side case are preferably integrated by being joined together through a gasket for short-circuit prevention.

Hereinafter, an all-solid state secondary battery according to a preferred embodiment of the present invention will be described with reference to Fig. 1, but the present invention is not limited thereto.

Fig. 1 is a cross-sectional view schematically showing the all-solid state secondary battery (lithium ion secondary battery) according to the preferred embodiment of the present invention. In the case of being seen from the negative electrode side, an all-solid state secondary battery 10 of the present embodiment includes a negative electrode current collector 1, a negative electrode active material layer 2, a solid electrolyte layer 3, a positive electrode active material layer 4, and a positive electrode current collector 5 in this order. The respective layers are in contact with one another and adjacent to each other. In a case in which the above-described structure is adopted, during charging, electrons ($e^-$) are supplied to the negative electrode side, and lithium ions ($Li^+$) are accumulated in the negative electrode side. On the other hand, during discharging, the lithium ions ($Li^+$) accumulated in the negative electrode side return to the positive electrode, and electrons are supplied to an operation portion 6. In an example shown in the drawing, an electric bulb is adopted as a model of the operation portion 6 and is lit by discharging.

(Positive Electrode Active Material Layer, Solid Electrolyte Layer, and Negative Electrode Active Material Layer)

In the all-solid state secondary battery 10, both of the positive electrode active material layer and the negative electrode active material layer are formed of the electrode composition according to the embodiment of the present invention. This all-solid state secondary battery 10 exhibits excellent battery performance. The inorganic solid electrolytes and the particle-shaped polymers in the positive electrode active material layer 4 and the negative electrode active material layer 2 may be the same as or different from each other, respectively.

In the present invention, either or both of the positive electrode active material layer and the negative electrode active material layer will also be simply referred to as the active material layer or the electrode active material layer. In addition, either or both of the positive electrode active material and the negative electrode active material will also be simply referred to as "active material" or "electrode active material".

In the present invention, it is presumed that, in a case where the above-described particle-shaped polymer is used in combination with the solid particles such as the inorganic solid electrolyte or the active material, an increase in interface resistance between the solid particles and an increase in interface resistance between the solid particles and the current collector can also be suppressed. Therefore, the all-solid state secondary battery according to the embodiment of the present invention exhibits excellent battery characteristics.

In the all-solid state secondary battery 10, the negative electrode active material layer can be formed as a lithium metal layer. Examples of the lithium metal layer include a layer formed by deposition or forming of lithium metal powder, a lithium foil, and a lithium deposited film. The thickness of the lithium metal layer is not limited to the above-described thickness of the above-described negative electrode active material layer and may be, for example, 1 to 500 $\mu$m.
The positive electrode current collector 5 and the negative electrode current collector 1 are preferably an electron conductor.
In the present invention, either or both of the positive electrode current collector and the negative electrode current collector will also be simply referred to as the current collector.
As a material for forming the positive electrode current collector, not only aluminum, an aluminum alloy, stainless steel, nickel, or titanium but also a material (a material on which a thin film is formed) obtained by treating the surface of aluminum or stainless steel with carbon, nickel, titanium, or silver is preferable. Among these, aluminum or an aluminum alloy is more preferable.
As a material for forming the negative electrode current collector, not only aluminum, copper, a copper alloy, stainless steel, nickel, or titanium but also a material obtained by treating the surface of aluminum, copper, a copper alloy, or stainless steel with carbon, nickel, titanium, or silver is preferable, and aluminum, copper, a copper alloy, or stainless steel is more preferable.
Regarding the shape of the current collector, typically, current collectors having a film sheet-like shape are used, but it is also possible to use net-shaped collectors, punched collectors, compacts of lath bodies, porous bodies, foaming bodies, or fiber groups, and the like.
The thickness of the current collector is not particularly limited, but is preferably 1 to 500 $\mu$m. In addition, it is also preferable that the surface of the current collector is made to be uneven through a surface treatment.
In the present invention, a functional layer, a member, or the like may be appropriately interposed or disposed between the respective layers of the negative electrode current collector, the negative electrode active material layer, the solid electrolyte layer, the positive electrode active material layer, and the positive electrode current collector or on the outside thereof. In addition, each of the layers may have a single-layer structure or a multi-layer structure.

[Manufacturing of All-Solid State Secondary Battery]

The all-solid state secondary battery can be manufactured using an ordinary method. Specifically, the all-solid state secondary battery can be manufactured by forming the electrode active material layer using the electrode composition according to the embodiment of the present invention and the like. As a result, an all-solid state secondary battery having a low electrical resistance can be manufactured. Hereinafter, the details will be described in detail.
The all-solid state secondary battery according to the embodiment of the present invention can be manufactured through a method (method of manufacturing an electrode sheet for an all-solid state secondary battery according to the embodiment of the present invention) including: a step of applying the carbon coating layer-forming composition to a metal foil that optionally functions as a current collector to form a carbon coating layer; and a step of applying the electrode composition according to the embodiment of the present invention to the carbon coating layer to form a coating film (film formation).
For example, the carbon coating layer-forming composition is applied to a metal foil as a positive electrode current collector to form a carbon coating layer, and the electrode composition (positive electrode composition) including the positive electrode active material is applied to the carbon coating layer to form a positive electrode active material layer. As a result, a positive electrode sheet for an all-solid state secondary battery is prepared. Next, the solid electrolyte composition for forming a solid electrolyte layer is applied to the positive electrode active material layer so as to form the solid electrolyte layer. Further, the electrode composition (negative electrode composition) including the negative electrode active material is applied to the solid electrolyte layer to form a negative electrode active material layer. The carbon coating layer-forming composition is applied to the negative electrode active material layer to form a carbon coating layer, and the negative electrode current collector (metal foil) is laminated on the carbon coating layer. As a result, an all-solid state secondary battery having a structure in which the solid electrolyte layer is sandwiched between the positive electrode active material layer and the negative electrode active material layer can be obtained. Optionally by sealing the laminate in a case, a desired all-solid state secondary battery can be obtained.
In addition, an all-solid state secondary battery can also be manufactured by forming the negative electrode active material layer, the solid electrolyte layer, and the positive electrode active material layer on the negative electrode current collector in order reverse to that of the method of forming the respective layers and laminating the positive electrode current collector thereon.
As another method, for example, the following method can be used. That is, the positive electrode sheet for an all-solid state secondary battery is prepared as described above. In addition, the carbon coating layer-forming composition is applied to a metal foil as a negative electrode current collector to form a carbon coating layer, and the negative electrode composition is applied to the carbon coating layer to form a negative electrode active material layer. As a

result, a negative electrode sheet for an all-solid state secondary battery is prepared. Next, the solid electrolyte layer is formed on the active material layer in any one of the sheets as described above. Furthermore, the other one of the positive electrode sheet for an all-solid state secondary battery and the negative electrode sheet for an all-solid state secondary battery is laminated on the solid electrolyte layer such that the solid electrolyte layer and the active material layer come into contact with each other. This way, an all-solid state secondary battery can be manufactured.

As still another method, for example, the following method can be used. That is, the positive electrode sheet for an all-solid state secondary battery and the negative electrode sheet for an all-solid state secondary battery are prepared as described above. In addition, separately from the electrode sheets, the solid electrolyte composition is applied to a substrate to prepare a solid electrolyte sheet for an all-solid state secondary battery consisting of the solid electrolyte layer. Furthermore, the positive electrode sheet for an all-solid state secondary battery and the negative electrode sheet for an all-solid state secondary battery are laminated such that the solid electrolyte layer removed from the substrate is sandwiched therebetween. This way, an all-solid state secondary battery can be manufactured.

In the above-described manufacturing method, the electrode composition according to the embodiment of the present invention may be used as any one of the positive electrode composition or the negative electrode composition, and is preferably used as all of the compositions.

<Formation of Respective layers (Film Formation)>

The method for applying each of the compositions is not particularly limited and can be appropriately selected. Examples thereof include coating (preferably wet-type coating), spray coating, spin coating, dip coating, slit coating, stripe coating, and bar coating.

In this case, each of the compositions may be dried after being applied each time or may be dried after being applied multiple times. The drying temperature is not particularly limited. The lower limit is preferably 30°C or higher, more preferably 60°C or higher, and still more preferably 80°C or higher. The upper limit is preferably 300°C or lower, more preferably 250°C or lower, and still more preferably 200°C or lower. In a case where the solid electrolyte composition is heated in the above-described temperature range, the dispersion medium can be removed to make the composition enter a solid state (applied and dried layer). In addition, the temperature is not excessively increased, and the respective members of the all-solid state secondary battery are not impaired, which is preferable. Therefore, in the all-solid state secondary battery, excellent total performance can be exhibited, and excellent binding properties and excellent ion conductivity can be obtained even under no pressure.

As described above, in a case where the electrode composition according to the embodiment of the present invention is applied and dried, an applied and dried layer in which solid particles are strongly bound and, in a more preferable aspect, the interface resistance between the solid particles is low can be formed.

After the application of the composition or after the preparation of the all-solid state secondary battery, the respective layers or the all-solid state secondary battery is preferably pressurized. In addition, the respective layers are also preferably pressurized in a state where they are laminated. Examples of the pressurization method include a method using a hydraulic cylinder pressing machine. The pressurization pressure is not particularly limited, but is, generally, preferably in a range of 50 to 1,500 MPa.

In addition, the applied composition may be heated while being pressurized. The heating temperature is not particularly limited, but is generally in a range of 30°C to 300°C. The respective layers or the all-solid state secondary battery can also be pressed at a temperature higher than the glass transition temperature of the inorganic solid electrolyte. In addition, the respective layers or the all-solid state secondary battery can also be pressed at a temperature higher than the glass transition temperature of the particle-shaped polymer. In general, the compression temperature does not exceed the melting point of the particle-shaped polymer.

The pressurization may be carried out in a state in which an applied solvent or the dispersion medium has been dried in advance or in a state in which the solvent or the dispersion medium remains.

The respective compositions may be applied at the same time, and the application, the drying, and the pressing may be carried out simultaneously or sequentially. The respective compositions may be applied to separate substrates and then laminated by transfer.

The atmosphere during the pressurization is not particularly limited and may be any one of in the atmosphere, under the dried air (the dew point: -20°C or lower), in an inert gas (for example, in an argon gas, in a helium gas, or in a nitrogen gas), and the like.

The pressing time may be a short time (for example, within several hours) at a high pressure or a long time (one day or longer) under the application of an intermediate pressure. In the case of members other than the electrode sheet for an all-solid state secondary battery, for example, the all-solid state secondary battery, it is also possible to use a restraining device (screw fastening pressure or the like) of the all-solid state secondary battery in order to continuously apply an intermediate pressure.

The pressing pressure may be homogeneous or variable with respect to a pressed portion such as a sheet

surface.

The pressing pressure may be variable depending on the area or the thickness of the pressed portion. In addition, the pressure may also be variable stepwise for the same portion.

A pressing surface may be smooth or roughened.

<Initialization>

The all-solid state secondary battery manufactured as described above is preferably initialized after the manufacturing or before the use. The initialization is not particularly limited, and it is possible to initialize the all-solid state secondary battery by, for example, carrying out initial charging and discharging in a state in which the pressing pressure is increased and then releasing the pressure up to a pressure at which the all-solid state secondary battery is ordinarily used.

[Usages of All-Solid State Secondary Battery]

The all-solid state secondary battery according to the embodiment of the present invention can be applied to a variety of usages. Application aspects are not particularly limited, and, in the case of being mounted in electronic apparatuses, examples thereof include notebook computers, pen-based input personal computers, mobile personal computers, e-book players, mobile phones, cordless phone handsets, pagers, handy terminals, portable faxes, mobile copiers, portable printers, headphone stereos, video movies, liquid crystal televisions, handy cleaners, portable CDs, mini discs, electric shavers, transceivers, electronic notebooks, calculators, memory cards, portable tape recorders, radios, and backup power supplies. In addition, examples of an electronic apparatus for consumer use include an automobile, an electromotive vehicle, a motor, a lighting device, a toy, a game device, a load conditioner, a timepiece, a strobe, a camera, a medical device (for example, a pacemaker, a hearing aid, or a shoulder massager). Further, the all-solid state secondary battery can be used as various cells for use in military or aerospace applications. In addition, the all-solid state secondary battery can also be combined with solar batteries.

Examples

Hereinafter, the present invention will be described in more detail based on Examples but is not limited to these examples. "%" that represents compositions in the following examples is "mass%" unless specified otherwise. In the present invention, "room temperature" refers to 25°C.

<Synthesis of particle-shaped polymer>

A particle-shaped polymer was synthesized as follows.

(Synthesis of particle-shaped polymer (1))

7.2 g of a 40 mass% heptane solution of the following macromonomer M-1 (monomer 1a solution), 12.4 g of methyl acrylate (manufactured by Fujifilm Wako Pure Chemical Corporation) (monomer 2a), 6.7 g of acrylic acid (manufactured by Fujifilm Wako Pure Chemical Corporation) (monomer 3a), 207 g of heptane (manufactured by Fujifilm Wako Pure Chemical Corporation), and 1.4 g of 2,2'-azobis(isobutyronitrile) (initiator 1a) were added to a 2 L three-neck flask equipped with a reflux cooling pipe and a gas introduction coke, and nitrogen gas was introduced at a flow rate of 200 mL/min for 10 minutes, and the solution was heated to 100°C. A liquid (a solution in which 93.1 g of a 40 mass% heptane solution of the macromonomer M-1 (monomer 1b solution), 222.8 g of methyl acrylate (monomer 2b), 120.0 g of acrylic acid (monomer 3b), 300.0 g of heptane, and 2.1 g of 2,2'-azobis(isobutyronitrile) (initiator 1b) were mixed with each other) prepared in a separate container was added dropwise to the solution for 4 hours. After completion of the dropwise addition, 0.5 g of 2,2'-azobis(isobutyronitrile) (initiator 1c) was added. Next, the solution was stirred at 100°C for 2 hours, was cooled to room temperature, and was filtered. As a result, a dispersion liquid of a particle-shaped polymer (1) was obtained. The concentration of solid contents was 39.2%.

(Synthesis Example of Macromonomer M-1)

Glycidyl methacrylate (manufactured by Tokyo Chemical Industry Co., Ltd.) was caused to react with a self condensate (GPC polystyrene standard number-average molecular weight: 2,000) of 12-hydroxystearic acid (manufactured by Fujifilm Wako Pure Chemical Corporation) to obtain a macromonomer. This macromonomer, methyl methacrylate, and glycidyl methacrylate (manufactured by Tokyo Chemical Industry Co., Ltd.) were polymerized at a ratio (molar

ratio) of 1:0.99:0.01 to obtain a polymer. The obtained polymer was caused to react with acrylic acid (manufactured by Fujifilm Wako Pure Chemical Corporation) to obtain a macromonomer M-1. In the macromonomer M-1, the SP value was 9.3, and the number-average molecular weight was 11000.

Estimated structural formulae of the particle-shaped polymer (1) and the macromonomer M-1 are shown below.

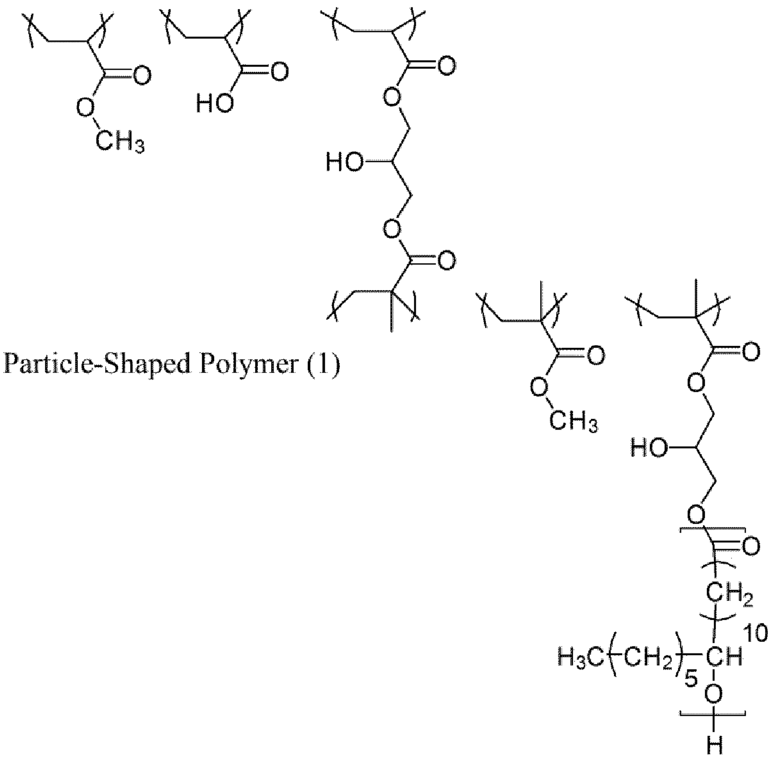

Particle-Shaped Polymer (1)

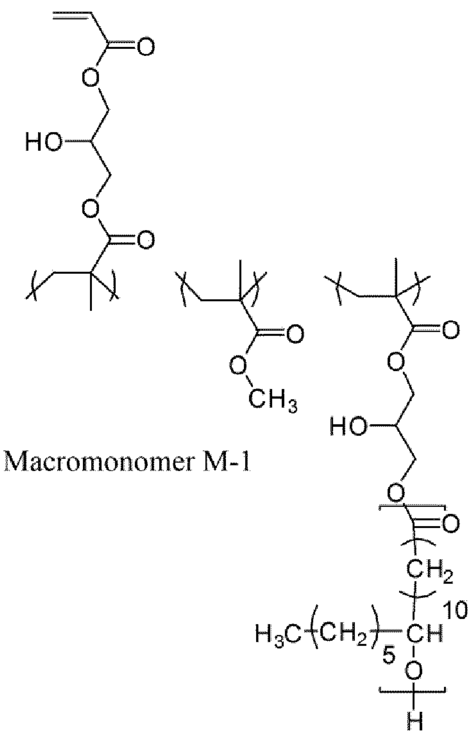

Macromonomer M-1

(Synthesis of particle-shaped polymers (2) to (18) and (20))

particle-shaped polymers (2) to (18) and (20) were synthesized using the same method as that of the particle-shaped polymer (1), except that the amounts of raw materials used were changed as shown in Table A below during the synthesis of the particle-shaped polymer (1).

[Table A]

| Particle-Shaped Polymer No. | Monomer 1aSolution | Monomer 2a | Monomer 3a | Initiator 1a | Monomer 1b Solution | Monomer 2b | Monomer 3b | Initiator 1b | Initiator 1c |
|---|---|---|---|---|---|---|---|---|---|
| 1 | 7.2 | 12.4 | 6.7 | 1.4 | 93.1 | 222.8 | 23.9 | 2.1 | 0.5 |
| 2 | 10.25 | 12.4 | 6.7 | 1.4 | 93.1 | 222.8 | 24 | 2.1 | 1.0 |
| 3 | 7.2 | 12.4 | 6.7 | 1.4 | 93.1 | 111.8 | 23.9 | 2.1 | 0.4 |
| 4 | 7.2 | 12.4 | 6.7 | 1.4 | 93.1 | 222.8 | 23.9 | 2.1 | 1.0 |
| 5 | 7.2 | 12.4 | 6.7 | 1.4 | 93.1 | 222.8 | 23.9 | 2.1 | 0.2 |
| 6 | 7.2 | 12.4 | 6.7 | 1.4 | 93.1 | 222.8 | 23.9 | 2.1 | 0.3 |
| 7 | 8.75 | 12.4 | 6.7 | 1.4 | 93.1 | 222.8 | 24 | 2.1 | 1.0 |
| 8 | 12 | 12.4 | 6.7 | 1.4 | 93.1 | 222.8 | 24.1 | 2.1 | 1.0 |
| 9 | 3.6 | 12.4 | 6.7 | 1.4 | 93.1 | 222.8 | 23.7 | 2.1 | 0.2 |
| 10 | 7.2 | 12.4 | 6.7 | 1.4 | 93.1 | 222.8 | 23.9 | 2.1 | 0.4 |
| 11 | 7.2 | 12.4 | 6.7 | 1.4 | 93.1 | 222.8 | 23.9 | 2.1 | 1.0 |
| 12 | 12 | 12.4 | 6.7 | 1.4 | 93.1 | 222.8 | 24.1 | 2.1 | 1.0 |
| 13 | 10.25 | 12.4 | 6.7 | 1.4 | 93.1 | 222.8 | 24.1 | 2.1 | 1.0 |
| 14 | 10.25 | 12.4 | 1 | 1.4 | 93.1 | 222.8 | 1.8 | 2.1 | 1.0 |
| 15 | 10.25 | 12.4 | 6.7 | 1.4 | 93.1 | 222.8 | 1.8 | 2.1 | 1.0 |
| 16 | 10.25 | 12.4 | 6.7 | 1.4 | 93.1 | 222.8 | 62.5 | 2.1 | 1.0 |
| 17 | 10.25 | 12.4 | 6.7 | 1.4 | 93.1 | 222.8 | 270 | 2.1 | 1.0 |
| 18 | 10.25 | 12.4 | 0 | 1.4 | 93.1 | 222.8 | 0 | 2.1 | 1.0 |
| 20 | 15 | 12.4 | 6.7 | 1.4 | 93.1 | 222.8 | 24.2 | 2.1 | 1.0 |
| <Notes in Table> | | | | | | | | | |

The unit of the amounts of the raw materials used is "g".

(Synthesis of particle-shaped polymer (19))

A dispersion liquid of a particle-shaped polymer (19) was obtained using the same method as that of the particle-shaped polymer (4), except that 30.6 g of acrylonitrile was used instead of acrylic acid during the synthesis of the particle-shaped polymer (4).

<Synthesis of Sulfide-Based Inorganic Solid Electrolyte>

A sulfide-based inorganic solid electrolyte was synthesized as follows.

(Synthesis of Sulfide-based Inorganic Solid Electrolyte (Average Particle Size: 1.5 μm))

As a sulfide-based inorganic solid electrolyte, Li-P-S-based glass was synthesized with reference to a non-patent document of T. Ohtomo, A. Hayashi, M. Tatsumisago, Y. Tsuchida, S. HamGa, K. Kawamoto, Journal of Power Sources, 233, (2013), pp. 231 to 235 and A. Hayashi, S. Hama, H. Morimoto, M. Tatsumisago, T. Minami, Chem. Lett., (2001), pp. 872 and 873.

Specifically, in a glove box under an argon atmosphere (dew point: -70°C), lithium sulfide ($Li_2S$, manufactured by Aldrich-Sigma, Co. LLC. Purity: >99.98%) (2.42 g) and diphosphorus pentasulfide ($P_2S_5$, manufactured by Aldrich-Sigma, Co. LLC. Purity: >99%) (3.90 g) were respectively weighed, and put into an mortar. The molar ratio between $Li_2S$ and $P_2S_5$ ($Li_2S$:$P_2S_5$) was set to 75:25 in terms of molar ratio. The components were mixed using an agate mortar and an agate pestle for 5 minutes.

66 g of zirconia beads having a diameter of 5 mm were put into a 45 mL zirconia container (manufactured by Fritsch Japan Co., Ltd.), the full amount of the mixture was put thereinto, and the container was sealed in an argon atmosphere. The container was set in a planetary ball mill P-7 (trade name, manufactured by Fritsch Japan Co., Ltd.), mechanical milling was carried out at 25°C and a rotation speed of 510 rpm for 20 hours, and a yellow powder (6.20 g) of a sulfide-based inorganic solid electrolyte (Li-P-S-based glass, LPS) was obtained. The average particle size was 1.5 μm.

(Synthesis of Sulfide-based Inorganic Solid Electrolytes (Average Particle Size: 5.0 μm, 0.5 μm, 0.1 μm))

A sulfide-based inorganic solid electrolyte having an average particle size of 5.0 μm, a sulfide-based inorganic solid electrolyte having an average particle size of 0.5 μm, and a sulfide-based inorganic solid electrolyte having an average particle size of 0.1 μm were synthesized using the same method as that of the sulfide-based inorganic solid electrolyte having an average particle size of 1.5 μm, except that the average particle size was adjusted by changing the time of mechanical milling during the synthesis of the sulfide-based inorganic solid electrolyte having an average particle size of 1.5 μm.

<Preparation of Positive Electrode Sheet (Condition 3)>

(Step 1)

160 zirconia beads having a diameter of 5 mm were put into a 45 mL zirconia container (manufactured by Fritsch Japan Co., Ltd.), and 4.0 g of the sulfide-based inorganic solid electrolyte having an average particle size of 1.5 μm, the dispersion liquid of the particle-shaped polymer (1) including 0.24 g of the particle-shaped polymer (1), and 12.3 g of heptane were added. Next, the container was set in a planetary ball mill P-7 (manufactured by Fritsch Japan Co., Ltd.), and the solution was dispersed through a wet process at room temperature and a rotation speed of 150 rpm for 60 minutes. As a result, a solid electrolyte composition was prepared.

(Step 2)

18.8 g of lithium cobalt oxide (average particle size: 3 μm) and 0.47 g of acetylene black were added to the solid electrolyte composition. Next, the container was set in a planetary ball mill P-7 (manufactured by Fritsch Japan Co., Ltd.), and the solution was dispersed through a wet process at room temperature and a rotation speed of 150 rpm for 10 minutes. As a result, a slurry of a positive electrode composition was prepared.

In addition, 5 g of carbon black having an average particle size of 2.1 μm and 3 g of butadiene rubber (binder, product No. 182907, manufactured by Sigma-Aldrich Corporation) were added to 100 g of xylene, and the solution was

dispersed using a planetary mixer at room temperature (25°C) for 1 hour to obtain a carbon coating layer-forming composition.

(Step 3)

The carbon coating layer-forming composition was applied to an aluminum foil having a thickness of 20 μm using an applicator (trade name: SA-201 Baker Type applicator, manufactured by Tester Sangyo Co., Ltd.) and was heated and dried at 100°C for 4 hours to form a carbon coating layer. The slurry of the positive electrode composition was applied to the carbon coating layer using the applicator and was heated and dried at 100°C for 1 hour. As a result, a positive electrode sheet of condition 3 was obtained. The thickness of the positive electrode active material layer was 100 μm.

<Preparation of Positive Electrode Sheets (Conditions 1, 2, 4 to 45, 49, and 50)>

Positive electrode sheets of conditions 1, 2, 4 to 45, 49, and 50 were prepared using the same method as that of the positive electrode sheet of the condition 3, except that the composition was changed as shown in Table 1 below during the preparation of the positive electrode sheet of the condition 3.

<Preparation of Negative Electrode Sheet (Condition 47)>

(Step 1)

160 zirconia beads having a diameter of 5 mm were put into a 45 mL zirconia container (manufactured by Fritsch Japan Co., Ltd.), and 1.93 g of the sulfide-based inorganic solid electrolyte having an average particle size of 0.5 μm, the dispersion liquid of the particle-shaped polymer (11) including 0.07 g of the particle-shaped polymer (11), and 12.3 g of heptane were added. Next, the container was set in a planetary ball mill P-7 (trade name, manufactured by Fritsch Japan Co., Ltd.), and the components were dispersed through a wet process at a temperature of 25°C and a rotation speed of 150 rpm for 60 minutes. As a result, a solid electrolyte composition was prepared.

(Step 2)

5.0 g of graphite (CGB 20 (trade name, median size: 20 μm, manufactured by Nippon Kokuen Group)) as a negative electrode active material and 0.15 g of acetylene black were added to the solid electrolyte composition. The container was set in a planetary ball mill P-7 (trade name, manufactured by Fritsch Japan Co., Ltd.) again, and the solution was continuously mixed at a temperature of 25°C and a rotation speed of 200 rpm for 15 minutes. As a result, a negative electrode composition was prepared (concentration of solid contents: 50 mass%).

(Step 3)

A carbon coating layer was prepared on a stainless steel (SUS) foil (negative electrode current collector) having a thickness of 20 μm using the same method as that of the positive electrode sheet (condition 3). The negative electrode composition was applied to the carbon coating layer using the applicator such that the weight per unit area was 15 $mg/cm^2$, and was heated and dried at 100°C for 1 hour. As a result, a negative electrode sheet including the carbon coating layer and the negative electrode active material layer on the negative electrode current collector was prepared. The thickness of the negative electrode active material layer was 80 μm.

<Preparation of Negative Electrode Sheet (Conditions 46 and 48)>

Negative electrode sheets of conditions 46 and 48 were prepared using the same method as that of the negative electrode sheet of the condition 47, except that the composition was changed as shown in Table 1 below during the preparation of the negative electrode sheet of the condition 47.

<Preparation of All-Solid State Secondary Battery>

Using the prepared positive electrode sheet, an all-solid state secondary battery was prepared as follows.

The positive electrode sheet was punched into a disk shape having a diameter of 10 mmϕ and was put into a cylinder formed of polyethylene terephthalate having a diameter of 10 mmϕ. 30 mg of the synthesized sulfide-based inorganic solid electrolyte Li-P-S-based glass (average particle size: 1.5 μm) was put into the surface of the positive

electrode active material layer in the cylinder, and a SUS bar having a diameter of 10 mmϕ was inserted into the cylinder from both end openings. The positive electrode current collector side of the positive electrode sheet and the sulfide-based inorganic solid electrolyte were pressed by the SUS bar at a pressure of 350 MPa. As a result, a solid electrolyte layer was formed. Next, the SUS bar disposed on the solid electrolyte layer side was temporarily removed, and a disk-shaped indium (In) sheet (thickness: 20 μm) having a diameter of 9 mmϕ and a disk-shaped lithium (Li) sheet (thickness: 20 μm) having a diameter of 9 mmϕ were inserted into the solid electrolyte layer in the cylinder in this order. The removed SUS bar was inserted into the cylinder again and was fixed in a state where a pressure of 50 MPa was applied. This way, an all-solid state secondary battery having a configuration of the aluminum foil (thickness: 20 μm)-the carbon coating layer (thickness: 5 μm)-the positive electrode active material layer (thickness: 100 μm)-the sulfide-based inorganic solid electrolyte layer (thickness: 200 μm)-the negative electrode active material layer (In/Li sheet, thickness: 30 μm) was obtained.

Using the prepared negative electrode sheet, an all-solid state secondary battery was prepared as follows.

The negative electrode sheet was punched into a disk shape having a diameter of 10 mmϕ and was put into a cylinder formed of PET having a diameter of 10 mmϕ. 30 mg of the synthesized sulfide-based inorganic solid electrolyte Li-P-S-based glass (average particle size: 1.5 μm) was put into the surface of the negative electrode active material layer in the cylinder, and a SUS bar having a diameter of 10 mmϕ was inserted into the cylinder from both end openings. The negative electrode current collector side of the negative electrode sheet and the sulfide-based inorganic solid electrolyte were pressed by the SUS bar at a pressure of 350 MPa. As a result, a solid electrolyte layer was formed. Next, the SUS bar disposed on the solid electrolyte layer side was temporarily removed, and a disk-shaped indium (In) sheet (thickness: 20 μm) having a diameter of 9 mmϕ and a disk-shaped lithium (Li) sheet (thickness: 20 μm) having a diameter of 9 mmϕ were inserted into the solid electrolyte layer in the cylinder in this order. The removed SUS bar was inserted into the cylinder again and was fixed in a state where a pressure of 50 MPa was applied. This way, an all-solid state secondary battery having a configuration of the SUS foil (thickness: 20 μm)-the carbon coating layer (thickness: 5 μm)-the negative electrode active material layer (thickness: 50 μm)-the sulfide-based inorganic solid electrolyte layer (thickness: 200 μm)-the positive electrode active material layer (In/Li sheet, thickness: 30 μm) was obtained.

<Calculation Method>

The adsorption rate of the particle-shaped polymer to the active material was calculated as follows. In addition, the content of the component having the group selected from the adsorbing group (X) with respect to all the components of the particle-shaped polymer was calculated as follows.

[Adsorption Rate]

1.6 g of the active material and 0.08 g of the particle-shaped polymer used in the electrode composition were put into a 15 mL vial, 8 g of heptane was added while stirring the solution using a mix rotor, and the solution was stirred at room temperature and 80 rpm for 30 minutes. The stirred solution was filtered through a filter having a pore size of 1 μm (the active material was not allowed to pass), and 2 g of the filtrate was dried. The mass of the dried particle-shaped polymer (the mass of the polymer not adsorbed to the active material) was obtained, and the adsorption rate was calculated from the following expression.

$$\{(0.08\ \text{g - Mass of particle-shaped polymer adsorbed to Active Material} \times 8 / 2)\ 0.08\ \text{g}\} \times 100\ (\%)$$

[Content of Adsorbing Group (X)]

The content of the adsorbing group (X) was obtained by calculating the ratio of the mass of the polymer synthetic raw material (monomer: acrylic acid or acrylonitrile) having the adsorbing group (X) to the total mass of the raw materials used for the synthesis of the particle-shaped polymer.

<Test>

Using the slurry of the positive electrode composition and the slurry of the negative electrode composition prepared as described above, a dispersion stability test was performed as follows. In addition, using the positive electrode sheet and the negative electrode sheet prepared as described above, a binding property test was performed. In addition, the resistance of the prepared all-solid state secondary battery was evaluated.

(Dispersion Stability Test)

Regarding the positive electrode composition and the negative electrode composition prepared as described above, the dispersibility (dispersion stability) of the solid particles (the inorganic solid electrolyte, the active material, the particle-shaped polymer, and the like) was evaluated.

Each of the compositions was put into a precipitation tube having an inner diameter of 5 mm and was left to stand at 25°C for 60 minutes. Next, the dispersion stability was evaluated based on the amount of the clear liquid (supernatant liquid) separated from the composition (slurry). Specifically, in a case where the distance from the bottom surface of the precipitation tube to the surface of the clear liquid layer (the surface of the put composition) was represented by 100, the distance from the bottom surface of the precipitation tube to the bottom surface (interface) of the clear liquid layer was calculated by percentage, and the evaluation was performed based on one of the following evaluation standards to which the distance belonged. The results are shown in Table 1. "E" or higher is an acceptable level.

-Evaluation Standards-

AA: 95% to 100%
A: 90% or higher and lower than 95%
B: 85% or higher and lower than 90%
C: 80% or higher and lower than 85%
D: 75% or higher and lower than 80%
E: 70% or higher and lower than 75%
F: 65% or higher and lower than 70%

(Binding Property Test)

Regarding the prepared electrode sheet (the positive electrode sheet and the negative electrode sheet), the binding properties were evaluated.

The electrode sheet was wound around bars having different diameters to check whether or not the electrode active material layer was peeled off from the conductor layer or the current collector. The binding properties were evaluated based on one of the following evaluation standards to which the minimum diameter of the bar around which the electrode sheet was wound without peeling belonged. After unwinding the electrode sheet wound around the bar having the minimum diameter, whether or not peeling occurs between the electrode active material layer and the conductor layer or the current collector was checked.

In this test, as the minimum diameter of the bar decreases, the binding properties are stronger, and "E" or higher is an acceptable level.

-Evaluation Standards of Binding Properties-

AA: minimum diameter < 2 mm
A: 2 mm ≤ Minimum Diameter < 4 mm
B: 4 mm ≤ Minimum Diameter < 6 mm
C: 6 mm ≤ Minimum Diameter < 10 mm
D: 10 mm ≤ Minimum Diameter < 14 mm
E: 14 mm ≤ Minimum Diameter < 20 mm
F: 20 mm ≤ Minimum Diameter

(Resistance Evaluation Test)

The charging-discharging characteristics of the manufactured all-solid state secondary battery was measured using a charging and discharging evaluation device (TOSCAT-3000, manufactured by Toyo System Corporation). Charging was performed at a current density of 0.5 $mA/cm^2$ until the charging voltage reached 3.6 V. After the charging voltage reached 3.6 V, constant-voltage charging was performed until the current density was lower than 0.05 $mA/cm^2$. Discharging was performed at a current density of 0.5 $mA/cm^2$ until the battery voltage reached 1.9 V. This operation was repeated three times, and the discharge capacity in the third cycle was compared.

In a case where the discharge capacity of the all-solid state secondary battery including the positive electrode sheet of the condition 3 was represented by 1 (dimensionless because Ah was normalized), a relative value was evaluated based on the following evaluation standards. C or higher is an acceptable level of this test.

-Evaluation Standards-

A: 1.5 < relative value of discharge capacity

B: 1.0 < relative value of discharge capacity ≤ 1.5

C: 0.5 < relative value of discharge capacity ≤ 1.0

D: relative value of discharge capacity ≤ 0.5

As the relative value of the discharge capacity increases, the effect of the internal resistance on the voltage is small, and thus the resistance of the all-solid state secondary battery is low.

[Table 1]

| Condition | Note | Active Material | Content 1) | Inorganic Solid Electrolyte | Average Particle Size (μm) | Content 2) | Particle Polymer No. | Average Particle Size (nm) of Particle Polymer | Content 3) | Adsorbing Group (X) | Adsorption Rate (%) |
|---|---|---|---|---|---|---|---|---|---|---|---|
| 1 | Comparative Example | LCO | 80% | LPS | 5.0 | 17% | 1 | 120 | 1% | Carboxy Group | 43 |
| 2 | Comparative Example | LCO | 80% | LPS | 5.0 | 17% | 2 | 30 | 1% | Carboxy Group | 46 |
| 3 | Example | LCO | 80% | LPS | 1.5 | 17% | 1 | 120 | 1% | Carboxy Group | 43 |
| 4 | Example | LCO | 80% | LPS | 1.5 | 17% | 1 | 120 | 1% | Carboxy Group | 43 |
| 5 | Example | LCO | 80% | LPS | 0.5 | 17% | 1 | 120 | 1% | Carboxy Group | 43 |
| 6 | Example | LCO | 80% | LPS | 0.1 | 17% | 1 | 120 | 1% | Carboxy Group | 43 |
| 7 | Comparative Example | LCO | 80% | LPS | 0.5 | 15.5% | 3 | 150 | 2.5% | Carboxy Group | 42 |
| 8 | Comparative Example | LCO | 80% | LPS | 0.5 | 15.5% | 4 | 80 | 2.5% | Carboxy Group | 45 |
| 9 | Example | LCO | 80% | LPS | 0.5 | 16% | 5 | 200 | 2.0% | Carboxy Group | 43 |
| 10 | Example | LCO | 80% | LPS | 0.5 | 16% | 3 | 150 | 2.0% | Carboxy Group | 42 |
| 11 | Example | LCO | 80% | LPS | 0.5 | 16% | 4 | 80 | 2.0% | Carboxy Group | 45 |
| 12 | Example | LCO | 80% | LPS | 0.5 | 16% | 5 | 50 | 2.0% | Carboxy Group | 45 |
| 13 | Example | LCO | 80% | LPS | 0.5 | 16.5% | 6 | 180 | 1.5% | Carboxy Group | 43 |
| 14 | Example | LCO | 80% | LPS | 0.5 | 16.5% | 4 | 80 | 1.5% | Carboxy Group | 45 |

(continued)

| Condition | Note | Active Material | Content 1) | Inorganic Solid Electrolyte | Average Particle Size (μm) | Content 2) | Particle Polymer No. | Average Particle Size (nm) of Particle Polymer | Content 3) | Adsorbing Group (X) | Adsorption Rate (%) |
|---|---|---|---|---|---|---|---|---|---|---|---|
| 15 | Example | LCO | 80% | LPS | 0.5 | 16.5% | 7 | 35 | 1.5% | Carboxy Group | 46 |
| 16 | Comparative Example | LCO | 80% | LPS | 0-5 | 16.5% | 8 | 20 | 1.5% | Carboxy Group | 46 |
| 17 | Comparative Example | LCO | 80% | LPS | 0.5 | 17% | 9 | 460 | 1% | Carboxy Group | 43 |
| 18 | Comparative Example | LCO | 80% | LPS | 0.5 | 17% | 6 | 180 | 1% | Carboxy Group | 43 |
| 19 | Example | LCO | 80% | LPS | 0.5 | 17% | 10 | 150 | 1% | Carboxy Group | 43 |
| 20 | Example | LCO | 80% | LPS | 0.5 | 17% | 11 | 80 | 1% | Carboxy Group | 43 |
| 21 | Example | LCO | 80% | LPS | 0.5 | 17% | 2 | 30 | 1% | Carboxy Group | 46 |
| 22 | Example | LCO | 80% | LPS | 0.5 | 17% | 12 | 20 | 1% | Carboxy Group | 43 |
| 23 | Example | LCO | 80% | LPS | 0.5 | 17.7% | 10 | 150 | 0.33% | Carboxy Group | 43 |
| 24 | Example | LCO | 80% | LPS | 0.5 | 17.5% | 11 | 80 | 0.50% | Carboxy Group | 43 |
| 25 | Example | LCO | 80% | LPS | 0.5 | 17.5% | 13 | 30 | 0.50% | Carboxy Group | 43 |
| 26 | Example | LCO | 80% | LPS | 0.5 | 17.5% | 12 | 20 | 0.50% | Carboxy Group | 43 |
| 27 | Comparative Example | LCO | 80% | LPS | 0.5 | 17.85% | 10 | 150 | 0.15% | Carboxy Group | 43 |
| 28 | Example | LCO | 80% | LPS | 0.5 | 17.85% | 11 | 80 | 0.15% | Carboxy Group | 43 |

(continued)

| Condition | Note | Active Material | Content 1) | Inorganic Solid Electrolyte | Average Particle Size (μm) | Content 2) | Particle Polymer No. | Average Particle Size (nm) of Particle Polymer | Content 3) | Adsorbing Group (X) | Adsorption Rate (%) |
|---|---|---|---|---|---|---|---|---|---|---|---|
| 29 | Example | LCO | 80% | LPS | 0.5 | 17.85% | 13 | 30 | 0.15% | Carboxy Group | 43 |
| 30 | Example | LCO | 80% | LPS | 0.5 | 17.85% | 12 | 20 | 0.15% | Carboxy Group | 43 |
| 31 | Comparative Example | LCO | 80% | LPS | 0.5 | 18% | - | - | 0% | - | - |
| 32 | Example | LCO | 80% | LPS | 0.5 | 17.5% | 14 | 30 | 0.50% | Carboxy Group | 8 |
| 33 | Example | LCO | 80% | LPS | 0.5 | 17.5% | 15 | 30 | 0.50% | Carboxy Group | 19 |
| 34 | Example | LCO | 80% | LPS | 0.5 | 17.5% | 13 | 30 | 0.50% | Carboxy Group | 43 |
| 35 | Example | LCO | 80% | LPS | 0.5 | 17.5% | 16 | 30 | 0.50% | Carboxy Group | 55 |
| 36 | Example | LCO | 80% | LPS | 0.5 | 17.5% | 17 | 30 | 0.50% | Carboxy Group | 67 |
| 37 | Example | LCO | 80% | LPS | 0.5 | 17.5% | 18 | 30 | 0.50% | None | 6 |
| 38 | Example | LCO | 80% | LPS | 0.5 | 17.5% | 19 | 80 | 0.50% | Cyano Group | 22 |
| 39 | Example | LCO | 80% | LPS | 0.5 | 19.5% | 11 | 80 | 0.50% | Carboxy Group | 43 |
| 40 | Comparative Example | LCO | 80% | LPS | 0.5 | 17% | 20 | 12 | 1.00% | Carboxy Group | 43 |
| 41 | Example | LCO | 80% | LPS | 0.5 | 17.5% | 20 | 12 | 0.50% | Carboxy Group | 43 |
| 42 | Example | LCO | 80% | LPS | 0.5 | 17.85% | 20 | 12 | 0.15% | Carboxy Group | 43 |

(continued)

| Condition | Note | Active Material | Content 1) | Inorganic Solid Electrolyte | Average Particle Size (μm) | Content 2) | Particle Polymer No. | Average Particle Size (nm) of Particle Polymer | Content 3) | Adsorbing Group (X) | Adsorption Rate (%) |
|---|---|---|---|---|---|---|---|---|---|---|---|
| 43 | Comparative Example | LCO | 80% | LLZ | 5.0 | 17% | 11 | 80 | 1.00% | Carboxy Group | 43 |
| 44 | Example | LCO | 80% | LLZ | 0.5 | 17% | 11 | 80 | 1.00% | Carboxy Group | 43 |
| 45 | Example | LCO | 80% | LLZ | 0.5 | 17.5% | 11 | 80 | 0.50% | Carboxy Group | 43 |
| 46 | Comparative Example | CGB20 | 70% | LPS | 5.0 | 27% | 11 | 80 | 1.00% | Carboxy Group | 43 |
| 47 | Example | CGB20 | 70% | LPS | 0.5 | 27% | 11 | 80 | 1.00% | Carboxy Group | 43 |
| 48 | Example | CGB20 | 70% | LPS | 0.5 | 27.5% | 11 | 80 | 0.50% | Carboxy Group | 43 |
| 49 | Example | LCO | 80% | LPS | 0.5 | 17.85% | 21 | 126 | 0.15% | Carboxy Group | 43 |
| 50 | Example | LCO | 80% | LPS | 0.5 | 17.55% | 22 | 45 | 0.45% | Carboxy Group | 43 |

[Table 2]

| Condition | Note | Content 4) | Conductive Auxiliary Agent | Content 5) | Dispersion Medium | Content 6) (g) | Current Collector | Binding Properties | Resistance Evaluation | Dispersion Stability | Formula (i) | Formula (ii) |
|---|---|---|---|---|---|---|---|---|---|---|---|---|
| 1 | Comparative Example | 10% | AB | 2% | Heptane | 12.3g | Al | F | C | F | ○ | ○ |
| 2 | Comparative Example | 10% | AB | 2% | Heptane | 12.3g | Al | F | C | F | ○ | ○ |
| 3 | Example | 10% | AB | 2% | Heptane | 12.3g | Al | D | C | D | ○ | ○ |
| 4 | Example | 10% | AB | 2% | Heptane | 12.3g | C/Al | C | C | D | ○ | ○ |
| 5 | Example | 10% | AB | 2% | Heptane | 12.3g | C/Al | B | C | A | ○ | ○ |
| 6 | Example | 10% | AB | 2% | Heptane | 12.3g | C/Al | B | C | B | ○ | ○ |
| 7 | Comparative Example | 10% | AB | 2% | Heptane | 12.3g | C/Al | F | D | F | ○ | ○ |
| 8 | Comparative Example | 10% | AB | 2% | Heptane | 12.3g | C/Al | E | D | E | ○ | ○ |
| 9 | Example | 10% | AB | 2% | Heptane | 12.3g | C/Al | E | C | E | ○ | ○ |
| 10 | Example | 10% | AB | 2% | Heptane | 12.3g | C/Al | E | C | E | ○ | ○ |
| 11 | Example | 10% | AB | 2% | Heptane | 12.3g | C/Al | D | C | E | ○ | ○ |
| 12 | Example | 10% | AB | 2% | Heptane | 12.3g | C/Al | D | C | E | ○ | ○ |
| 13 | Example | 10% | AB | 2% | Heptane | 12.3g | C/Al | B | C | B | ○ | ○ |
| 14 | Example | 10% | AB | 2% | Heptane | 12.3g | C/Al | B | C | C | ○ | ○ |
| 15 | Example | 10% | AB | 2% | Heptane | 12.3g | C/Al | A | C | A | ○ | ○ |
| 16 | Comparative Example | 10% | AB | 2% | Heptane | 12.3g | C/Al | C | D | E | ○ | × |
| 17 | Comparative Example | 10% | AB | 2% | Heptane | 12.3g | C/Al | F | D | F | × | ○ |
| 18 | Comparative Example | 10% | AB | 2% | Heptane | 12.3g | C/Al | F | D | F | × | ○ |
| 19 | Example | 10% | AB | 2% | Heptane | 12.3g | C/Al | C | B | C | ○ | ○ |

(continued)

| Condition | Note | Content 4) | Conductive Auxiliary Agent | Content 5) | Dispersion Medium | Content 6) (g) | Current Collector | Binding Properties | Resistance Evaluation | Dispersion Stability | Formula (i) | Formula (ii) |
|---|---|---|---|---|---|---|---|---|---|---|---|---|
| 20 | Example | 10% | AB | 2% | Heptane | 12.3g | C/Al | A | C | B | ○ | ○ |
| 21 | Example | 10% | AB | 2% | Heptane | 12.3g | C/Al | AA | C | AA | ○ | ○ |
| 22 | Example | 10% | AB | 2% | Heptane | 12.3g | C/Al | AA | C | AA | ○ | ○ |
| 23 | Example | 10% | AB | 2% | Heptane | 12.3g | C/Al | E | C | E | ○ | ○ |
| 24 | Example | 10% | AB | 2% | Heptane | 12.3g | C/Al | C | B | A | ○ | ○ |
| 25 | Example | 10% | AB | 2% | Heptane | 12.3g | C/Al | A | A | A | ○ | ○ |
| 26 | Example | 10% | AB | 2% | Heptane | 12.3g | C/Al | AA | A | AA | ○ | ○ |
| 27 | Comparative Example | 10% | AB | 2% | Heptane | 12.3g | C/Al | F | B | F | × | ○ |
| 28 | Example | 10% | AB | 2% | Heptane | 12.3g | C/Al | B | A | B | ○ | ○ |
| 29 | Example | 10% | AB | 2% | Heptane | 12.3g | C/Al | A | A | A | ○ | ○ |
| 30 | Example | 10% | AB | 2% | Heptane | 12.3g | C/Al | AA | A | AA | ○ | ○ |
| 31 | Comparative Example | - | AB | 2% | Heptane | 12.3g | C/Al | F | B | F | ○ | ○ |
| 32 | Example | 1% | AB | 2% | Heptane | 12.3g | C/Al | E | C | C | ○ | ○ |
| 33 | Example | 3% | AB | 2% | Heptane | 12.3g | C/Al | D | C | B | ○ | ○ |
| 34 | Example | 10% | AB | 2% | Heptane | 12.3g | C/Al | A | A | A | ○ | ○ |
| 35 | Example | 20% | AB | 2% | Heptane | 12.3g | C/Al | A | A | AA | ○ | ○ |
| 36 | Example | 50% | AB | 2% | Heptane | 12.3g | C/Al | A | A | AA | ○ | ○ |
| 37 | Example | 0% | AB | 2% | Heptane | 12.3g | C/Al | E | C | D | ○ | ○ |
| 38 | Example | 10% | AB | 2% | Heptane | 12.3g | C/Al | D | C | B | ○ | ○ |
| 39 | Example | 10% | None | 0 | Heptane | 12.3g | C/Al | C | C | B | ○ | ○ |
| 40 | Comparative Example | 10% | AB | 2% | Heptane | 12.3g | C/Al | A | D | F | ○ | × |
| 41 | Example | 10% | AB | 2% | Heptane | 12.3g | C/Al | AA | A | A | ○ | ○ |

(continued)

| Condition | Note | Content 4) | Conductive Auxiliary Agent | Content 5) | Dispersion Medium | Content 6) (g) | Current Collector | Binding Properties | Resistance Evaluation | Dispersion Stability | Formula (i) | Formula (ii) |
|---|---|---|---|---|---|---|---|---|---|---|---|---|
| 42 | Example | 10% | AB | 2% | Heptane | 12.3g | C/Al | B | A | AA | ○ | ○ |
| 43 | Comparative Example | 10% | AB | 2% | Heptane | 12.3g | C/Al | F | D | F | ○ | ○ |
| 44 | Example | 10% | AB | 2% | Heptane | 12.3g | C/Al | D | B | E | ○ | ○ |
| 45 | Example | 10% | AB | 2% | Heptane | 12.3g | C/Al | B | A | C | ○ | ○ |
| 46 | Comparative Example | 10% | AB | 2% | Heptane | 12.3g | C/SUS | F | D | F | ○ | ○ |
| 47 | Example | 10% | AB | 2% | Heptane | 12.3g | C/SUS | C | C | E | ○ | ○ |
| 48 | Example | 10% | AB | 2% | Heptane | 12.3g | C/SUS | B | A | B | ○ | ○ |
| 49 | Example | 10% | AB | 2% | Heptane | 12.3g | C/Al | B | B | B | ○ | ○ |
| 50 | Example | 10% | AB | 2% | Heptane | 12.3g | C/Al | A | A | A | ○ | ○ |

<Notes in Table>
LCO: lithium cobalt oxide
CGB 20: graphite (trade name, median size: 20 μm, manufactured by Nippon Kokuen Group)
LLZ: $Li_7La_3Zr_2O_{12}$
AB: acetylene black
C/Al and C/SUS: the carbon coating layer was provided on the current collector
○: Expression (i) (Expression (ii)) was satisfied
x: Expression (i) (Expression (ii)) was not satisfied
Content 1): the content of the active material with respect to all the solid components of the electrode composition
Content 2): the content of the inorganic solid electrolyte with respect to all the solid components of the electrode composition
Content 3): the content x of the particle-shaped polymer with respect to all the solid components of the electrode composition
Content 4): the content of the component having the adsorbing group (X) with respect to all the components of the particle-shaped polymer
Content 5): the content of the conductive auxiliary agent with respect to all the solid components of the electrode composition
Content 6): the content of the dispersion medium in the electrode composition
-: the corresponding component was not included

Under the conditions 1 and 2 (Comparative Examples), the average particle size of the inorganic solid electrolyte exceeded 2 μm, and even when the average particle size of the particle-shaped polymer satisfied the range of the present invention, the binding properties and the dispersion stability were unacceptable.

Under the condition 7 (Comparative Example), the content of the particle-shaped polymer (average particle size: 150 nm) with respect to all the solid components of the electrode composition exceeded 2 mass%, and the binding properties, the resistance, and the dispersion stability were unacceptable.

Under the condition 8 (Comparative Example), the content of the particle-shaped polymer (average particle size: 80 nm) with respect to all the solid components of the electrode composition exceeded 2 mass%, and the resistance increased.

Under the condition 16 (Comparative Example) where the particle-shaped polymer not satisfying Expression (ii) was used, the resistance increased.

Under the condition 17 (Comparative Example) where the particle-shaped polymer having an average particle size of more than 200 nm and not satisfying Expression (i) was used, the binding properties, the resistance, and the dispersion stability were unacceptable.

Under the condition 18 (Comparative Example) where the particle-shaped polymer not satisfying Expression (i) was used, the binding properties, the resistance, and the dispersion stability were unacceptable.

Under the condition 27 (Comparative Example) where the particle-shaped polymer not satisfying Expression (i) was used, the binding properties and the dispersion stability were unacceptable.

Under the condition 31 (Comparative Example) where the particle-shaped polymer was not used, the binding properties and the dispersion stability were unacceptable.

Under the condition 40 (Comparative Example) where the particle-shaped polymer not satisfying Expression (ii) was used, the resistance and the dispersion stability were unacceptable.

Under the conditions 43 and 46 (Comparative Examples), the average particle size of the inorganic solid electrolyte exceeded 2 μm, and the binding properties, the resistance, and the dispersion stability were unacceptable.

On the other hand, under the conditions 3 to 6, 9 to 15, 19 to 26, 28 to 30, 32 to 39, 41, 42, 44, 45, and 47 to 50 (Examples), the binding properties, the resistance, and the dispersion stability were acceptable.

The present invention has been described using the embodiments. However, unless specified otherwise, any of the details of the above description is not intended to limit the present invention and can be construed in a broad sense within a range not departing from the concept and scope of the present invention disclosed in the accompanying claims.

The present application claims priority based on JP2018-184890 filed on September 28, 2018, the entire content of which is incorporated herein by reference.

Explanation of References

1: negative electrode current collector
2: negative electrode active material layer
3: solid electrolyte layer
4: positive electrode active material layer
5: positive electrode current collector
6: operation portion
10: all-solid state secondary battery

## Claims

1. An electrode composition comprising:

    an active material;
    an inorganic solid electrolyte having an average particle size of 2 μm or less; and
    a particle-shaped polymer,
    wherein in a case where an average particle size of the particle-shaped polymer is represented by d nm and a content of the particle-shaped polymer with respect to all the solid components of the electrode composition is represented by x mass%, the average particle size d and the content x satisfy Expressions (i) to (iv),

$$d \leq 30x + 140 \qquad \text{Expression (i)},$$

$$d \geq 30x - 10 \qquad \text{Expression (ii)},$$

$$10 \leq d \qquad \text{Expression (iii)},$$

and

$$0 < x \leq 2 \qquad \text{Expression (iv)}.$$

**2.** The electrode composition according to claim 1,
wherein the particle-shaped polymer is a particle acrylic polymer or a particle polyurethane.

**3.** The electrode composition according to claim 1 or 2,

wherein the particle-shaped polymer includes at least one group selected from the following adsorbing group (X),
[Adsorbing Group (X)]
a hydroxy group, a sulfanyl group, a carboxy group, a phosphate group, an amino group, a cyano group, an isocyanate group, an acid anhydride group, a (meth)acryloyloxy group, an epoxy group, an oxetanyl group, an alkoxy group, and a group including a ring structure of two or more rings.

**4.** The electrode composition according to any one of claims 1 to 3,
wherein the particle-shaped polymer includes a component derived from a macromonomer that has a polymerizable double bond and a linear hydrocarbon structure having 6 or more carbon atoms.

**5.** The electrode composition according to any one of claims 1 to 4,
wherein a content of a component having a group selected from the adsorbing group (X) with respect to all the components in the particle-shaped polymer is 10% to 80 mass%.

**6.** The electrode composition according to any one of claims 1 to 5,
wherein an adsorption rate of the particle-shaped polymer to the active material is 20% to 70%.

**7.** An electrode sheet for an all-solid state secondary battery comprising:
an electrode active material layer that is formed of the electrode composition according to any one of claims 1 to 6.

**8.** The electrode sheet for an all-solid state secondary battery according to claim 7, further comprising:

a current collector; and
a carbon coating layer that is provided between the current collector and the electrode active material layer.

**9.** An all-solid state secondary battery comprising:

a positive electrode active material layer;
a negative electrode active material layer; and
an inorganic solid electrolyte layer that is interposed between the positive electrode active material layer and the negative electrode active material layer,
wherein at least one of the positive electrode active material layer or the negative electrode active material layer is formed of the electrode composition according to any one of claims 1 to 6.

**10.** A method of manufacturing an electrode sheet for an all-solid state secondary battery, the method comprising:
applying the electrode composition according to any one of claims 1 to 6.

**11.** A method of manufacturing an all-solid state secondary battery, the method comprising:
obtaining an electrode sheet for an all-solid state secondary battery with the method according to claim 10 and

manufacturing an all-solid state secondary battery with the electrode sheet for an all-solid state secondary battery.

FIG. 1

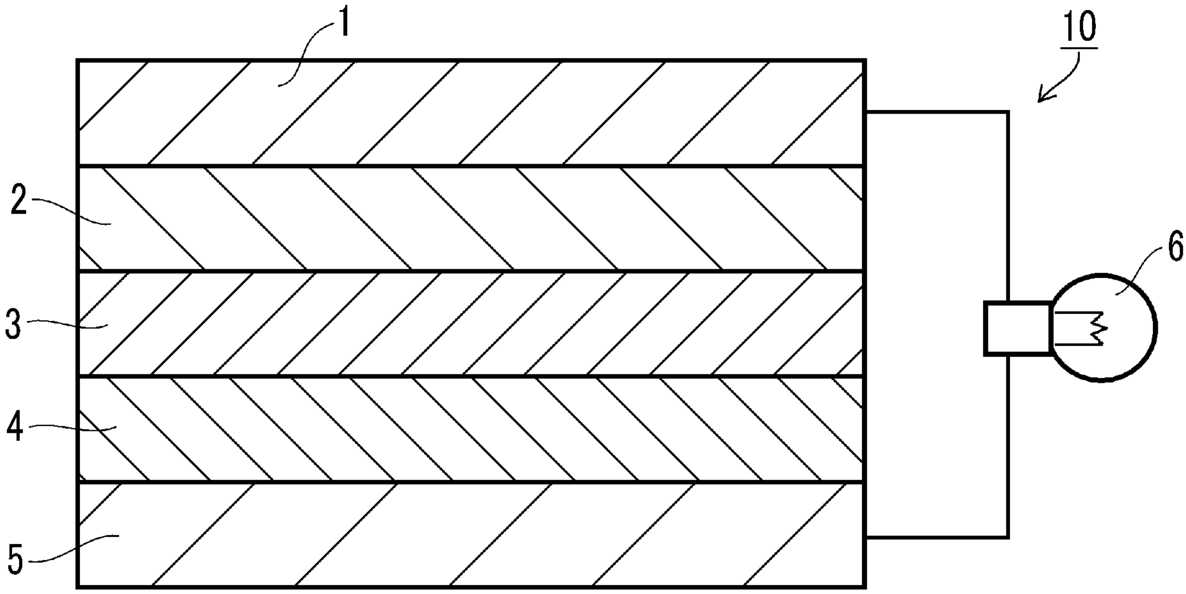


FIG. 2

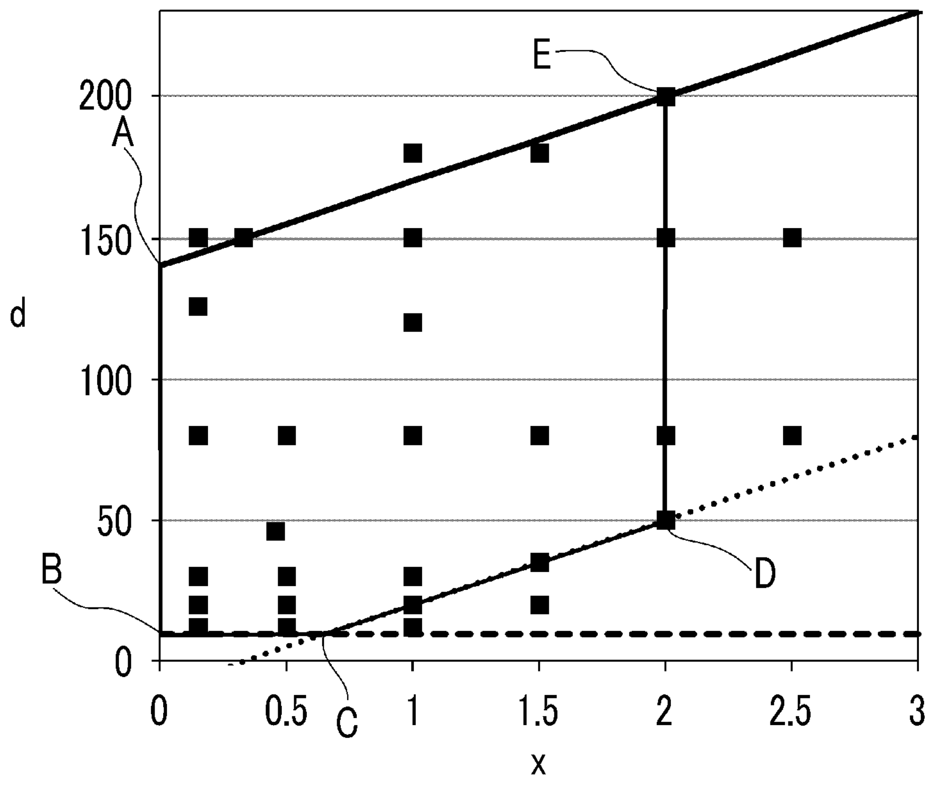

## INTERNATIONAL SEARCH REPORT

International application No. PCT/JP2019/037252

A. CLASSIFICATION OF SUBJECT MATTER
Int.Cl. H01M4/139(2010.01)i, H01M4/13(2010.01)i, H01M4/62(2006.01)i, H01M4/66(2006.01)i, H01M10/052(2010.01)i, H01M10/0562(2010.01)i, H01M10/058(2010.01)i

According to International Patent Classification (IPC) or to both national classification and IPC

B. FIELDS SEARCHED

Minimum documentation searched (classification system followed by classification symbols)
Int.Cl. H01M4/139, H01M4/13, H01M4/62, H01M4/66, H01M10/052, H01M10/0562, H01M10/058

Documentation searched other than minimum documentation to the extent that such documents are included in the fields searched

| | |
|---|---|
| Published examined utility model applications of Japan | 1922-1996 |
| Published unexamined utility model applications of Japan | 1971-2019 |
| Registered utility model specifications of Japan | 1996-2019 |
| Published registered utility model applications of Japan | 1994-2019 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | WO 2018/012380 A1 (NIPPON ZEON CO., LTD.) 18 January 2018 comparative examples 1, 3 & EP 3486981 A1, comparative examples 1, 3 & CN 109314243 A & KR 10-2019-0029520 A | 1-11 |
| A | WO 2017/131093 A1 (FUJIFILM CORP.) 03 August 2017 tables 1-4 & US 2018/0342765 A1, tables 1-4 & EP 3410530 A1 & CN 108496273 A & KR 10-2018-0093092 A | 1-11 |

☒ Further documents are listed in the continuation of Box C.  ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 15 November 2019 (15.11.2019) | 26 November 2019 (26.11.2019) |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**

International application No.
PCT/JP2019/037252

C (Continuation). DOCUMENTS CONSIDERED TO BE RELEVANT

| Category* | Citation of document, with indication, where appropriate, of the relevant passages | Relevant to claim No. |
|---|---|---|
| A | WO 2012/173089 A1 (NIPPON ZEON CO., LTD.) 20 December 2012 table 1 & US 2014/0127579 A1, table 1 | 1-11 |
| A | JP 2016-149238 A (FUJIFILM CORP.) 18 August 2016 table 1-3 (Family: none) | 1-11 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 598828 B
- JP 62022066 A
- JP S62022066 A
- JP 2006856 A
- JP H2006856 A
- JP 3045473 A
- JP H3045473 A
- JP 5090844 A
- JP H5090844 A
- JP 6004516 A
- JP H6004516 A
- JP 2015088486 A
- WO 2017131093 A
- JP 2018184890 A


### Non-patent literature cited in the description


- **H. L. HOY.** *Journal of Painting,* 1970, vol. 42, 76-118
- **J. H. SAUNDERS ; K. C. FRISCH et al.** POLYURETHANES, CHEMISTRY AND TECHNOLOGY PART 1. *Chemistry,* 1962, 48-53
- **T. OHTOMO ; A. HAYASHI ; M. TATSUMISAGO ; Y. TSUCHIDA ; S. HAMGA ; K. KAWAMOTO.** *Journal of Power Sources,* 2013, vol. 233, 231-235
- **A. HAYASHI ; S. HAMA ; H. MORIMOTO ; M. TATSUMISAGO ; T. MINAMI.** *Chem. Lett.,* 2001, 872, , 873